# EUROPEAN PATENT SPECIFICATION

(11) **EP 3 690 667 B1**
(45) Date of publication and mention of the grant of the patent: **01.09.2021**
(21) Application number: 20166856.3
(22) Date of filing: 29.07.2015
(51) Int. Cl.: G06F 16/14, G06F 16/16

(54) **SYSTEM AND METHOD OF MANAGING METADATA**
SYSTEM UND VERFAHREN ZUR VERWALTUNG VON METADATEN
SYSTÈME ET PROCÉDÉ DE GESTION DE MÉTADONNÉES

(30) Priority: 31.07.2014 KR 20140098651; 04.06.2015 KR 20150079198
(43) Date of publication of application: 05.08.2020
(62) Divisional of application: 15178950.0
(73) Proprietor: Samsung Electronics Co., Ltd., Gyeonggi-do 16677 (KR)
(72) Inventor: YOON, Sang-yoon, 16677 Suwon-si, (KR); CHANG, Kyung-ah, 16677 Suwon-si, (KR); KIM, Jung-hun, 16677 Suwon-si, (KR)
(74) Representative: HGF

(56) References cited:
- US-A1- 2007 185 932
- US-A1- 2008 229 205
- US-A1- 2010 138 446
- US-A1- 2012 330 987

## Description

### BACKGROUND

### 1. Field

Certain embodiments of the present disclosure relate to a system and method of separately storing metadata of content in a certain storage space of a device of a user, and managing the metadata.

### 2. Description of the Related Art

According to development of multimedia technology and network technology, users are able to use various types of content by using various devices. In detail, the users are able to receive and use content of other users, and content of service providers, through devices of the users. However, since types of content and services provided to the users are extremely numerous, it is difficult for the users to effectively select and use desired content and desired services.

Also, various types of data related to content are collected as metadata, and technology of using metadata of content in order to provide suitable content to a user is being developed. However, due to large amounts of content and metadata of the content, it is difficult to efficiently manage the content and the metadata.

Accordingly, technology of providing a suitable service to a user by efficiently storing metadata of content in a separate storage space and managing the metadata is required.

US 2010/0138446 discloses a content addressable storage (CAS) system that allows a user to request, either through an application server or directly to one or more CAS servers, files and content related to a query.

The above information is presented as background information only to assist with an understanding of the present disclosure. No determination has been made, and no assertion is made, as to whether any of the above might be applicable as prior art with regard to the present disclosure.

### SUMMARY

It is an aim of certain exemplary embodiments of the present disclosure to address, solve, mitigate or obviate, at least partly, at least one of the problem and/or disadvantages associated with the related art, for example at least one of the problems and/or disadvantages mentioned herein. Certain exemplary embodiments aim to provide at least one advantage over the related art, for example at least one of the advantages mentioned herein. However, certain exemplary embodiments are not required to overcome the problems and/or disadvantages described herein, and certain exemplary embodiment may not overcome any of the problems and/or disadvantages described herein.

The invention is defined by the features of the independent claims. Further embodiments are the subject-matter of the dependent claims.

Certain examples of the disclosure provide a system and method of managing metadata.

According an exemplary aspect, a server for searching for metadata corresponding to content is provided, which includes a communicator configured to receive metadata corresponding to content related to at least one device of a user, from the at least one device; and a controller configured to store the received metadata in a remote storage that is separate from the server, the received metadata being searchable, and upon receiving a search request containing a search term for searching for metadata, to search the received metadata stored in the remote storage for metadata related to the search term.

In certain examples, the remote storage may be a storage operated separately from the server by one business operator of the server or another business operator, and the controller may manage account information of the user, the account information being related to the remote storage.

In certain examples, the remote storage may be provided by a networking server associated with a networking service, and the controller can control to store the received metadata in the remote storage by using a service identification (ID) of the user related to the networking service.

In certain examples, the controller may match keywords related to the received metadata, to the received metadata, and controls to store the keywords.

In certain examples, the keywords may be extracted from the content by interpreting the content.

In certain examples, the keywords may be used to search for the received metadata related to the search term, by being compared with the search term.

In certain exemplary examples, the communication unit may receive the received metadata and may not receive the content corresponding to the received metadata.

In certain examples, the controller may add supplementary data to the received metadata, and may control to store the received metadata to which the supplementary data is added.

In certain examples, the controller may add information to the received metadata, and the information may be about a network situation of the at least one device related to the content corresponding to the received metadata.

In certain examples, the controller may add to the received metadata information about whether content corresponding to the received metadata is stored in the remote storage along with the received metadata.

In certain examples, the controller may transmit a request to a service providing server to add the supplementary data to the metadata and obtain the metadata to which the supplementary data is added.

In certain examples, the controller may provide to the at least one device or another device an application received program interface (API) for using a service utilizing the received metadata stored in the remote storage, and in response to a request received from at least one of the at least one device or the other device through the API to provide the service, may provide the service to the at least one device or the other device that made the request.

In certain examples, the communication unit may receive, from another device different from the at least one device, a request related to the content, and the controller may obtain device information of a device storing the content requested by the other device by using the received metadata stored in the remote storage, and may provide the device information to the other device, wherein the device information is used by the other device to receive the requested content from the device storing the requested content.

In certain examples, the remote storage may be one remote storage of a plurality of remote storages, and the controller may identify the remote storage to which the user is subscribed based on user information of the user received from the at least one device, and may determine the remote storage for storing the received metadata from a plurality of remote storages.

In certain examples, the remote storage may be one remote storage of a plurality of remote storages, and the controller may determine the one remote storage from the plurality of remote storages to control to store the received metadata based on at least one of a type of the content, and a type of the at least one device that provided the received metadata.

In certain examples, the communication unit may receive the content from the at least one device when a user input deleting the content is input to the at least one device, and the remote storage may be one remote storage of a plurality of remote storages and the controller may determine the remote storage to store the content from among the plurality of storages and provides the content to the determined remote storage, wherein the content may be stored in the determined remote storage.

According to another exemplary aspect, a method of searching, by a server, for metadata of content, may include receiving metadata corresponding to content related to at least one device of a user from the at least one device; storing the received metadata in a remote storage that is separate from the server, the received metadata being searchable; receiving from the at least one device a search request containing a search term for searching metadata; and searching the received metadata stored in the at least one remote storage for metadata related to the search term.

In certain examples, the remote storage may be a storage operated separately from the server by one business operator of the server or another business operator, and the method may include managing account information of the user, the account information being related to the remote storage.

In certain examples, the method may include matching keywords related to the received metadata, to the metadata, and storing the keywords wherein the keywords are used to search for the received metadata related to the search term by being compared with the search term.

In certain examples, the method may include adding supplementary data to the received metadata; and storing the received metadata to which the supplementary data is added.

According to another exemplary aspect, there is provided a computer program comprising instructions arranged, when executed, to implement a method, system, device, server, terminal and/or apparatus in accordance with any aspect, claim, embodiment or example described herein. According to another exemplary aspect, there is provided a non-transitory computer-readable recording medium having recorded thereon such a program.

According to another exemplary aspect, a method of retrieving content may include transmitting from a first device a content request to a metadata management server, the content request including at least one of a user related to the content or a type of content; receiving from the metadata management server a list of available content, the list being generated based on at least one of the user related to the content or the type of content; transmitting from the first device an indication of selected content, the selected content being selected from the list of available content; receiving from the metadata management server a location information of the selected content, the location information specifying a content location separate from a location of the metadata management server; retrieving the content from the content location.

According to another exemplary aspect, a method of controlling a device may include transmitting from a first device a device control request to a metadata management server, the device control request including at least one of a user or a type of device; receiving from the metadata management server a list of available devices, the list being generated based on at least one of the user or the type of the device; transmitting from the first device an indication of selected device, the selected device being selected from the list of available devices; receiving from the metadata management server a control information of the selected device, the control information specifying at least one control command for the selected device; and transmitting from the first device the at least one control command to the selected device.

Other aspects, advantages, and salient features of the disclosure will become apparent to those skilled in the art from the following detailed description, which, taken in conjunction with the annexed drawings, disclose exemplary embodiments.

### BRIEF DESCRIPTION OF THE DRAWINGS

The above and other aspects, and features and advantages of certain exemplary embodiments and aspects of the present disclosure will become more apparent and more readily appreciated from the following description of certain exemplary embodiments, taken in conjunction with the accompanying drawings, in which:
FIG. 1 a diagram of a system for managing metadata of a device, according to an exemplary embodiment;
FIG. 2 is a diagram for describing an example of a metadata management server receiving metadata from a plurality of devices of a user and managing the metadata, according to an exemplary embodiment;
FIG. 3 is a flowchart of a method of storing, by a metadata management server, metadata of content of a device of a user to a cloud storage to which the user is subscribed, according to an exemplary embodiment;
FIG. 4 is a flowchart of a method of receiving, by a metadata management server, metadata from a plurality of devices of a user, and integrally managing, by the metadata management server, the received metadata, according to an exemplary embodiment;
FIG. 5 is a flowchart of a method of obtaining, by a device, metadata of content, according to an exemplary embodiment;
FIG. 6 is a flowchart of a method of obtaining, by a device, content and metadata of the content, when the device is a refrigerator, according to an exemplary embodiment;
FIG. 7 is a table showing user-based metadata, according to an exemplary embodiment;
FIG. 8 is a table showing device-based metadata related to a device storing content, according to an exemplary embodiment;
FIG. 9 is a table showing device-based metadata related to another device using content, according to an exemplary embodiment;
FIG. 10 is a table showing content-based metadata according to an exemplary embodiment;
FIG. 11 is a table showing content-based metadata when a device is a refrigerator, according to an exemplary embodiment;
FIG. 12 is a flowchart of a method of determining, by a metadata management server, a cloud storage for storing metadata, according to an exemplary embodiment;
FIG. 13 is a flowchart of a method of determining, by a metadata management server, a cloud storage for storing metadata according to an available space of the cloud storage, according to an exemplary embodiment;
FIG. 14 is a diagram for describing an example of a metadata management server storing metadata in a plurality of cloud storages according to a type of content, according to an exemplary embodiment;
FIG. 15 is a diagram for describing an example of a metadata management server storing metadata in a plurality of cloud storages according to a type of metadata, according to an exemplary embodiment;
FIG. 16 is a diagram for describing an example of a metadata management server storing metadata in a plurality of cloud storages according to a type of a device, according to an exemplary embodiment;
FIG. 17 is a flowchart of a method of providing, by a metadata management server, a user interface (Ul) for searching for metadata, according to an exemplary embodiment;
FIG. 18A through 18C are diagrams for describing examples of a device searching for metadata by selecting types of a user, a device, and content, according to exemplary embodiments;
FIGS. 19A through 19C are diagrams for describing examples of a device searching for content or metadata according to types of content, by using a search keyword, according to exemplary embodiments;
FIG. 20 is a flowchart of a method of adding, by a metadata management server, supplementary data to metadata received from a device, according to an exemplary embodiment;
FIG. 21 is a flowchart of receiving, by a metadata management server, metadata from a plurality of devices, and adding, by the metadata management server, supplementary data to the received metadata, according to an exemplary embodiment;
FIG. 22 is a flowchart of a method of adding, by a metadata management server, a list of acquaintances who like content to metadata, according to an exemplary embodiment;
FIG. 23 is a flowchart of a method of adding, by a metadata management server, a list of other pieces of content liked by another user who likes content to metadata, according to an exemplary embodiment;
FIG. 24 is a flowchart of a method of adding, by a metadata management server, ranking information of content to metadata, according to an exemplary embodiment;
FIG. 25 is a flowchart of a method of adding, by a metadata management server, supplementary data to metadata of content, when a device is a refrigerator and the content in the device is a food ingredient, according to an exemplary embodiment;
FIG. 26 is a flowchart of a method of adding, by a metadata management server, supplementary data to metadata through a service providing server, according to an exemplary embodiment;
FIG. 27 is a flowchart of a method of adding, by a service providing server, supplementary data to metadata, according to an exemplary embodiment;
FIG. 28 is a flowchart of a method of editing, by a metadata management server, metadata, according to an exemplary embodiment;
FIG. 29 is a flowchart of a method of editing, by a metadata management server, metadata through a service providing server, according to an exemplary embodiment;
FIG. 30 is a flowchart of a method of backing content up by a metadata management server, according to an exemplary embodiment;
FIG. 31 is a flowchart of a method of adjusting, by a metadata management server, metadata of content as content in a device is deleted, according to an exemplary embodiment;
FIG. 32 is a diagram for describing an example of a device receiving a service provided by a metadata management server, according to an exemplary embodiment;
FIG. 33 is a diagram for describing an example of another device of a second user receiving a service provided by a metadata management server, according to an exemplary embodiment;
FIG. 34 is a flowchart of a method of providing, by a metadata management server, a service to another device, according to an exemplary embodiment;
FIG. 35 is a diagram for describing an example of a device receiving a service provided by a service providing server, according to an exemplary embodiment;
FIG. 36 is a diagram for describing an example of another device receiving a service provided by a service providing server, according to an exemplary embodiment;
FIG. 37 is a flowchart of a method of providing, by a service providing server, a service to another device, according to an exemplary embodiment;
FIG. 38 is a flowchart of a method of providing, by a service providing server, a service to another device, according to another exemplary embodiment;
FIG. 39 is a diagram for describing an example of another device using content of a device by using metadata in a cloud storage, according to an exemplary embodiment;
FIG. 40 is a flowchart of a method of using, by another device, content stored in a device, according to an exemplary embodiment;
FIGS. 41 through 45 are diagrams for describing examples of another device using content in a device, according to exemplary embodiments;
FIG. 46 is a flowchart of a method of controlling, by another device, a device by using metadata in a cloud storage, according to an exemplary embodiment;
FIG. 47 is a flowchart of a method of controlling, by another device, a device by using metadata in a cloud storage, according to another exemplary embodiment;
FIGS. 48 through 51 are diagrams for describing examples of another device controlling a device based on a user input, according to an exemplary embodiment;
FIG. 52 is a flowchart of a method of searching for, by another device, content through a metadata management server, according to an exemplary embodiment;
FIGS. 53 through 55 are diagrams for describing an example of another device searching for content through a metadata management server and receiving found content from a device, according to an exemplary embodiment;
FIG. 56 is a block diagram of a metadata management server according to an exemplary embodiment; and
FIGS. 57 and 58 are block diagrams of a device according to exemplary embodiments.

### DETAILED DESCRIPTION

Reference will now be made in detail to certain exemplary embodiments, examples of which are illustrated in the accompanying drawings. The following description is provided to assist in a comprehensive understanding of the present invention, as defined by the claims. The description includes various specific details to assist in that understanding but these are to be regarded as merely exemplary. Furthermore, the terms and words used in the following description and claims are not limited to the bibliographical meanings, but, are merely used to enable a clear and consistent understanding of the invention. Accordingly, those of ordinary skill in the art will recognize that various changes and modifications of the embodiments described herein can be made without departing from the scope of the invention.

The terms and words used in the following description and claims are not limited to the bibliographical meanings, but, are merely used to enable a clear and consistent understanding of the invention. Accordingly, it should be apparent to those skilled in the art that the following description of exemplary embodiments of the present invention is provided for illustration purpose only and not for the purpose of limiting the invention, as defined by the appended claims.

Features, elements, components, integers, steps, processes, operations, functions, characteristics, properties and/or groups thereof described herein in conjunction with a particular aspect, claim, embodiment or example are to be understood to be applicable to any other aspect, claim embodiment or example described herein unless incompatible therewith.

Throughout the description and claims of this specification, the words "comprise", "include" and "contain" and variations of the words, for example "comprising" and "comprises", means "including but not limited to", and is not intended to (and does not) exclude other features, elements, components, integers, steps, processes, operations, characteristics, properties and/or groups thereof.

Throughout the description and claims of this specification, the singular forms "a," "an," and "the" include plural referents unless the context dictates otherwise. Thus, for example, reference to "an object" includes reference to one or more of such objects.

Throughout the description and claims of this specification, language in the general form of "X for Y" (where Y is some action, process, activity, operation or step and X is some means for carrying out that action, process, activity, operation or step) encompasses means X adapted, configured or arranged specifically, but not exclusively, to do Y.

Herein, the same or similar reference numerals may be used to refer to the same or similar elements.

Herein, detailed descriptions of well-known functions, operations, processes, techniques, features, elements, structures or constructions may be omitted for clarity and conciseness, and to avoid obscuring the subject matter of the present invention.

In the specification, when a region is "connected" to another region, the regions may not only be "directly connected", but may also be "electrically connected" via another device therebetween. Also, when a region "includes" an element, the region may further include another element instead of excluding the other element, otherwise differently stated.

As used herein, the term "and/or" includes any and all combinations of one or more of the associated listed items. Expressions such as "at least one of" when preceding a list of elements, modify the entire list of elements and do not modify the individual elements of the list.

In the specification, content may denote digital information provided through a wired or wireless communication network. Examples of content may include multimedia content, messaging content, and program content. Examples of multimedia content include video content, such as a TV program, a video on demand (VOD), a personal video (for example, user-created content (UCC)), a music video, and a YouTube video, still image content, such as a picture and a drawing, text content, such as an electronic book (a poem or a novel), a letter, and a business file, music content, such as music, a musical program, and a radio broadcast, and a web page. Also, messaging content may be a message exchanged between users, and examples of the messaging content may include an email, a message transmitted and received through a social network service (SNS), a short message service (SMS), and a multimedia messaging service (MMS). Also, program content may be a program installed in a device, and examples of the program content may include an operating system (OS) program used to operate a device, and an application program.

Also, examples of content may include a user's schedule, a user's address book, and setting status information of a device, but are not limited thereto.

Also, in the specification, metadata may be data added to content according to pre-set rules, and examples of the metadata may include a generated location of the content, an executed location of the content, a generated time of the content, an executed time of the content, a creator of the content, a condition of using the content, a stored location of the content, a history of using the content, and summary information of the content. However, the examples of the metadata are not limited thereto, and various types of information about a program for operating a device may be used as metadata about the device.

Also, in the specification, metadata may be separated from content and exchanged between a device, a metadata management server, and a cloud storage. Metadata of content may be extracted by a device separately from the content, and the extracted metadata may be provided to a metadata management server. In this case, the device may extract the metadata added to the content from the content, but the extracting of the metadata is not limited thereto.

When content is a video, metadata may include, for example, image information, such as a title, a genre, a reproduction time, a file size, a production tool, a frame rate, and a compression codec of the video, and a representative image (for example, a poster if the video is a movie). Also, for example, the metadata of the video may include information about an identification (ID) value of a device executing the video, a location the video is stored, authority to use the video, a period of time the video is executed, and a location where the video is executed.

When content is a photograph, metadata may include, for example, theme and event information extracted from the photograph (such as a family trip or a summer vacation), time information, place information obtained by using global positioning system (GPS) information, person information obtained by using face information extracted from the photograph, and device information such as a manufacturer or a model name of a camera. In this case, tag information of the photograph may be used as the metadata. An image tag has an exchangeable image file format (Exif), and is used in a joint photographic experts group (JPEG) or tag image file format (ITFF) file. An image tag may include a camera manufacturer, a camera model, a firmware version, a photographed time, a stored time, latitude and longitude of a photographed place, a photographer, a shutter speed, a focal length, an iris value, an exposure adjustment value, a photographing program, a photometry mode, a white balance, a black and white reference points, resolution, a size, an orientation, a file compression method, an image name, and copyright holder information. Also, for example, metadata of a photograph may include information about an identification value of a device that captured the photograph, a location where the photograph is stored, authority to use the photograph, a time when the photograph is executed, and a location where the photograph is executed.

When content is music, metadata may include, for example, information about a title, an album (record) name, a singer name, a genre, a lyric writer, and a released date of the music. Audio tag information of the music may be an ID3 tag that is metadata of an MP3 file. An ID3 tag may include information about a title, a singer name, a record name, a released date, a genre, a music number, a lyric writer, a conductor, a media type, lyrics, an image, and a file size. Also, for example, metadata of music may include information about an ID value of a device generated the music, a location where the music is stored, authority to use the music, a period of time the music is executed, and a location where the music is executed.

When content is a television (TV) program, metadata may include, for example, a program title, a time, a host, a cast, and a genre of the TV program, but the metadata is not limited thereto.

When content is news, metadata may include, for example, a representative keyword provided as news text and a representative image (for example, a person), or image information.

When content is a message, metadata may include, for example, information about a device transmitted the message, a device received the message, a keyword extracted from the message, an image extracted from the message, and a time when the message is transmitted/received.

When content is an email, metadata may include, for example, information about a device transmitted the email, a device received the email, a keyword extracted from the email, an image extracted from the email, and a time when the email is transmitted/received.

When content is a user address book, metadata may include, for example, information included in a contact list that is directly input by a user or automatically updated, such as a name, a phone number, a group, an email, an address, and a memo.

When content is a user's schedule, metadata may include, for example, various types of schedule information prepared directly by the user or registered via data link, such as a time, event details, and repetition.

When content is an OS program of a device, metadata may include, for example, a control command for controlling the device, a list of functions executed by the OS program, and an ID value of the device in which the OS program is installed.

When content is an application program installed in a device, metadata may include, for example, a control command for executing the application program, a list of functions executed by the application program, a time when a certain function of the application program is executed, a location of the device when the certain function is executed, and an ID value of the device in which the application program is installed.

Also, in the specification, metadata may be added to another piece of metadata uploaded from a device by a metadata management server or a service providing server. A metadata management server or a service providing server may collect various types of information related to content of a device, and add the collected information to metadata provided from the device. Also, a metadata management server or a service providing server may add various types of information related to a service provided by the metadata management server or the service providing server to metadata provided by a device. Supplementary data added by a metadata management server or a service providing server will be described in detail later.

Also, in the specification, a service includes any type of a service provided to a device by a service providing server or a metadata management server. Examples of a service include a broadcasting service, a content sharing service, a content providing service, a content search service, a device control service, a power management service, a game providing service, a chatting service, a document preparing service, a search service, a phone call service, a photographing service, a transportation recommending service, and a video reproducing service, but are not limited thereto.

One or more exemplary embodiments will now be described in detail with reference to accompanying drawings.

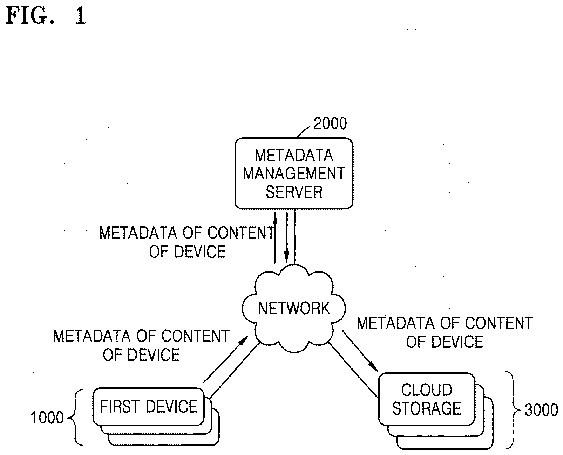

FIG. 1 is a diagram of a system for managing metadata of a device, according to an exemplary embodiment.

Referring to FIG. 1, the system includes at least one device 1000, a metadata management server 200, at least one cloud storage 3000, and a network.

The device 1000 executes content, and provides metadata of the content to the metadata management server 2000. The device 1000 may transmit the metadata to the metadata management server 2000 separately from the content. For example, the device 1000 may extract the metadata included in the content from the content, and provide only the metadata to the metadata management server 2000.

Also, the metadata management server 2000 may receive the metadata of the content from the device 1000, and store the metadata in the cloud storage 3000 to which a user is subscribed. Also, the metadata management server 2000 may manage the metadata stored in the cloud storage 3000. Also, the metadata management server 2000 may separately integrally manage only the metadata of the content executed in the plurality of devices 1000, thereby providing various services to the device 1000 by using the metadata stored in the cloud storage 3000.

The device 1000 may be a smart phone, a tablet personal computer (PC), a PC, a smart TV, a mobile phone, a personal digital assistant (PDA), a laptop, a media player, a micro server, a GPS device, an electronic book terminal, a digital broadcast terminal, a navigation system, a kiosk, an MP3 player, a digital camera, an electronic device, or another mobile or non-mobile computing device, but is not limited thereto. Also, the device 1000 may include any one of various devices capable of receiving a touch input, such as an electronic board or a touch table. The device 1000 may be a watch, glasses, a hair band, or a ring having a communication function and a data processing function, but is not limited thereto, and may be any type of device capable of generating or executing content and providing metadata to the metadata management server 2000 through a network.

Also, the content may be digital information provided through a wired or wireless communication network. Examples of the content may include video content (for example, a TV program image, a VOD, a personal video (UCC), a music video, and a YouTube video), still image content (for example, a picture and a drawing), text content (for example, an electronic book (a poem or a novel), a letter, and a business file), music content (for example, music, a musical program, and a radio broadcast), a web page, and application execution information. Also, examples of the content include a user's schedule, a user address book, and setting status information of a device, but are not limited thereto.

Also, examples of the network include a local area network (LAN), a wide area network (WAN), a value added network (VAN), a mobile radio communication network, a satellite communication network, or any combination thereof, wherein the network is a data communication network that enables subjects forming the network of FIG. 1 to smoothly communicate with each other, such as wired Internet, wireless Internet, or mobile wireless communication network.

Meanwhile, in FIG. 1, the metadata management server 2000 and the cloud storage 3000 are described here as separate apparatuses or servers, but are not limited thereto. The metadata management server 2000 and the cloud storage 3000 may be operated as one server or operated by one business operator. In this case, a service ID of the metadata management server 2000 and a service ID of the cloud storage 3000 may be integrated and managed. For example, the service ID of the metadata management server 2000 and the service ID of the cloud storage 3000 may be matched to each other and managed, or a service of the metadata management server 2000 and a service of the cloud storage 3000 may be used together by using one service ID.

The cloud storage 3000 may be a server providing a cloud storage, but is not limited thereto. The cloud storage 3000 may be a storage space provided to the user by an SNS server providing SNS. In this case, a storage space of the cloud storage 3000 may be used by using a service ID of the SNS server, the metadata management server 200 may match the service ID of the metadata management server 2000 to an SNS service ID, and authority to use, by the user, the SNS service ID may be separately obtained. Accordingly, the metadata management server 2000 may use SNS service IDs of users to enable the users to share content and metadata of the content, or enable several devices of the user to share content and metadata of the content.

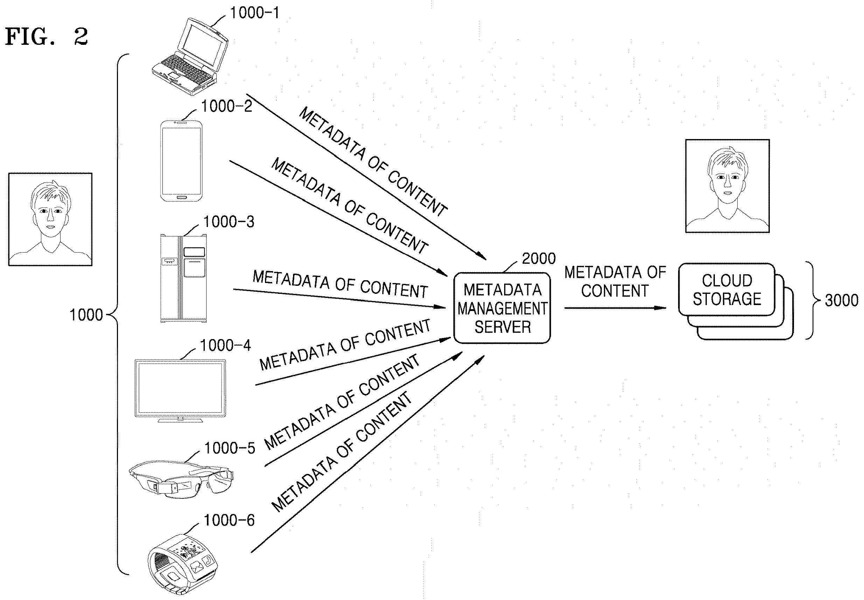

FIG. 2 is a diagram for describing an example of a metadata management server 2000 receiving metadata from the plurality of devices 1000 of the user and managing the metadata, according to an exemplary embodiment.

Referring to FIG. 2, the metadata management server 2000 may receive metadata from each of the plurality of devices 1000, store the metadata in the cloud storage 3000 to which the user is subscribed, and manage the metadata. The plurality of devices 1000 may include, for example, mobile devices such as a laptop 1000-1 and a smart phone 1000-2, an electronic device such as a refrigerator 1000-3, a multimedia device such as a TV 1000-4, and wearable devices such as a head mounted device (HMD) 1000-5 and a wrist watch 1000-6.

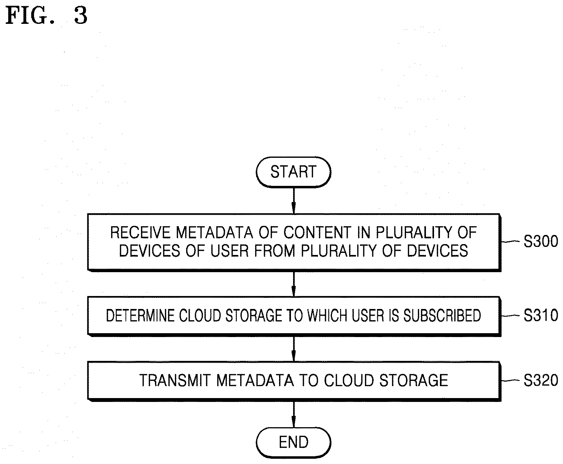

FIG. 3 is a flowchart of a method of storing, by the metadata management server 2000, metadata of content of the device 1000 of the user to the cloud storage 3000 to which the user is subscribed, according to an exemplary embodiment.

In operation S300, the metadata management server 2000 receives metadata of content in the at least one device 1000 of the user. The metadata management server 2000 may receive only the metadata of the content in the device 1000 from the device 1000.

The content in the device 1000 may be content stored in the device 1000. In other exemplary embodiments, the content in the device 1000 may be content executed by the device 1000, and here, the content may be, for example, a video, a still image, or a photograph executed by the device 1000. In other exemplary embodiments, the content in the device 1000 may be content generated by the device 1000. Examples of content generated by the device 1000 include a video filmed by the device 1000, a photograph captured by the device 1000, voice recorded by the device 1000, and sensing information detected by a sensor included in the device 1000.

Also, the metadata management server 2000 may classify the metadata received from the device 1000. For example, the metadata management server 2000 may process and classify the metadata received from the device 1000 to user-based metadata, device-based metadata, and content-based metadata.

In operation S310, the metadata management server 2000 determines the cloud storage 3000 to which the user is subscribed. The metadata management server 2000 may identify the cloud storages 3000 to which the user is subscribed based on user information of the user, and determine the cloud storage 3000 for storing the metadata form among the identified cloud storages 3000. The metadata management server 2000 may determine the cloud storage 3000 for storing the metadata based on, for example, a type of the content, a type of the metadata, a type of the device 1000, and a size of an available space in the cloud storage 3000.

In operation S320, the metadata management server 2000 transmits the metadata to the determined cloud storage 3000. In another exemplary embodiment, the metadata management server 2000 may transmit the metadata to the cloud storage 3000, and match and manage an ID value of the metadata and an ID value of the cloud storage 3000.

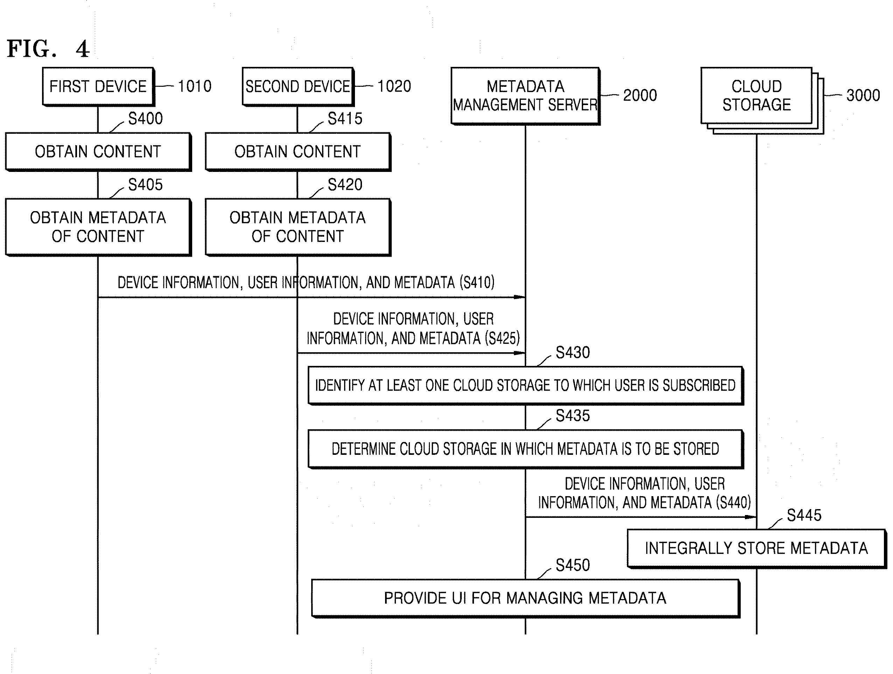

FIG. 4 is a flowchart of a method of receiving, by the metadata management server 2000, metadata from the plurality of devices 1000 of the user, and integrally managing, by the metadata management server 2000, the received metadata, according to an exemplary embodiment.

Here, it is assumed that the plurality of devices 1000 include a first device 1010 and a second device 1020.

In operation S400, the first device 1010 obtains content. The first device 1010 may receive the content from an external apparatus or generate the content. The content may include, for example, a video, a still image, a document, or a photograph. The first device 1010 may, for example, film a video, capture a photograph, or record voice. In other exemplary embodiments, for example, the first device 1010 may generate sensing information to the content by using a sensor in the first device 1010, such as a position sensor, an illuminance sensor, a motion sensor, a proximity sensor, a humidity sensor, or a communication sensor.

Also, the first device 1010 may execute the content and share the content with another device or a server.

In operation S405, the first device 1010 obtains metadata of the content. When the content is generated, received, executed, or transmitted, the first device 1010 may generate metadata related to the generation, reception, execution, or transmission of the content. In other exemplary embodiments, the first device 1010 may receive the metadata that is pre-added to the content from an external source.

Metadata of content may be data added to the content according to pre-set rules, and for example, may include a generated location of the content, a reproduction history of the content, a creator of the content, a condition of using the content, a stored location of the content, a history of using the content, and summary information of the content.

In operation S410, the first device 1010 transmits device information, user information, and the metadata to the metadata management server 2000. The first device 1010 may transmit, for example, a device name, subsystem identification (SSID), a mode name, and/or a phone number of the first device 1010 to the metadata management server 2000. Also, the first device 1010 may transmit, for example, a user name of a user of the first device 1010, a service ID of the metadata management server 2000, a service name of the at least one cloud storage 3000 to which the user is subscribed, a service ID of the at least one cloud storage 3000, and a nickname of the at least one cloud storage 3000 to the metadata management server 2000.

In one exemplary embodiment, when the metadata management server 2000 is a server providing the cloud storage 3000, the first device 1010 may transmit only the service ID of the metadata management server 2000 to the metadata management server 2000, and the metadata management server 2000 may use the cloud storage 3000 by using the received service ID.

In another exemplary embodiment, when the cloud storage 3000 is provided by an SNS server, the first device 1010 may transmit the service ID of the metadata management server 2000 and a service ID of the SNS server to the metadata management server 2000.

Also, the first device 1010 may transmit the metadata obtained in operation S405 to the metadata management server 2000 separately from the content. The first device 1010 may transmit only the metadata obtained in operation S405 to the metadata management server 2000.

In operation S415, the second device 1020 obtains content. The second device 1020 may receive the content from an external apparatus, or generate the content. The content may include, for example, a video, a still image, a document, or a photograph. The second device 1020 may, for example, film a video, capture a photograph, or record voice. In other exemplary embodiments, for example, the second device 1020 may generate sensing information to the content by using a sensor in the second device 1020, such as a position sensor, an illuminance sensor, a motion sensor, a proximity sensor, a humidity sensor, or a communication sensor.

Also, the second device 1020 may execute the content and share the content with another device or a server.

In operation S420, the second device 1020 obtains metadata of the content. When the content is generated, received, executed, or transmitted, the second device 1020 may generate the metadata related to the generation, reception, execution, or transmission of the content. In other exemplary embodiments, the second device 1020 may receive metadata that is pre-added to the content from an external source.

In operation S425, the second device 1020 transmits device information, user information, and the metadata to the metadata management server 2000. The second device 1020 may transmit, for example, a device name, SSID, a mode name, and/or a phone number of the second device 1020 to the metadata management server 2000. Also, the second device 1020 may transmit, for example, the user name of the user of the second device 1020, the service ID of the metadata management server 2000, the service name of the at least one cloud storage 3000 to which the user is subscribed, the service ID of the at least one cloud storage 3000, and the nickname of the at least one cloud storage 3000 to the metadata management server 2000.

Also, the second device 1020 may transmit the metadata obtained in operation S420 to the metadata management server 2000 separately from the content. The second device 1020 may transmit only the metadata obtained in operation S420 to the metadata management server 2000.

In operation S430, the metadata management server 2000 identifies the at least one cloud storage 3000 to which the user is subscribed. The metadata management server 2000 may identify the at least one cloud storage 3000 to which the user is subscribed based on the user information received from the first device 1010 or the second device 1020. Also, the metadata management server 2000 may identify characteristics and an available space of the at least one cloud storage 3000 to which the user is subscribed by using the service ID of the at least one cloud storage 3000.

When the metadata management server 2000 is a server providing the cloud storage 2000, the metadata management server 2000 may identify the at least one cloud storage 3000 by only using the service ID of the metadata management server 2000.

Also, when the cloud storage 3000 is provided by an SNS server, the metadata management server 2000 may identify the cloud storage 3000 by using a service ID of the SNS server.

In operation S435, the metadata management server 2000 determines the cloud storage 3000 in which the metadata is to be stored. The metadata management server 2000 may determine the cloud storage 3000 in which the metadata is to be stored from among the at least one cloud storage 3000 to which the user is subscribed, according to pre-set standards. For example, the metadata management server 2000 may determine the cloud storage 3000 assigned by the user as the cloud storage 3000 in which the metadata is to be stored. In other exemplary embodiments, for example, the metadata management server 2000 may determine the cloud storage 3000 in which the metadata is to be stored according to a type of the content. In other exemplary embodiments, for example, the metadata management server 2000 may determine the cloud storage 3000 in which the metadata is to be stored according to a type of the metadata. In other exemplary embodiments, for example, the metadata management server 2000 may determine the cloud storage 3000 in which the metadata is to be stored according to a type of a device. In other exemplary embodiments, for example, the metadata management server 2000 may determine the cloud storage 3000 in which the metadata is to be stored according to the available space of the at least one cloud storage 3000. However, the determining of the cloud storage 3000 in which the metadata is to be stored is not limited thereto.

Also, the metadata management server 2000 may process and classify the metadata received from the first device 1010 and the metadata received from the second device 1020.

In operation S440, the metadata management server 2000 transmits the metadata to the determined cloud storage 3000. The metadata management server 2000 may transmit the processed and classified metadata to the cloud storage 3000. Also, the metadata management server 2000 may transmit the user information and the device information to the cloud storage 3000, together with the metadata. In another exemplary embodiment, the metadata management server 2000 may transmit the metadata to the determined cloud storage 3000, and may match and manage an ID value of the metadata and an ID value of the determined cloud storage 3000.

In operation S445, the cloud storage 3000 may integrally store the metadata received from the metadata management server 2000. Also, the cloud storage 3000 may link and store information about a network situation of the first device 1010 that provided the metadata through the metadata management server 2000, to the metadata. In this case, the metadata management server 2000 may monitor the network situation of the first device 1010, and provide the information about the network situation of the first device 1010 to the cloud storage 3000. The network situation may include, for example, information about whether a network function of the first device 1010 is activated, whether the first device 1010 is connectable to another device through a network, and a type of a network used by the first device 1010.

Also, the cloud storage 3000 may determine whether backup data of the content, which correspond to the metadata received through the metadata management server 2000, is stored in the cloud storage 3000. In this case, the cloud storage 3000 may link and store information about whether the backup data is stored to the metadata.

In operation S450, the metadata management server 2000 may provide a user interface (Ul) for managing the metadata to the first device 1010 and/or the second device 1020. Accordingly, the user may edit or classify the metadata stored in the cloud storage 3000, and may use a metadata-based content search service and a content recommending service.

Meanwhile, in FIG. 4 as described above, the user of the second device 1020 is the same as the user of the first device 1010, but an exemplary embodiment is not limited thereto. For example, the users of the first and second devices 1010 and 1020 may be different.

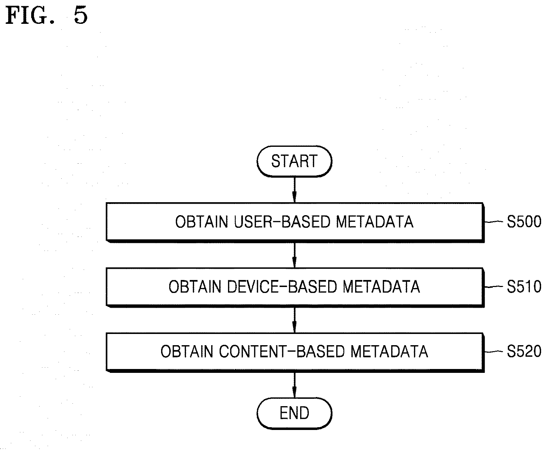

FIG. 5 is a flowchart of a method of obtaining, by the device 1000, metadata of content, according to an exemplary embodiment.

In operation S500, the device 1000 obtains user-based metadata. The user-based metadata is metadata related to a user using content, and for example, may include information about the user using the content, a service to which the user is subscribed, and a number of times the content was used. For example, the user-based metadata may include information about an ID value of a user who owns the content, a content sharing service ID of the user who owns the content, an ID value of another user who uses or shares the content, a content sharing service ID of the other user, a number of times the content was used, and a number of times the content was shared.

In operation S510, the device 1000 obtains device-based metadata. The device-based metadata may be metadata related to a device using the content. For example, the device-based metadata may include metadata related to a device storing the content and metadata related to another device using the content.

The metadata related to the device storing the content may include, for example, information about an ID value of the device storing the content, a stored location of the content in the device storing the content, an ID value of an application executing the content, a control command related to the executing of the content, and a number of times the content was used.

Also, the metadata related to the other device using the content may include, for example, information about an ID value of the other device using the content, a type of the other device using the content, and a number of times the content was used.

In operation S520, the device 1000 obtains content-based metadata. The content-based metadata may be metadata related to a use status of the content, and may include, for example, information about a content name, a type of the content, a stored location of the content, a generated date of the content, a number of times the content was used, weather when the content was generated, and a generated location of the content.

In FIG. 5 as described above, a user device 1000 obtains all of user-based metadata, device-based metadata, and content-based metadata. However, other exemplary embodiments are not limited thereto. For example, in one exemplary embodiment, a user device may obtain only one of user-based metadata, device-based metadata, or content-based metadata. In other exemplary embodiments, a user device 1000 may obtain any desired combination of user-based metadata, device-based metadata, and content-based metadata, for example only user-based metadata and content-based metadata.

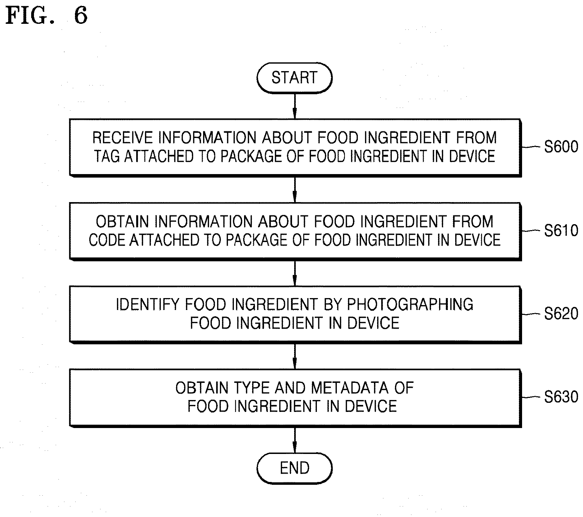

FIG. 6 is a flowchart of a method of obtaining, by the device 1000, content and metadata of the content, when the device 1000 is a refrigerator, according to an exemplary embodiment.

In operation S600, the device 1000 receives information about a food ingredient from a tag attached to a package of the food ingredient in the device 1000. The device 1000 storing the food ingredient may be, for example, a refrigerator. A tag may be attached to the food ingredient stored in the device 1000, and the device 1000 may receive food information of the food ingredient stored in the device 1000 from the tag via, for example, radio frequency identification (RFID) communication or near field communication (NFC). The food information, for example, may include an ID value of the food ingredient (for example, a name and a product name), a type of the food ingredient, a weight of the food ingredient, and an expiration date, but is not limited thereto. Also, the device 1000 may check a date the food ingredient was stored and a status of the food ingredient. Also, the user may directly input the ID value of the food ingredient stored in the device 1000 to the device 1000.

In operation S610, the device 1000 obtains the food information from a code attached to the package of the food ingredient in the device 1000. The code attached to the package may be, for example, a barcode or a quick response (QR) code. The device 1000 may capture an image of the code and analyze the captured image, thereby obtaining information about the food ingredient.

In operation S620, the device 1000 may photograph the food ingredient in the device 1000 to identify the food ingredient. The device 1000 may photograph the food ingredient by using a camera included in the device 1000, and analyze an image of the photographed food ingredient to obtain information about the food ingredient.

In operation S630, the device 1000 may obtain the ID value of the food ingredient in the device 1000 and metadata of the food ingredient. In this case, the food ingredient stored in the device 1000 may be content. Also, information about the ID value, the type, the expiration date, a manufacturer, a stored date, and the status of the food ingredient may be metadata of the content.

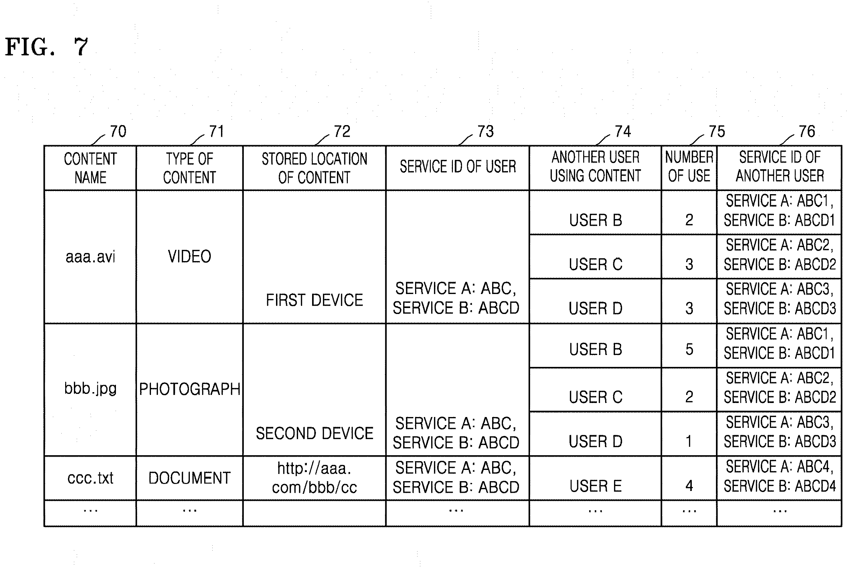

FIG. 7 is a table showing user-based metadata, according to an exemplary embodiment.

Referring to FIG. 7, the table showing the user-based metadata may include a field 70 of a content name, a field 71 of a type of content, a field 72 of a stored location of content, a field 73 of a service ID of a user, a field 74 of another user using content, a field 75 of a number of use, and a field 76 of a service ID of another user. In addition, the user-based metadata may include any other type of field as desired.

A name of content stored in the device 1000 may be recorded in the field 70. File names of content, such as 'aaa.avi', 'bbb.jpg', and 'ccc.txt' may be recorded in the field 70.

A type of content stored in the device 1000 may be recorded in the field 71. For example, 'video', 'photograph', and 'document' may be recorded in the field 71.

A stored location of content may be recorded in the field 72. A name of the device 1000 storing content or an address value for downloading content may be recorded in the field 72. For example, 'first device', 'second device', and 'http://aaa.com/bbb/cc' may be recorded in the field 72.

A name and service ID of a service to which the user of the device 1000 storing content is subscribed may be recorded in the field 73. The service to which the user is subscribed may include, for example, a content storing service, a content sharing service, and a content providing service, but is not limited thereto. Also, for example, service names, such as a 'service A' and a 'service B', and service IDs, such as 'ABC' and 'ABCD', may be recorded in the field 73.

An ID value of another user using content may be recorded in the field 74. Content stored in the device 1000 may be provided to another device of another user, and accordingly, the ID value of the other user using the content may be recorded in the field 74. For example, ID values of other users, 'user B', 'user C', and 'user D', may be recorded in the field 74.

A number of times content was used by another user may be recorded in the field 75. As content is provided to another user, the device 1000 may count a number of times the content was provided to the other user, and the counted number may be recorded in the field 75.

A name and a service ID of a service to which another user is subscribed may be recorded in the field 76. The service to which the other user is subscribed may include, for example, a content storing service, a content sharing service, and a content providing service, but is not limited thereto. Also, names, such as a 'service A' and a 'service B', and service IDs, such as 'ABC1' and 'ABCD1', may be recorded in the field 76.

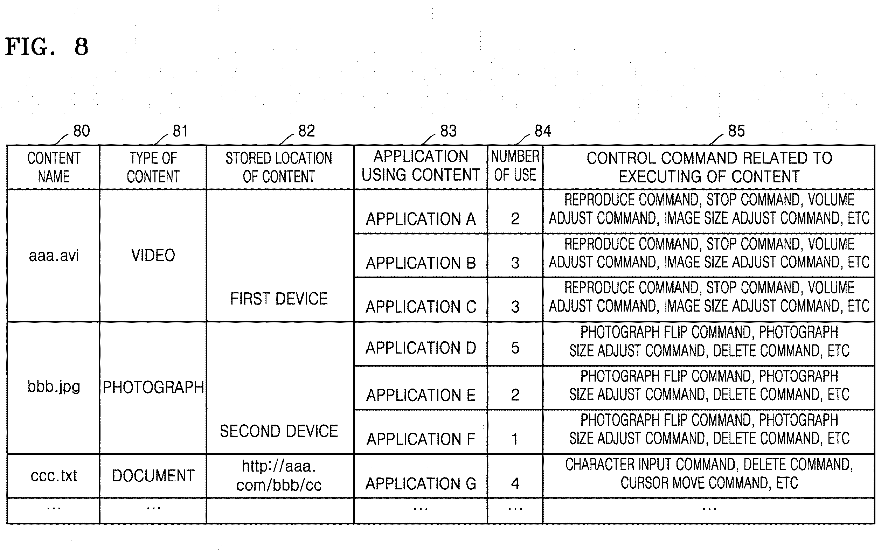

FIG. 8 is a table showing device-based metadata related to the device 1000 storing content, according to an exemplary embodiment.

Referring to FIG. 8, the table showing device-based metadata related to the device 1000 storing content may include a field 80 of a content name, a field 81 of a type of content, a field 82 of a stored location of content, a field 83 of an application using content, a field 84 of a number of use, and a field 85 of a control command related to executing of content. In addition, the device-based metadata may include any other type of field as desired.

A name of content stored in the device 1000 may be recorded in the field 80. File names of content, such as 'aaa.avi', 'bbb.jpg', and 'ccc.txt' may be recorded in the field 80.

A type of content stored in the device 1000 may be recorded in the field 81. For example, 'video', 'photograph', and 'document' may be recorded in the field 81.

A stored location of content may be recorded in the field 82. A name of the device 1000 storing content or an address value for downloading content may be recorded in the field 82. For example, 'first device', 'second device', and 'http://aaa.com/bbb/cc' may be recorded in the field 82.

A name of an application used by the device 1000 to execute content from among applications installed in the device 1000 may be recorded in the field 83. For example, names of applications, such as 'application A', 'application B', and 'application C', may be recorded in the field 83.

A number of times content was used through an application may be recorded in the field 84. For example, when content 'aaa.avi' stored in the first device 1010 was executed two times by an application A, three times by an application B, and three times by an application C, values '2', '3', and '3' may be recorded in respective cells in the field 84 corresponding to application A, application B, an application C.

A control command used by an application executing content to control executing of the content may be recorded in the field 85. For example, 'reproduce command', 'stop command', 'volume adjust command', and 'image size adjust command' may be recorded in the field 85.

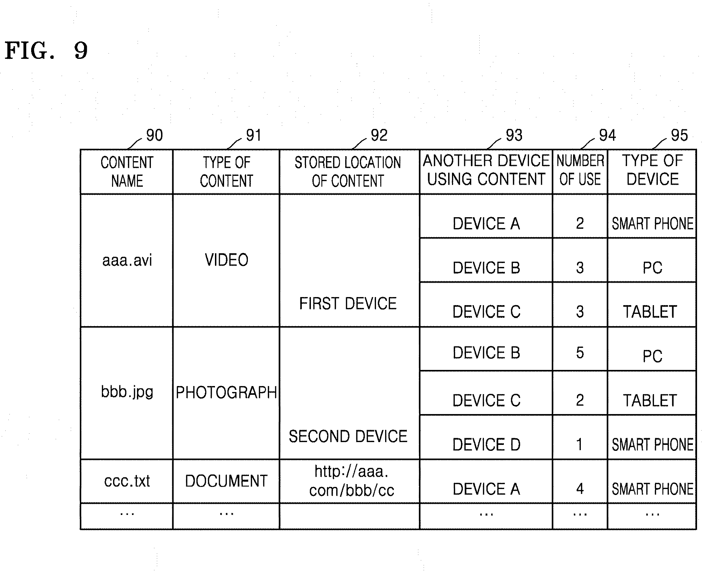

FIG. 9 is a table showing device-based metadata related to another device using content, according to an exemplary embodiment.

Referring to FIG. 9, the table showing device-based metadata related to another device using content may include a field 90 of a content name, a field 91 of a type of content, a field 92 of a stored location of content, a field 93 of another device using content, a field 94 of a number of use, and a field 95 of a type of another device. In addition, the device-based metadata may include any other type of field as desired.

A name of content stored in the device 1000 may be recorded in the field 90. File names of content, such as 'aaa.avi', 'bbb.jpg', and 'ccc.txt' may be recorded in the field 90.

A type of content stored in the device 1000 may be recorded in the field 91. For example, 'video', 'photograph', and 'document' may be recorded in the field 91.

A stored location of content may be recorded in the field 92. A name of the device 1000 storing content or an address value for downloading content may be recorded in the field 92. For example, 'first device', 'second device', and 'http://aaa.com/bbb/cc' may be recorded in the field 92.

An ID value of another device using content stored in the device 1000 may be recorded in the field 93. The content stored in the device 1000 may be provided to another device of a second user, and accordingly, the ID value of the other device using the content may be recorded in the field 93. For example, 'device A', 'device B', 'device C', and 'device D' may be recorded in the field 93.

A number of times content was used by another device may be recorded in the field 94. As content is provided to another device, the device 1000 may count a number of times the content was provided to the other device, and the counted number may be recorded in the field 94.

A type of another device using content may be recorded in the field 95. For example, 'smart phone', 'PC', and 'tablet' may be recorded in the field 95.

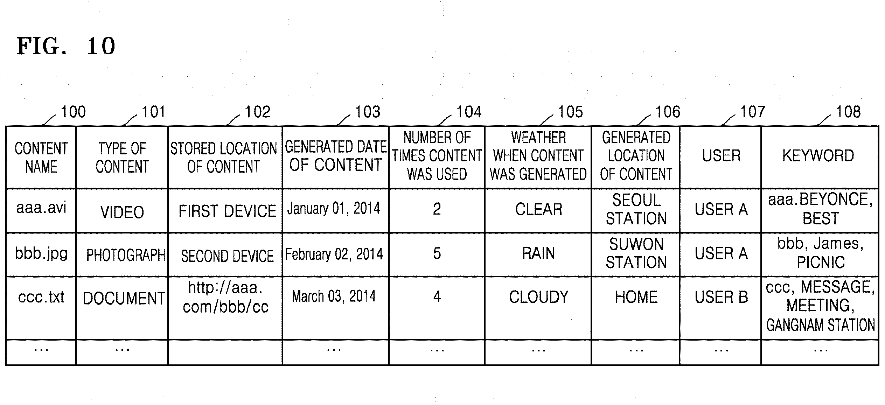

FIG. 10 is a table showing content-based metadata according to an exemplary embodiment.

Referring to FIG. 10, the table showing content-based metadata may include a field 100 of a content name, a field 101 of a type of content, a field 102 of a stored location of content, a field 103 of a generated date of content, a field 104 of a number of times content was used, a field 105 of weather when content was generated, a field 106 of a generated location of content, a field 107 of a user, and a field 108 of a keyword. In addition, the content-based metadata may include any other type of field as desired.

A name of content stored in the device 1000 may be recorded in the field 100. File names of content, such as 'aaa.avi', 'bbb.jpg', and 'ccc.txt' may be recorded in the field 100.

A type of content stored in the device 1000 may be recorded in the field 101. For example, 'video', 'photograph', and 'document' may be recorded in the field 101.

A stored location of content may be recorded in the field 102. A name of the device 1000 storing content or an address value for downloading content may be recorded in the field 102. For example, 'first device', 'second device', and 'http://aaa.com/bbb/cc' may be recorded in the field 92.

A generated date of content stored in the device 1000 may be recorded in the field 103. For example, dates, such as 'January 01, 2014', 'February 02, 2014', and 'March 03, 2014', may be recorded in the field 103. Any date type or date format may be used, as desired.

A number of times content stored in the device 1000 was used may be recorded in the field 104. The device 1000 may count the number of times as the content is used by the device 1000 or another device. Then, for example, values '2', '5', and '4' may be recorded in the field 104.

Weather when content was generated may be recorded in the field 105, and a generated location of content may be recorded in the field 106.

User information of content may be recorded in the field 107. A name and a service ID of a user who owns content may be recorded in the field 107. The service ID of the user may include, for example, a service ID of the metadata management server 2000, a service ID of the cloud storage 3000, and a service ID of an SNS server, but is not limited thereto.

Also, a name and a service ID of another use who used content may be recorded in the field 107. The other user who used the content may be a user who shared the content. Also, the service ID of the other user may include, for example, a service ID of the metadata management server 2000, a service ID of the cloud storage 3000, and a service ID of an SNS server, but is not limited thereto.

A keyword related to content may be recorded in the field 108. Examples of the keyword related to the content may include, for example, a file name of the content, a creator of the content, keywords indicating status information related to generating and using of the content, keywords extracted from the content, and keywords extracted from metadata of the content. For example, when content is a song, a title of the song, a singer of the song, an album name of the song, a location of the device 1000 when the song was played, and weather when the song was played may be recorded in the field 108. In other exemplary embodiments, when content is text, such as a message, a title of the message, a writer of the message, and keywords extracted from the message by analyzing the message may be recorded in the field 108. In this case, the message may be analyzed by using any one of various natural language analyzing techniques. Keywords may be extracted by any suitable entity, for example device 1000, server 2000 or any other device, server or other entity.

Also, a keyword recorded in the field 108 may be used to search for content or metadata by using a search word input to the device 1000.

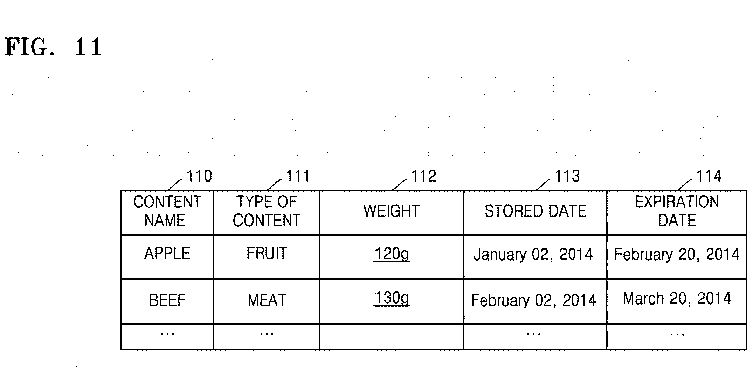

FIG. 11 is a table showing content-based metadata when the device 1000 is a refrigerator, according to an exemplary embodiment.

Referring to FIG. 11, the table showing content-based metadata when the device 1000 is a refrigerator may include a field 110 of a content name, a field 111 of a type of content, a field 112 of a weight, a field 113 of a stored date, and a field 114 of an expiration date.

A name of content stored in the device 1000 may be recorded in the field 110. For example, names of food ingredients, such as 'apple' and 'beef', may be recorded in the field 110.

A type of content stored in the device 1000 may be recorded in the field 111. For example, 'fruit' and 'meat' may be recorded in the field 111.

A weight of content stored in the device 1000 may be recorded in the field 112. For example, weights of food ingredients, such as '120 g' and '300 g', may be recorded in the field 112.

A stored date of content in the device 1000 may be recorded in the field 113. For example, stored dates of food ingredients, such as 'January 02, 2014' and 'February 02, 2014', may be recorded in the field 113. Any date type or date format may be used, as desired.

An expiration date of content stored in the device 1000 may be recorded in the field 114. For example, expiration dates of food ingredients, such as 'February 20, 2014' and 'May 20, 2014', may be recorded in the field 114. Any date type or date format may be used, as desired.

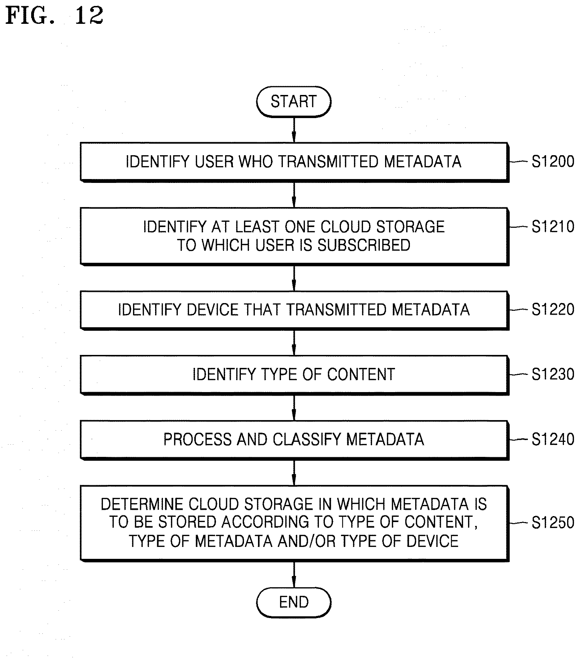

FIG. 12 is a flowchart of a method of determining, by the metadata management server 2000, the cloud storage 3000 for storing metadata, according to an exemplary embodiment.

In operation S1200, the metadata management server 2000 identifies a user of the device 1000 that transmitted metadata. The metadata management server 2000 may receive user information of the device 1000 from the device 1000, and identify the user of the device 1000 based on the user information. The user information may be a service ID of a service provided by the metadata management server 2000, but is not limited thereto.

In operation S1210, the metadata management server 2000 identifies the at least one cloud storage 3000 to which the identified user is subscribed. The metadata management server 2000 may identify the at least one cloud storage 3000 to which the user is subscribed by receiving an ID value of the at least one cloud storage 3000 from the device 1000. Also, the metadata management server 2000 may receive a service ID of the user with respect to the cloud storage 3000, and identify a type of a service usable by the user through the cloud storage 3000.

In operation S1220, the metadata management server 2000 identifies the device 1000 that transmitted the metadata. The metadata management server 2000 may identify the device 1000 by receiving an ID value of the device 1000 from the device 1000.

In operation S1230, the metadata management server 2000 identifies a type of content. The metadata management server 2000 may identify the type of the content from the metadata received from the device 1000.

In operation S1240, the metadata management server 2000 processes and classifies the metadata. The metadata management server 2000 may process the metadata received from the device 1000 to a pre-set format. Also, the metadata management server 2000 may extract partial data from the metadata, and classify the extracted partial data. For example, the metadata management server 2000 may classify the partial data extracted from the metadata into user-based metadata, device-based metadata, and content-based metadata. In other exemplary embodiments, the metadata management server 2000 may classify the metadata according to the type of the content. For example, the metadata management server 2000 may classify the metadata into metadata of multimedia content, metadata of messaging content, and metadata of program content. However, the classifying of the metadata is not limited thereto.

In operation S1250, the metadata management server 2000 determines the cloud storage 3000 in which the metadata is to be stored according to the type of the content, a type of the metadata and/or a type of the device 1000. For example, the metadata management server 2000 may store the metadata in different cloud storages 3000 according to the type of the metadata. In other exemplary embodiments, for example, the metadata management server 2000 may store the metadata in different cloud storages 3000 according to the type of the content corresponding to the metadata. In other exemplary embodiments, for example, the metadata management server 2000 may store the metadata in different cloud storages 3000 according to the type of the device 1000 that provided the metadata. However, the determining of the cloud storage 3000 in which the metadata is to be stored is not limited thereto. The metadata management server 2000 may store the metadata in the cloud storage 3000 that is pre-set by the user.

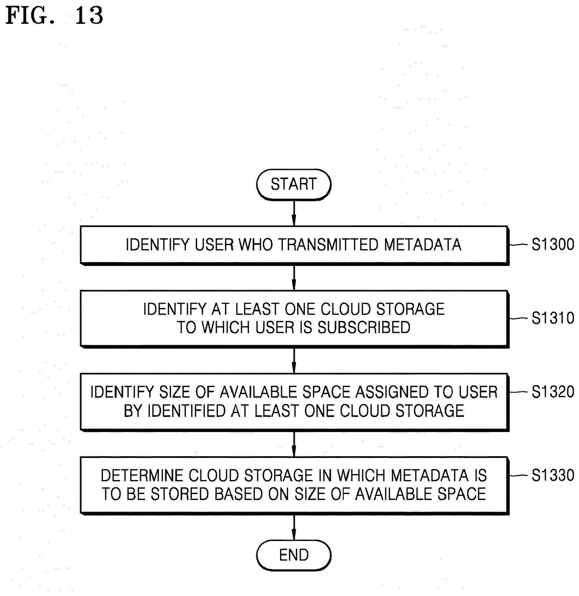

FIG. 13 is a flowchart of a method of determining, by the metadata management server 2000, the cloud storage 3000 for storing the metadata according to an available space of the cloud storage 3000, according to an exemplary embodiment.

In operation S1300, the metadata management server 2000 identifies the user of the device 1000 that transmitted the metadata. The metadata management server 2000 may receive the user information of the device 1000 from the device 1000, and identify the user of the device 1000 based on the user information. The user information may be the service ID of the service provided by the metadata management server 2000, but is not limited thereto.

In operation S1310, the metadata management server 2000 identifies the at least one cloud storage 3000 to which the identified user is subscribed. The metadata management server 2000 may identify the at least one cloud storage 3000 to which the user is subscribed by receiving the ID value of the at least one cloud storage 3000 from the device 1000. Also, the metadata management server 2000 may receive the service ID of the user with respect to the cloud storage 3000, and identify a type of a service usable by the user through the cloud storage 3000.

In operation S1320, the metadata management server 2000 identifies a size of the available space assigned to the user by the identified at least one cloud storage 3000. For example, the metadata management server 2000 may access the cloud storage 3000 of the user by using the service ID of the user, and identify the size of the available space assigned to the user by the cloud storage 3000.

However, an exemplary embodiment is not limited thereto, and while transmitting information about the cloud storage 3000 to which the user is subscribed to the metadata management server 2000, the device 1000 may also transmit information about the size of the available space assigned to the user by the cloud storage 3000 to the metadata management server 2000.

In operation S1330, the metadata management server 2000 determines the cloud storage 3000 in which the metadata is to be stored based on the size of the available space. In this case, a standard for determining the cloud storage 3000 may be pre-set.

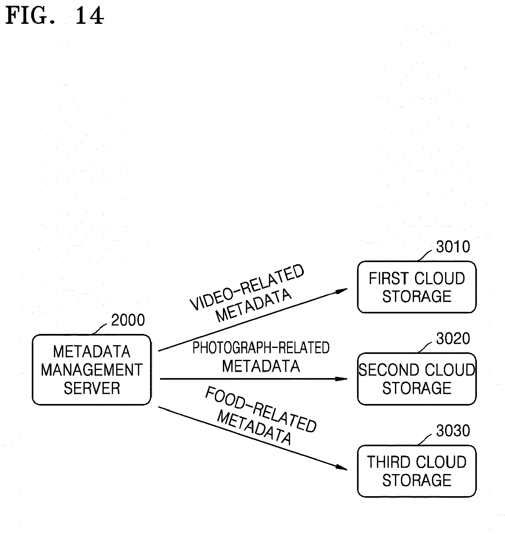

FIGS. 14 through 16 are diagrams for describing examples of transmitting, by the metadata management server 2000, the metadata received from the device 1000 to the plurality of cloud storages 3000 to which the user is subscribed.

FIG. 14 is a diagram for describing an example of the metadata management server 2000 storing the metadata in the plurality of cloud storages 3000 according to the type of the content, according to an exemplary embodiment.

The plurality of cloud storages 3000 includes a first cloud storage 3010, a second cloud storage 3020, and a third cloud storage 3030.

Referring to FIG. 14, the metadata received from the plurality of devices 1000 of the user may be classified into video-related metadata, photograph-related metadata, and food-related metadata according to the type of the content. The metadata management server 2000 may store the video-related metadata in the first cloud storage 3010 to which the user is subscribed. Also, the metadata management server 2000 may store the photograph-related metadata in the second cloud storage 3020 to which the user is subscribed. Also, the metadata management server 2000 may store the food-related metadata in the third cloud storage 3030 to which the user is subscribed.

However, an exemplary embodiment is not limited thereto, and for example, the metadata management server 2000 may store metadata of multimedia content in the first cloud storage 3010, metadata of messaging content in the second cloud storage 3020, and metadata of program content in the third cloud storage 3030.

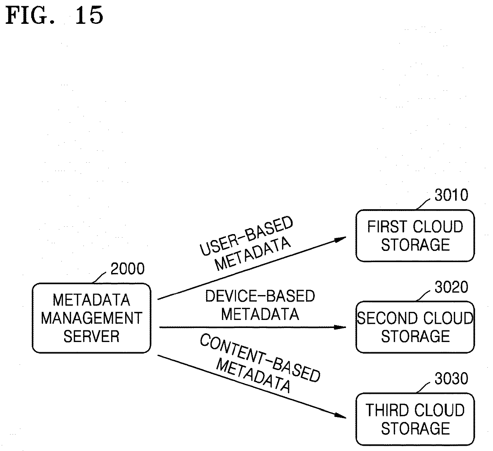

FIG. 15 is a diagram for describing an example of the metadata management server 2000 storing the metadata in the plurality of cloud storages 3000 according to the type of the metadata, according to an exemplary embodiment.

Referring to FIG. 15, the metadata received from the plurality of devices 1000 of the user may be classified into user-based metadata, device-based metadata, and content-based metadata according to the type of the metadata. The metadata management server 2000 may store the user-based metadata in the first cloud storage 3010 to which the user is subscribed. Also, the metadata management server 2000 may store the device-based metadata in the second cloud storage 3020 to which the user is subscribed. Also, the metadata management server 2000 may store the content-based metadata in the third cloud storage 3030 to which the user is subscribed.

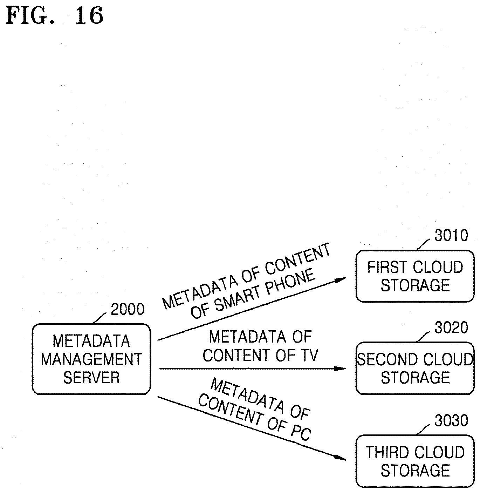

FIG. 16 is a diagram for describing an example of the metadata management server 2000 storing the metadata in the plurality of cloud storages 3000 according to the type of the device 1000, according to an exemplary embodiment.

Referring to FIG. 16, the metadata received from the plurality of devices 1000 of the user may be classified into metadata of content of a smart phone, metadata of content of a TV, and metadata of content of a PC, according to the types of the devices 1000. Also, for example, the metadata management server 2000 may store the metadata of the content of the smart phone in the first cloud storage 3010 to which the user is subscribed. Also, the metadata management server 2000 may store the metadata of the content of the TV in the second cloud storage 3020 to which the user is subscribed. Also, the metadata management server 2000 may store the metadata of the content of the PC in the third cloud storage 3030 to which the user is subscribed.

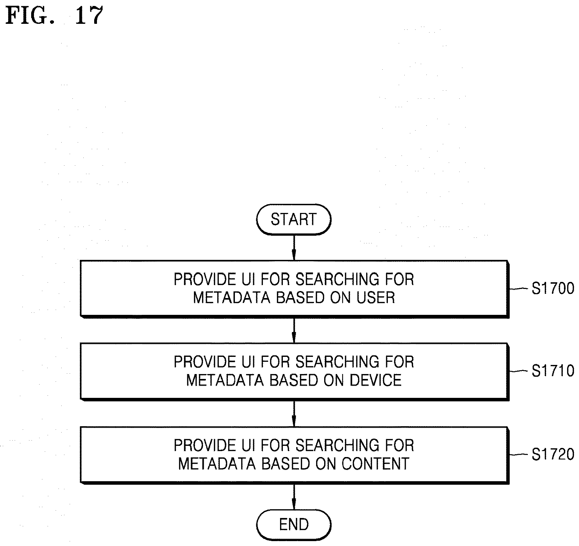

FIG. 17 is a flowchart of a method of providing, by the metadata management server 2000, a UI for searching for metadata, according to an exemplary embodiment. The metadata management server 2000 may provide the UI for searching for metadata to the device 1000 or a service providing server 4000, as described below.

In operation S1700, the metadata management server 2000 provides a UI for searching for metadata of a certain user. The metadata management server 2000 may provide the UI for searching for the metadata of the certain user to the device 1000 or the service providing server 4000 based on the metadata of the certain user, which is classified and stored in a database (DB). User ID information of the certain user may be input through the UI, and the metadata management server 2000 may search various pieces of metadata related to the certain user based on the user ID information and provide search results to the device 1000 or the service providing server 4000.

In operation S1710, the metadata management server 2000 provides a UI for searching for metadata of a certain device. The metadata management server 2000 may provide the UI for searching for the metadata of the certain device to the device 1000 or the service providing server 4000 based on the metadata of the certain device, which is classified and stored in a DB. Device ID information of the certain device may be input through the Ul, and the metadata management server 2000 may search various pieces of metadata related to the certain device based on the device ID information and provide search results to the device 1000 or the service providing server 4000.

In operation S1720, the metadata management server 2000 provides a UI for searching for metadata of certain content. The metadata management server 2000 may provide the UI for searching for the metadata of the certain content to the device 1000 or the service providing server 4000 based on the metadata of the certain content, which is classified and stored in a DB. Content ID information of the certain device or a type of the certain content may be input through the Ul, and the metadata management server 2000 may search various pieces of metadata related to the certain content based on the content ID information or the type of the content and provide search results to the device 1000 or the service providing server 4000.

However, the searching for metadata is not limited to searching for the metadata itself, and may include searching for certain content by searching metadata related to the certain content.

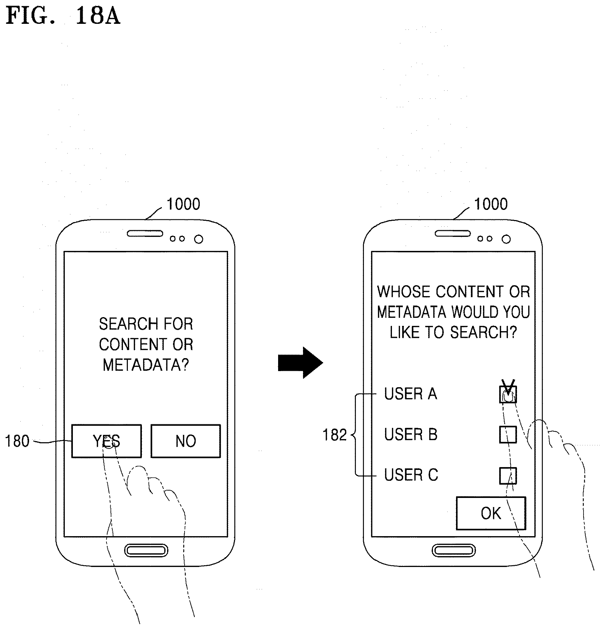

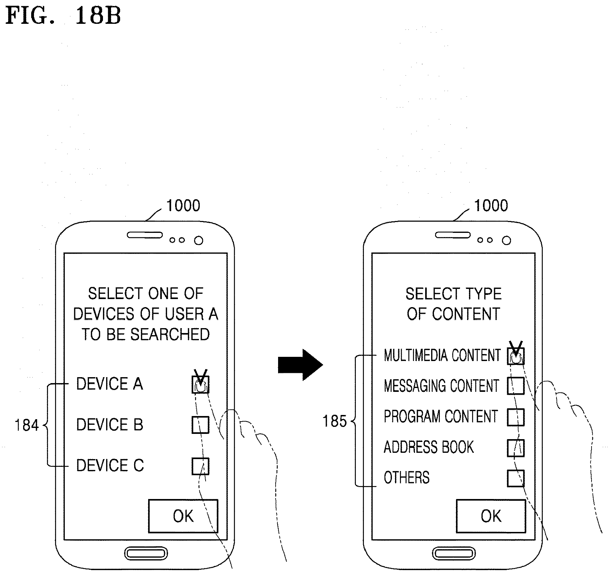

FIGS. 18A and 18B are diagrams for describing examples of searching, using the device 1000, for metadata and content by using Uls received from the metadata management server 2000, according to exemplary embodiments.

FIG. 18A through 18C are diagrams for describing examples of the device 1000 searching for metadata by selecting types of a user, a device, and content, according to exemplary embodiments.

Referring to FIG. 18A, the device 1000 may display a UI for starting content search on a screen of the device 1000, and the user of the device 1000 may select a button 180 for starting the content search.

When the button 180 is selected, the device 1000 may display a user list 182 of users who are targets of content search on the screen. When the button 180 is selected, the metadata management server 2000 may identify the user of the device 1000 and other users who shared content with the user, and provide the user list 182 including the user of the device 1000 and the other users to the device 1000. For example, the user list 182 may include a user A, a user B, and a user C. Also, for example, the user of the device 1000 may select the user A from the user list 182.

Referring to FIG. 18B, the device 1000 may display a device list 184 of devices owned by the user A on the screen, and display a list 185 of types of content stored in a device A selected by the user of the device 1000 on the screen.

In detail, when the user A is selected from the user list 182 of FIG. 18A, the device 1000 may display the device list 184 associated with the user A on the screen of the device 1000. When the user A is selected from the user list 182, the metadata management server 2000 may identify the devices of the user A, which transmitted metadata, and provide the device list 184 including the identified devices to the device 1000. At this time, the metadata management server 2000 may identify the devices of the user A, which transmitted the metadata, by using the metadata received from the devices of the user A. The device list 184 may include, for example, a device A, a device B, and a device C, which are the devices of the user A. The user of the device 1000 may select the device A from the device list 184, and accordingly, the device 1000 may display the list 185 of the types of the content stored in the device A. When the device A is selected from the device list 184, the metadata management server 2000 may identify the types of the content stored in the device A. At this time, the metadata management server 2000 may generate the list 185 of the types of the content stored in the device A by using the metadata received from the device A of the user A. The list 185 may include, for example, multimedia content, messaging content, program content, an address book, and others. Also, for example, the device 100 may select the multimedia content from the list 185 based on a user input.

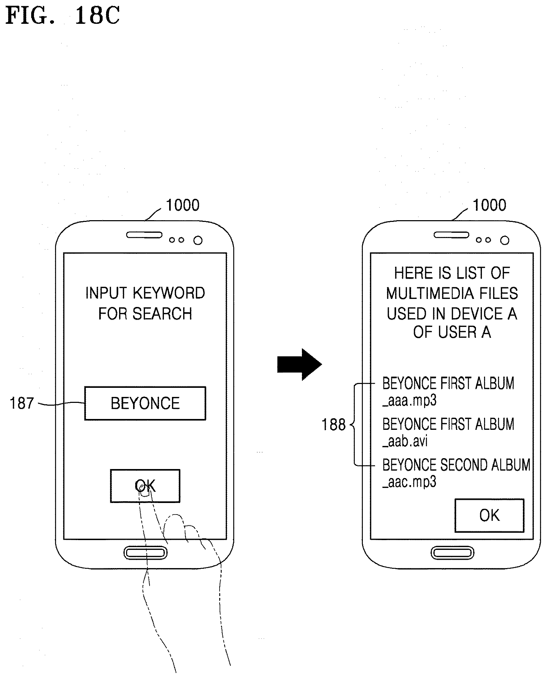

Referring to FIG. 18C, the device 1000 may display, on the screen of the device 1000, a search window 187 for searching for content or metadata. For example, the device 1000 may input a search keyword 'Beyonce' based on a user input. When the search keyword 'Beyonce' is input to the search window 187, the device 1000 may transmit the search keyword 'Beyonce' to the metadata management server 2000, and request the metadata management server 2000 for a list 188 of multimedia content found based on the search keyword 'Beyonce'.

Also, the device 1000 may display, on the screen of the device 1000, the list 188 of the multimedia content found based on the search keyword 'Beyonce'. The metadata management server 2000 may search for multimedia content related to the search keyword 'Beyonce' from among multimedia content used by the device A of the user A, by using the search keyword 'Beyonce'. Then, the metadata management server 2000 may transmit the list 188 to the device 1000, and the device 1000 may display, on the screen of the device 1000, the list 188.

Meanwhile, for example, when 'Beyonce second album_aac.mp3' from among multimedia content (original content) stored in the device A of the user A is deleted from the device A, an icon indicating that 'Beyonce second album_aac.mp3' is deleted may be displayed around 'Beyonce second album_aac.mp3' displayed in the list 188.

Also, for example, when the device 1000 selects 'Beyonce first album_aaa.mp3' from the list 188 based on a user input, the device 1000 may receive link information for downloading 'Beyonce first album_aaa.mp3' from the metadata management server 2000, and request the device A for 'Beyonce first album_aaa.mp3' by using the link information.

Meanwhile, in FIGS. 18A through 18C, the device 1000 receives the user list 182, the device list 184, the list 185, and the list 188 from the metadata management server 2000, but an exemplary embodiment is not limited thereto. When the user A is selected from the user list 182 of FIG. 18A, the device 1000 may receive metadata about the user A from the metadata management server 2000, and generate the device list 184 and the list 188 by using the metadata.

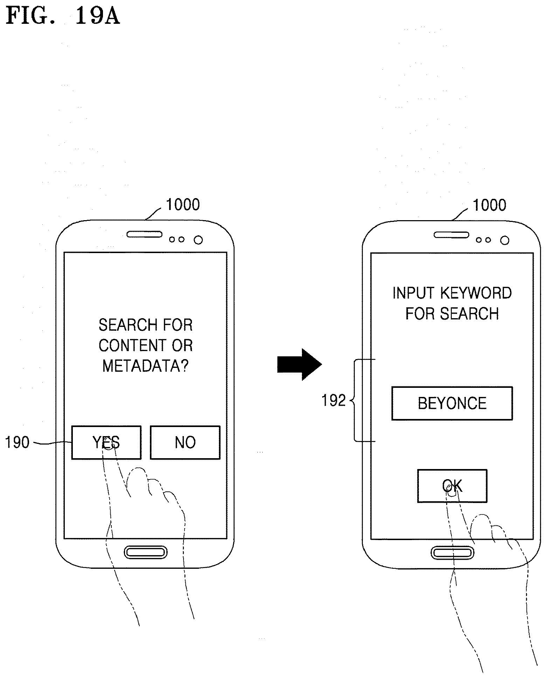

FIGS. 19A through 19C are diagrams for describing examples of the device 1000 searching for content or metadata according to types of content, by using a search keyword, according to exemplary embodiments.

Referring to FIG. 19A, the device 1000 may display, on the screen of the device 1000, a UI for starting content search, and the user of the device 1000 may select a button 190 for starting the content search. Also, the device 1000 may display, on the screen of the device 1000, a search window 192 for searching for content or metadata. Then, for example, the device 1000 may input a search keyword 'Beyonce' based on a user input. When the search keyword 'Beyonce' is input to the search window 192, the device 1000 may transmit the search keyword 'Beyonce' to the metadata management server 2000, and request the metadata management server 2000 for a list 194 of content found based on the search keyword 'Beyonce'.

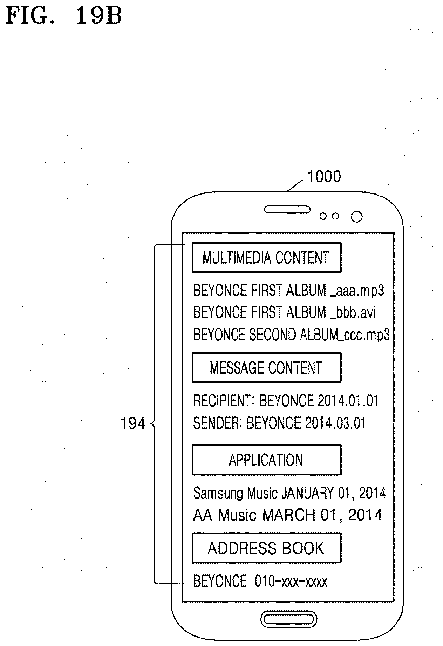

Referring to FIG. 19B, the device 1000 may display, on the screen of the device 1000, the list 194 of the content found based on the search keyword 'Beyonce'. The metadata management server 2000 may search for content related to the search keyword 'Beyonce' from among content related to the user of the device 1000, by using the search keyword 'Beyonce'. Also, the metadata management server 2000 may transmit the list 194 to the device 1000, and the device 1000 may display, on the screen of the device 1000, the list 194.

The content in the list 194 may be classified according to types of the content. For example, the list 194 may include a list of multimedia content, a list of messaging content, a list of application content, and a user list in an address book. The list of multimedia content may include songs or videos of a singer 'Beyonce', and for example, include 'Beyonce first album_aaa.mp3', 'Beyonce first album_bbb.avi', and 'Beyonce first album_ccc.mp3'. Also, the list of messaging content may include messages in which a recipient or a sender is 'Beyonce'. The messages in the list of messaging content may include information about a received time or a transmitted time. For example, the list of messaging content may include 'recipient: Beyonce, January 01, 2014' and 'sender: Beyonce, March 01, 2014'. Also, the list of application content may include applications related to 'Beyonce'. For example, the list of applications may include 'Samsung Music, April 01, 2014' and 'AA Music, April 05, 2014' that are applications played songs of 'Beyonce'. Also, the user list in the address book may include contact information of 'Beyonce'.

When certain content is selected from the list 194, the device 1000 may perform an operation related to the certain content. For example, when 'Beyonce first album_aaa.mp3' is selected from the list of multimedia content, the device 1000 may execute 'Beyonce first album_aaa.mp3' or receive link information for downloading 'Beyonce first album_aaa.mp3' from the metadata management server 2000.

Also, for example, when 'recipient: Beyonce, January 01, 2014' is selected from the list of messaging content, the device 1000 may display, on the screen of the device 1000, a message transmitted to 'Beyonce' on January 01, 2014. At this time, the message transmitted to 'Beyonce' on January 01, 2014 may be stored in the device 1000 or another device.

Also, for example, when 'Samsung Music, April 05, 2014' is selected from the list of application content, the device 1000 may execute an application 'Samsung Music'. If the application 'Samsung Music' is not installed in the device 1000, the device 1000 may download the application 'Samsung Music'.

Also, for example, when 'Beyonce 010-xxx-xxxx' in the user list of the address book is selected, the device 1000 may display, on the screen of the device 1000, a graphical user interface (GUI) for calling 'Beyonce' or sending a message to 'Beyonce'.

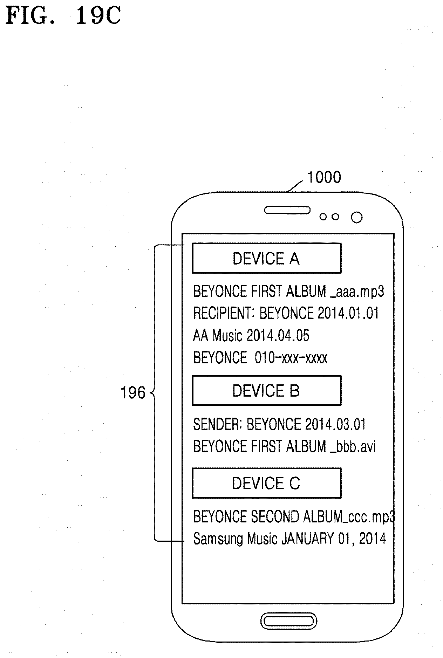

Referring to FIG. 19C, the device 1000 may display, on the screen of the device 1000, a list 196 of content found by using the search keyword 'Beyonce'. The content in the list 196 may be classified according to devices. For example, the list 196 may include a list of content used in a device A, a list of content used in a device B, and a list of content used in a device C. At least one of the devices A through C may be a device of the user of the device 1000. Also, at least one of the devices A through C may be a device of another user different from the user of the device 1000. The other user and the user of the device 1000 may be in a personal relationship, such as an acquaintance in SNS or a friend. Also, one of the devices A through C may be the device 1000.

Also, for example, the list of content used in the device A may include 'Beyonce first album_aaa.mp3' that is music used in the device A, 'recipient: Beyonce January 01, 2014' that is messaging content transmitted from the device A, 'AA Music, April 05, 2014' that is application content executed by the device A, and 'Beyonce 010-xxx-xxxx' that is found from an address book stored in the device A.

Also, for example, the list of content used in the device B may include 'sender: Beyonce, March 01, 2014' that is messaging content, and 'Beyonce first album_bbb.avi' that is a music video executed by the device B.

Also, for example, the list of content used in the device C may include 'Beyonce first album_ccc.mp3' that is music shared by the device C with another device, and 'Samsung Music, April 01, 2014' that is an application executed by the device C.

When certain content is selected from the list 196, the device 1000 may download or execute the certain content or share the certain content with another device. For example, the device B may be a device of another user different from the user of the device 1000. The other user and the user of the device 1000 may be, for example, "friends" in SNS. In this case, the metadata management server 2000 find 'Beyonce first album_bbb.avi' that is a music video related to 'Beyonce' from among the content used in the device B of the other user who is a friend with the user of the device 1000, and include 'Beyonce first album_bbb.avi' to the list of content used in the device B in the list 196. In this case, authority to use metadata of content used by the other user through the device B may be pre-assigned to the user of the device 1000. Also, in this case, the metadata of the content used by the other user through the device B may be stored in SNS of the other user. For example, since the authority to use the metadata of the content used by the other user through the device B is pre-assigned to the user of the device 1000, the metadata management server 2000 may access the metadata of the content used by the other user through the device B by using an SNS ID of the user of the device 1000. Then, when the user of the device 1000 selects 'Beyonce first album_bbb.avi' from the list 196, the device 1000 may request the metadata management server 2000 or the device B for 'Beyonce first album_bbb.avi'. Accordingly, the user of the device 1000 and the other user may share 'Beyonce first album_bbb.avi'.

Meanwhile, in FIGS. 19B and 19C as described above, the device 1000 classifies and displays lists of content according to types of content and devices, but an exemplary embodiment is not limited thereto. The device 1000 may classify the content according to users or another standard.

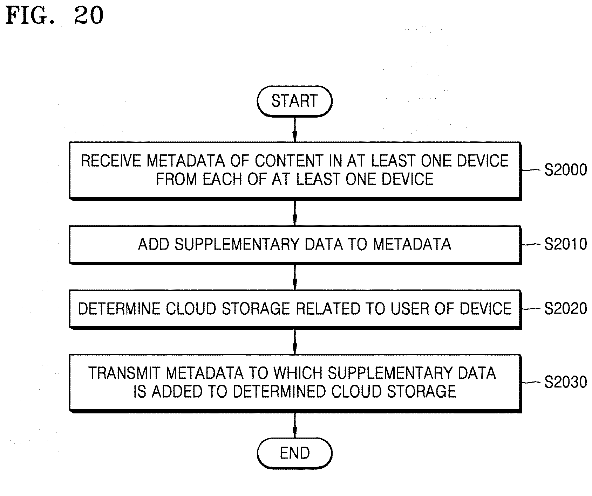

FIG. 20 is a flowchart of a method of adding, by the metadata management server 2000, supplementary data to metadata received from the device 1000, according to an exemplary embodiment.

In operation S2000, the metadata management server 2000 receives metadata of content in the at least one device 1000 from each of the at least one device 1000. The metadata management server 2000 may receive, from each device 1000, only the metadata of content in each device 1000.

The content in the device 1000 may be content stored in the device 1000. In other exemplary embodiments, the content in the device 1000 may be content executed in the device 1000, and for example, may be a video, a still image, or a photograph executed in the device 1000. In further exemplary embodiments, the content in the device 1000 may be content generated by the device 1000. The content generated by the device 1000 may be, for example, a video filmed by the device 1000, a photograph photographed by the device 1000, voice recorded by the device 1000, or sensing information detected by a sensor in the device 1000.

Also, the metadata management server 2000 may classify the metadata received from the device 1000. For example, the metadata management server 2000 may process and classify the metadata received from the device 1000 into user-based metadata, device-based metadata, and content-based metadata.

In operation S2010, the metadata management server 2000 adds supplementary data to the metadata. The metadata management server 2000 may add supplementary data to the metadata by using various types of information collected by the metadata management server 2000, such that the metadata is abundant. For example, the metadata management server 2000 may add, to the metadata, a list of acquaintances who like the content stored in the device 1000, from among acquaintances of the user of the device 1000. Also, for example, the metadata management server 2000 may add, to the metadata, a list of recommended content liked by another user who likes the content stored in the device 1000. Also, for example, the metadata management server 2000 may obtain used ranking information of the content stored in the device 1000, and add the obtained used ranking information to the metadata.

The metadata management server 2000 may monitor a network situation of the device 1000 that provided the metadata, and may add information about the network situation to the metadata, as supplementary data. The network situation may include, for example, information about whether a network function of the device 1000 is activated, whether the device 1000 is connectable to another device through a network, and about a type of a network used by the device 1000.

Also, the supplementary data may be related to a service provided by the metadata management server 2000.

Also, the metadata management server 2000 may request the service providing server 4000 to add the supplementary data to the metadata. In this case, the service providing server 4000 may extract data related to a service of the service providing server 4000 from the metadata, and add supplementary data about the service of the service providing server 4000 to the extracted data. Then, the service providing server 4000 may provide the extracted data to which the supplementary data is added to the metadata management server 2000.

In operation S2020, the metadata management server 2000 determines the cloud storage 3000 to which the user of the device 1000 is subscribed. The metadata management server 2000 may identify the at least one cloud storage 3000 to which the user is subscribed based on user information of the user, and determine the cloud storage 3000 in which the metadata is to be stored from among the identified at least one cloud storage 3000. Here, the metadata management server 2000 may determine the cloud storage 3000 in which the metadata is to be stored based on, for example, a type of content, a type of metadata, a type of device, or a size of an available space in the cloud storage 3000.

In operation S2030, the metadata management server 2000 transmits the metadata to which the supplementary data is added, to the determined cloud storage 3000. In another exemplary embodiment, the metadata management server 2000 may transmit the metadata to which the supplementary data is added to the determined cloud storage 3000, and match and manage an ID value of the metadata to which the supplementary data is added and an ID value of the determined cloud storage 3000.

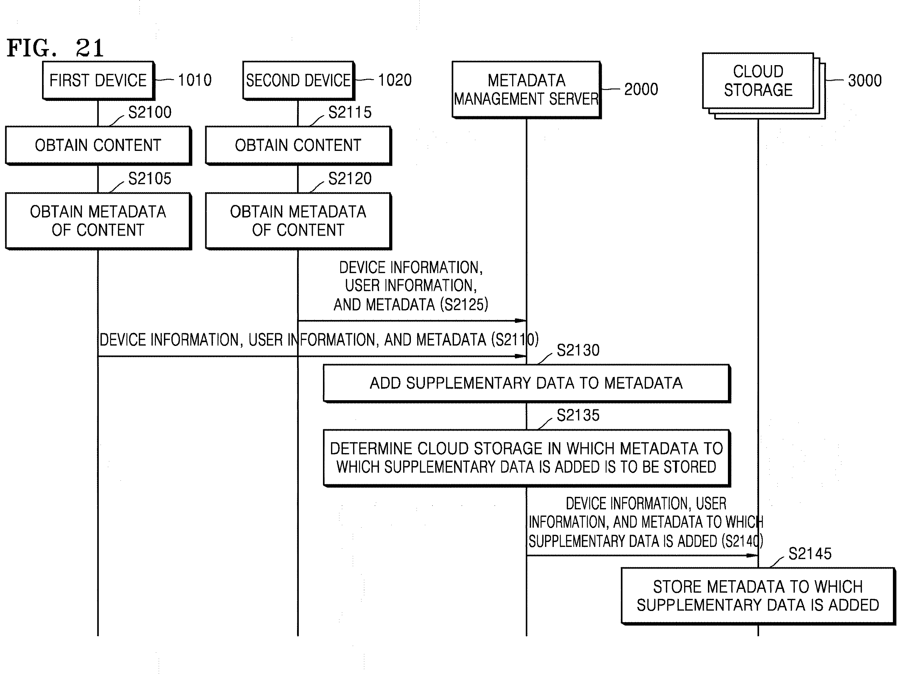

FIG. 21 is a flowchart of receiving, by the metadata management server 2000, metadata from the plurality of devices 1000, i.e., the first and second devices 1010 and 1020, and adding, by the metadata management server 2000, supplementary data to the received metadata, according to an exemplary embodiment.

Since operations S2100 through S2125 of FIG. 21 are similar to operations S400 through S425 of FIG. 4, details thereof are not provided again.

In operation S2130, the metadata management server 2000 adds supplementary data to the metadata. The metadata management server 2000 may add the supplementary data to the metadata by using various types of information collected by the metadata management server 2000 such that the metadata is abundant. For example, the metadata management server 2000 may add a list of acquaintances who like the content stored in the first and second devices 1010 and 1020 from among acquaintances of the user of the first and second devices 1010 and 1020. Also, for example, the metadata management server 2000 may add, to the metadata, a list of recommended content "liked," played, used, viewed, or otherwise selected by another user who "liked," played, used, viewed, or otherwise selected the content stored in the first and second devices 1010 and 1020. Also, for example, the metadata management server 2000 may obtain used ranking information of the content stored in the first and second devices 1010 and 1020, and add the obtained used ranking information to the metadata.

Also, the supplementary data may be related to a service provided by the metadata management server 2000.

In operation S2135, the metadata management server 2000 determines the at least one cloud storage 3000 to which the user of the first and second devices 1010 and 1020 is subscribed. The metadata management server 2000 may identify the cloud storage 3000 to which the user is subscribed based on user information of the user, and determine the cloud storage 3000 in which the metadata is to be stored from among the identified at least one cloud storage 3000. In other exemplary embodiments, the metadata management server 2000 may determine the cloud storage 3000 in which the metadata is to be stored based on a type of content, a type of metadata, a type of a device, or a size of an available space of the cloud storage 3000.

In operation S2140, the metadata management server 2000 transmits the metadata to which the supplementary data is added, the device information, and the user information to the determined cloud storage 3000. In other exemplary embodiments, the metadata management server 2000 may transmit the metadata to which the supplementary data is added to the determined cloud storage 3000, and may match and manage an ID value of the metadata to which the supplementary data is added and an ID value of the determined cloud storage 3000.

Then, in operation S2145, the cloud storage 3000 stores the metadata to which the supplementary data is added, which is received from the metadata management server 2000.

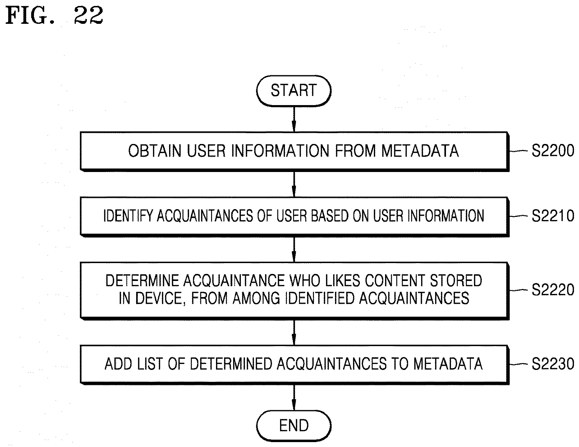

FIG. 22 is a flowchart of a method of adding, by the metadata management server 2000, a list of acquaintances who "like" content to metadata, according to an exemplary embodiment.

In operation S2200, the metadata management server 2000 obtains user information from metadata received from the device 1000. The metadata management server 2000 may obtain a service ID of the user of the device 1000 from the metadata received from the device 1000. The metadata management server 2000 may obtain, for example, an SNS ID of the user and a content sharing service ID. In other exemplary embodiments, the metadata management server 2000 may obtain the user information from user-based metadata.

In operation S2210, the metadata management server 2000 identifies acquaintances of the user based on the user information. The metadata management server 2000 may identify the acquaintances of the user by using the service ID of the user. The acquaintances of the user may include, for example, another user included in an address book of the user, another user who is a friend with the user in SNS, and another user who is a member of the same community as the user in a community service, but are not limited thereto.

In operation S2220, the metadata management server 2000 may determine an acquaintance who "likes" the content stored in the device 1000 from among the identified acquaintances. "Like" can, for example, refer to an indication based on input received from a user such as the acquaintances of the user. The metadata management server 2000 may obtain metadata related to the identified acquaintances, and determine the acquaintance who "likes" the content stored in the device 1000 based on the obtained metadata.

In operation S2230, the metadata management server 2000 adds a list of the determined acquaintances to the metadata. The metadata management server 2000 may add the list of acquaintances to the metadata according to the content.

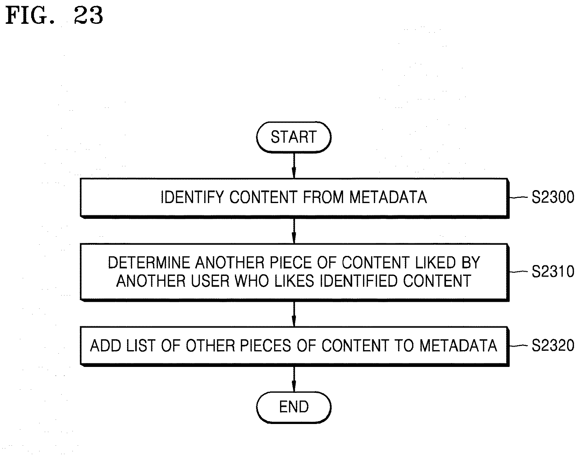

FIG. 23 is a flowchart of a method of adding, by the metadata management server 2000, a list of other pieces of content liked by another user who "likes" content to metadata, according to an exemplary embodiment.

In operation S2300, the metadata management server 2000 identifies content from metadata. The metadata management server 2000 may identify the content stored in the device 1000 based on a content name included in the metadata received from the device 1000.

In operation S2310, the metadata management server 2000 determines another piece of content liked by another user who "likes" the identified content. The metadata management server 2000 may obtain content preference information from metadata of the other user who is subscribed to the metadata management server 2000. Also, the metadata management server 2000 may determine the other user who "likes" the content identified in operation S2300. Also, the metadata management server 2000 may generate a list of other pieces of content "liked" by the other user by using the content preference information of the other user.

In operation S2320, the metadata management server 2000 may add the list of the other pieces of content to the metadata received from the device 1000. The metadata management server 2000 may add the list of the other pieces of content to the metadata according to content.

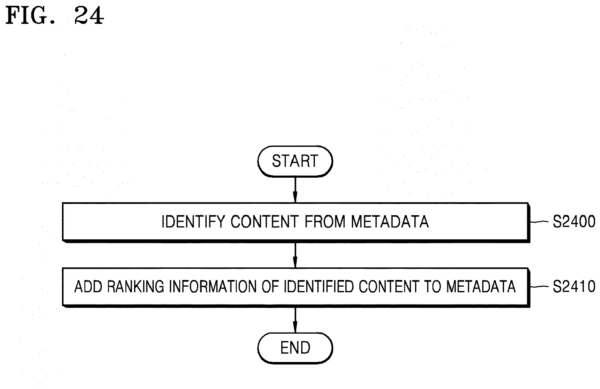

FIG. 24 is a flowchart of a method of adding, by the metadata management server 2000, ranking information of content to metadata, according to an exemplary embodiment.

In operation S2400, the metadata management server 2000 identifies content from metadata. The metadata management server 2000 may identify the content stored in the device 1000 from a content name included in the metadata received from the device 1000.

In operation S2410, the metadata management server 2000 adds ranking information of the identified content to the metadata. The metadata management server 2000 may determine rankings of the identified content based on the number of times the identified content was used by the user of the device 1000 or another user. Also, the metadata management server 2000 may add information about the determined rankings to the metadata according to content.

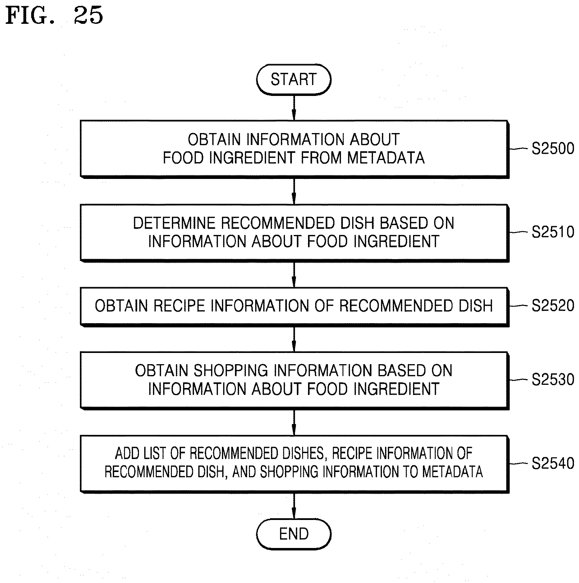

FIG. 25 is a flowchart of a method of adding, by the metadata management server 2000, supplementary data to metadata of content, when the device 1000 is a refrigerator and the content in the device 1000 is a food ingredient, according to an exemplary embodiment.

In operation S2500, the metadata management server 2000 obtains information about a food ingredient from metadata received from the device 1000. The information about the food ingredient may include, for example, a name, a type, and a status of the food ingredient, but is not limited thereto.

In operation S2510, the metadata management server 2000 determines a recommended dish based on the information about the food ingredient. For example, the metadata management server 2000 may generate a list of recommended dishes to be recommended to the user of the device 1000 based on the name and weight of the food ingredient. In other exemplary embodiments, the metadata management server 2000 may determine a recommended dish to be recommended to the user based on preference information of the user.

In operation S2520, the metadata management server 2000 obtains recipe information of the recommended dish. The metadata management server 2000 may obtain the recipe information for preparing the recommended dish by using information about the name, type, weight, and status of the food ingredient, from an external server.

In operation S2530, the metadata management server 2000 obtains shopping information based on the information about the food ingredient. The metadata management server 2000 may determine a name and weight of a food ingredient required to prepare the recommended dish based on the recipe information. Then, the metadata management server 2000 may determine whether the food ingredients required to prepare the recommended dish are stored in the device 1000, and generate a list of food ingredients to be purchased by the user to prepare the recommended dish. Also, the metadata management server 2000 may obtain the shopping information related to the purchasing of the food ingredients in the generated list.

In operation S2540, the metadata management server 2000 may add at least one of a list of recommended dishes, recipe information of a recommended dish, and shopping information to the metadata.

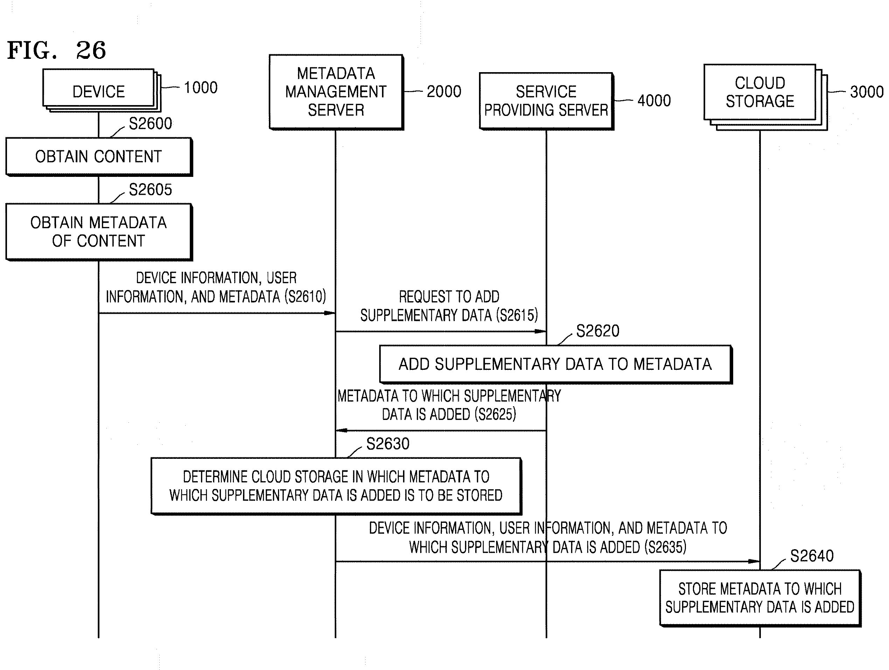

FIG. 26 is a flowchart of a method of adding, by the metadata management server 2000, supplementary data to metadata through the service providing server 4000, according to an exemplary embodiment.

In operation S2600, the device 1000 obtains content. The device 1000 may receive the content from an external apparatus or generate the content. The content may be, for example, a video, a still image, a document, or a photograph. The device 1000 may, for example, film a video, photograph a photograph, or record voice. Also, for example, the device 1000 may generate various types of sensing information to the content by using a sensor included in the device 1000, such as a position sensor, an illuminance sensor, a motion sensor, a proximity sensor, a humidity sensor, or a communication sensor.

In operation S2605, the device 1000 obtains metadata of the content. When the content is generated, received, executed, or transmitted, the device 1000 may generate the metadata related to the generating, receiving, executing, or transmitting of the content. In other exemplary embodiments, the device 1000 may receive the metadata pre-added to the content from an external source.

In operation S2610, the device 1000 transmits device information, user information, and the metadata to the metadata management server 2000. For example, the device 1000 may transmit a device name, SSID, a model name, and/or a phone number of the device 1000 to the metadata management server 2000. Also, for example, the device 1000 may transmit a user name of the user of the device 1000, a service ID of the metadata management server 2000, a service name of the cloud storage 3000 to which the user is subscribed, a service ID of the cloud storage 3000, and a nickname of the cloud storage 3000 to the metadata management server 2000.

In operation S2615, the metadata management server 2000 requests the service providing server 4000 to add supplementary data to the metadata. The metadata management server 2000 may provide some or all of the metadata to the service providing server 4000. Here, the metadata management server 2000 may provide some or all of the metadata to the service providing server 4000 according to a pre-set standard.

In operation S2620, the service providing server 4000 adds the supplementary data to the metadata. The service providing server 4000 may select data related to a service provided by the service providing server 4000 from among data included in the metadata, and add supplementary data indicating that the selected data is related to the service, to the metadata.

In other exemplary embodiments, the service providing server 4000 may additionally generate supplementary data required for the service provided by the service providing server 4000, and add the generated supplementary data to the metadata.

In operation S2625, the service providing server 4000 provides the metadata to which the supplementary data is added to the metadata management server 2000. The service providing server 4000 may provide the metadata to which the supplementary data is added to the data management server 2000 according to a pre-set period, but an exemplary embodiment is not limited thereto.

In operation S2630, the metadata management server 2000 determines the cloud storage 3000 in which the metadata to which the supplementary data is added is to be stored. The metadata management server 2000 may determine the cloud storage 3000 in which the metadata to which the supplementary data is added is to be stored according to the service providing server 4000, but an exemplary embodiment is not limited thereto.

In operation S2635, the metadata management server 2000 transmits, to the determined cloud storage 3000, the metadata to which the supplementary data is added, the device information, and the user information. In other exemplary embodiments, the metadata management server 2000 may transmit the metadata to which the supplementary data is added to the determined cloud storage 3000, and match and manage an ID value of the metadata to which the supplementary data is added and an ID value of the determined cloud storage 3000.

Also, in operation S2640, the cloud storage 3000 stores the metadata to which the supplementary data is added, which is received from the metadata management server 2000.

In FIG. 26, the service providing server 4000 receives the metadata from the metadata management server 2000, but an exemplary embodiment is not limited thereto. The service providing server 4000 may receive access information for obtaining the metadata stored in the cloud storage 3000 from the metadata management server 2000, and obtain the metadata from the cloud storage 3000 by using the access information. In this case, the access information may include link information of the cloud storage 3000 and account information of the user, but is not limited thereto.

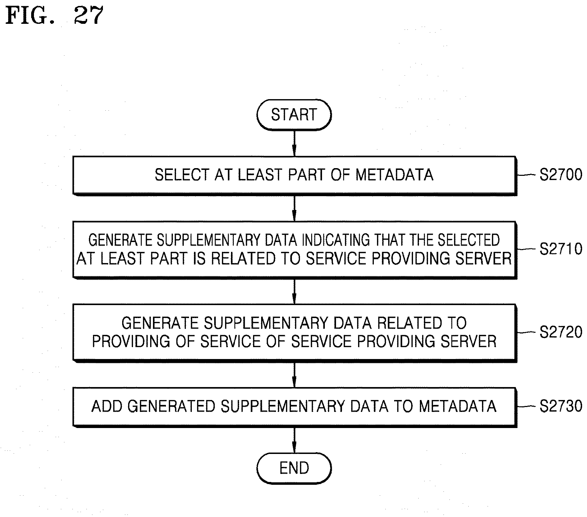

FIG. 27 is a flowchart of a method of adding, by the service providing server 4000, supplementary data to metadata, according to an exemplary embodiment.

In operation S2700, the service providing server 4000 selects at least a part of the metadata. The service providing server 4000 may select the at least part of the metadata received from the metadata management server 2000 according to a pre-set standard. For example, the service providing server 4000 may select data related to a service provided by the service providing server 4000, from among data included in the metadata. When the service providing server 4000 provides a plurality of services, the metadata management server 2000 may select a part of the metadata according to the services.

In operation S2710, the service providing server 4000 generates supplementary data indicating that the selected at least part of the metadata is related to the service providing server 4000. If the service providing server 4000 provides the plurality of services, the service providing serer 4000 may generate the supplementary data according to the services. The supplementary data may include, for example, an ID value of the service providing server 4000, an ID value of the service provided by the service providing server 4000, and an ID value of the metadata related to the service providing server 4000.

In operation S2720, the service providing server 4000 additionally generates supplementary data related to providing of the service of the service providing server 4000. Metadata required to provide the service of the service providing server 4000 may be additionally generated when the metadata required to provide the service of the service providing server 4000 is omitted in the metadata received from the metadata management server 2000.

In operation S2730, the service providing server 4000 may add the generated supplementary data to the metadata. The adding of the supplementary data to the metadata may mean that the metadata and the supplementary data are linked to each other and stored, and managed.

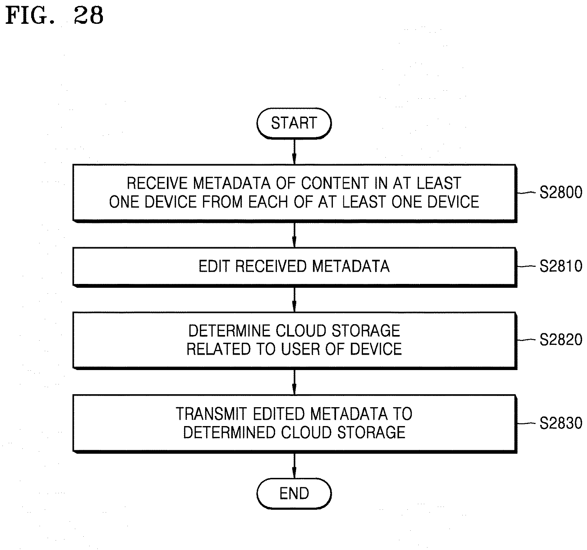

FIG. 28 is a flowchart of a method of editing metadata by the metadata management server 2000, according to an exemplary embodiment.

In operation S2800, the metadata management server 2000 may receive metadata of content in at least one device 1000 from each of the at least one device 1000. The metadata management server 2000 may receive, from each device 1000, only the metadata of the content in each device 1000.

In operation S2810, the metadata management server 2000 edits the received metadata. The metadata received from the device 1000 may be in various formats. In this case, the metadata management server 2000 may edit the metadata to a pre-set format.

In other exemplary embodiments, the metadata management server 2000 may edit the metadata to a format used in a service of the service providing server 4000. In this case, the metadata management server 2000 may edit the metadata according to services of the service providing server 4000.

In operation S2820, the metadata management server 2000 determines the cloud storage 3000 to which the user is subscribed. The metadata management server 2000 may identify the at least one cloud storage 3000 to which the user is subscribed based on user information of the user, and determine the cloud storage 3000 in which the metadata is to be stored from among the identified at least one cloud storage 3000. In other exemplary embodiments, the metadata management server 2000 may determine the cloud storage 3000 in which the metadata is to be stored based on, for example, a format of the edited metadata and a type of the service providing server 4000 related to the edited metadata.

In operation S2830, the metadata management server 2000 transmits the edited metadata to the determined cloud storage 3000. In other exemplary embodiments, the metadata management server 2000 may transmit the edited metadata to the cloud storage 3000, and match and manage an ID value of the edited metadata and an ID value of the determined cloud storage 3000.

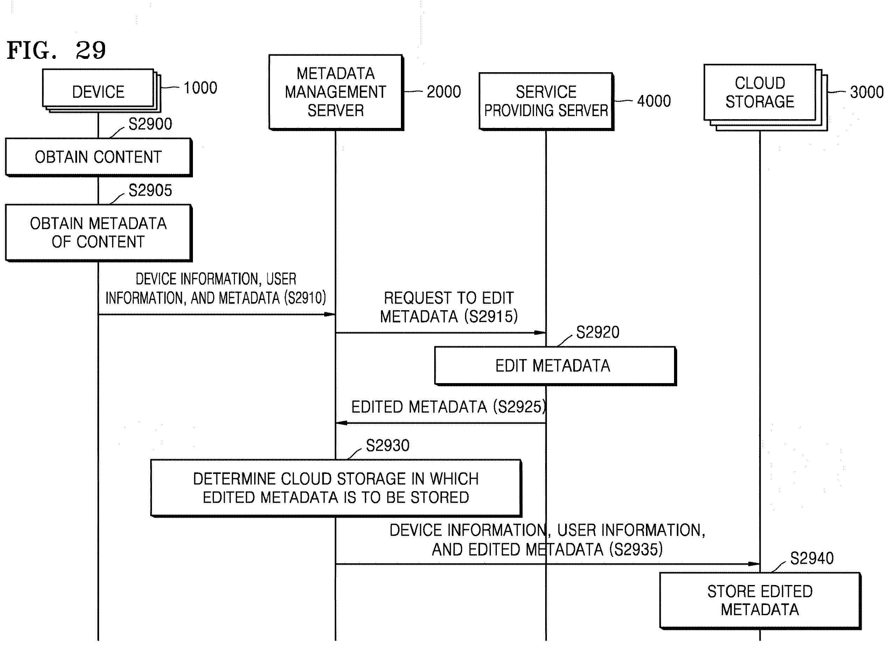

FIG. 29 is a flowchart of a method of editing, by the metadata management server 2000, metadata through the service providing server 4000, according to an exemplary embodiment.

Since operations S2900 through S2910 and operations S2930 through S2940 of FIG. 29 are similar to operations S2600 through S2610 and operations S2630 through S2640 of FIG. 26, details about operations S2900 through S2910 and operations S2930 through S2940 are not provided again.

In operation S2915, the metadata management server 2000 requests the service providing server 4000 to edit the metadata. The metadata management server 2000 may provide some or all of the metadata to the service providing server 4000. In another exemplary embodiment, the metadata management server 2000 may provide some or all of the metadata to the service providing server 4000 according to a pre-set standard.

In operation S2920, the service providing server 4000 edits the metadata. The service providing server 4000 may convert a format of the metadata received from the metadata management server 2000 to a format usable by a service of the service providing server 4000.

In operation S2925, the service providing server 4000 provides the edited metadata to the metadata management server 2000. The service providing server 4000 may provide the edited metadata to the metadata management server 2000 according to a pre-set period, but an exemplary embodiment is not limited thereto.

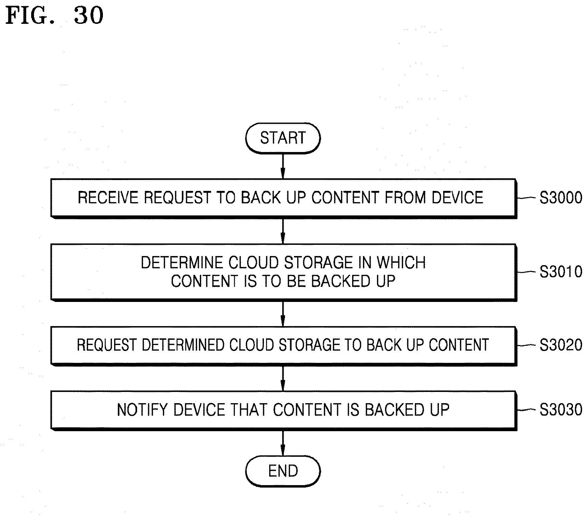

FIG. 30 is a flowchart of a method of backing content up by the metadata management server 2000, according to an exemplary embodiment.

In operation S3000, the metadata management server 2000 receives a request to back up content from the device 1000. The device 1000 may receive a user input of deleting the content in the device 1000, and may request the metadata management server 2000 to back up the content. Accordingly, the metadata management server 2000 may download the content from the device 1000.

In operation S3010, the metadata management server 2000 determines the cloud storage 3000 in which the content is to be backed up. The metadata management server 2000 may identify a type of the content and capacity of the content. Also, the metadata management server 2000 may identify a size of an available space of the cloud storage 3000 to which the user is subscribed, wherein the available space is assigned to the user. Also, the metadata management server 2000 may determine the cloud storage 3000 in which the content is to be backed up based on the type of the content, the capacity of the content, and the size of the available space of the cloud storage 3000.

In operation S3020, the metadata management server 2000 requests the determined cloud storage 3000 to back up the content. The metadata management server 2000 may transmit the content received from the device 1000 to the determined cloud storage 3000 while requesting the determined cloud storage 3000 to back up the content.

In operation S3030, the metadata management server 2000 notifies the device 1000 that the content is backed up. After the content is backed up in the cloud storage 3000, the metadata management server 2000 may receive a signal indicating that the content is backed up from the cloud storage 3000. Then, the metadata management server 2000 may notify the device 1000 that the content is backed up. Then, the device 1000 may delete the content in the device 1000. Also, the metadata management server 2000 may add, to metadata corresponding to the backed up content, data that the content is backed up and a location value of the backed up content.

In FIG. 30, the metadata management server 2000 receives the content from the device 1000, and transmits the received content to the cloud storage 3000, but an exemplary embodiment is not limited thereto. The metadata management server 2000 may determine the cloud storage 3000 in which the content is to be backed up and transmit an ID value of the cloud storage 3000 to the device 1000, and the device 1000 may transmit the content to the cloud storage 3000. In this case, the device 1000 may notify the metadata management server 2000 that the content is backed up.

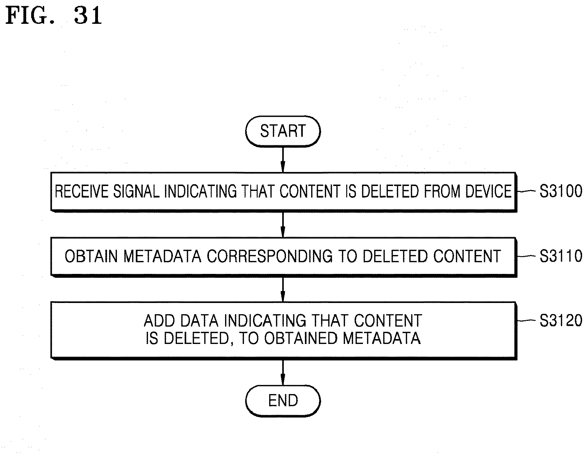

FIG. 31 is a flowchart of a method of adjusting, by the metadata management server 2000, metadata of content as content in the device 1000 is deleted, according to an exemplary embodiment.

In operation S3100, the metadata management server 2000 receives a signal indicating that content in the device 1000 is deleted. As the content is deleted without being backed up, the device 1000 may provide the signal indicating that the content is deleted to the metadata management server 2000.

In operation S3110, the metadata management server 2000 obtains metadata corresponding to the deleted content. The metadata management server 2000 may receive the metadata corresponding to the deleted content from the cloud storage 3000 based on an ID value of the content.

In operation S3120, the metadata management server 2000 adds data indicating that the content is deleted, to the obtained metadata. When the data indicating that the content is deleted is added to the obtained metadata, an icon indicating that the deleted content is deleted may be displayed around the deleted content when the deleted content is displayed on a list of content in a UI for searching for content and a UI for sharing content, the Uls provided by the metadata management server.

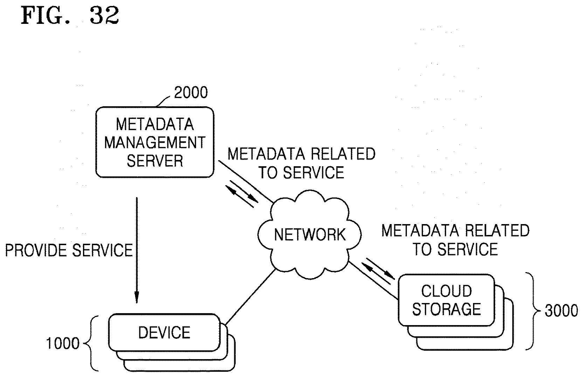

FIG. 32 is a diagram for describing an example of the device 1000 receiving a service provided by the metadata management server 2000, according to an exemplary embodiment.

Referring to FIG. 32, the metadata management server 2000 according to an exemplary embodiment may provide a service of the metadata management server 2000 to the device 1000 by using metadata related to the service from among metadata stored in the cloud storage 3000.

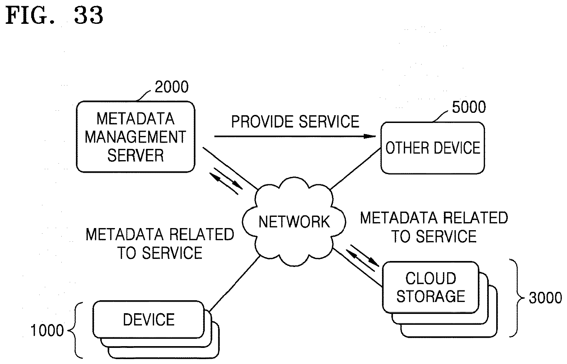

FIG. 33 is a diagram for describing an example of another device 5000 of a user receiving a service provided by the metadata management server 2000, according to an exemplary embodiment. Hereinafter, for convenience of description, the user of the other device 5000 will be referred to as a second user.

Referring to FIG. 33, the metadata management server 2000 according to an exemplary embodiment may provide a service of the metadata management server 2000 to the other device 5000 by using metadata related to the service from among metadata stored in the cloud storage 3000.

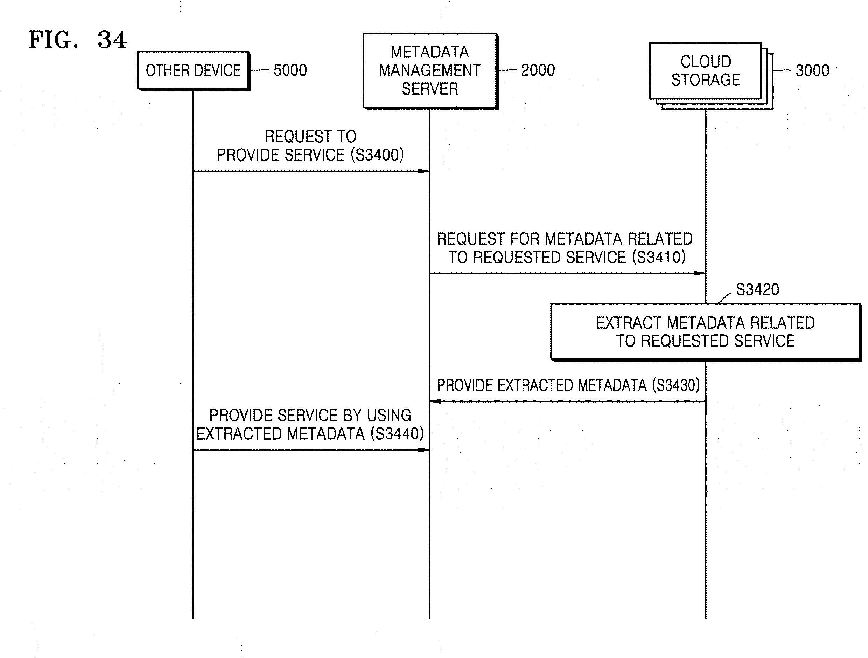

FIG. 34 is a flowchart of a method of providing, by the metadata management server 2000, a service to the other device 5000, according to an exemplary embodiment.

In operation S3400, the other device 5000 requests the metadata management server 2000 for a service. The other device 5000 may select at least one of services provided by the metadata management server 2000, and request the metadata management server 2000 for the selected at least one service.

In this case, the other device 5000 may receive an application program interface (API) for using a service from the metadata management server 2000, and request the metadata management server 2000 for the service by using the API. The service may be provided by using metadata stored in the cloud storage 3000. Examples of the service may include a broadcasting service, a content sharing service, a content providing service, a content search service, a device control service, a power managing service, a game providing service, a chatting service, a document preparing service, a search service, a phone call service, a photographing service, a transportation recommending service, and a video reproducing service. Also, the API provided to the other device 5000 by the metadata management server 2000 may include, for example, at least one of an API for searching for metadata, an API for searching for a location of content corresponding to metadata, an API for controlling the device 1000, and an API for searching for backup data of content corresponding to metadata, but is not limited thereto.

In operation S3410, the metadata management server 2000 requests the cloud storage 3000 for metadata related to the requested service. The metadata management server 200 may request the cloud storage 3000 for the metadata related to the requested service based on, for example, an ID value of the other device 5000, an ID value of the second user of the other device 5000, and a type of the requested service.

In operation S3420, the cloud storage 3000 extracts the metadata related to the requested service. The cloud storage 3000 may extract the metadata related to the requested service, the other device 5000, and the second user, based on, for example, the ID value of the other device 5000, the ID value of the second user, and the type of the requested service.

In operation S3430, the cloud storage 3000 may provide the extracted metadata to the metadata management server 2000, and in operation S3440, the metadata management server 2000 may provide the service of the metadata management server 2000 to the other device 5000 by using the received metadata.

In FIG. 34, the other device 5000 requests the metadata management server 2000 for the service and receives the service from the metadata management server 2000, but an exemplary embodiment is not limited thereto. The device 1000 may request the metadata management server 2000 for the service and receive the service from the metadata management server 2000 in the same manner described above with reference to the method of FIG. 34.

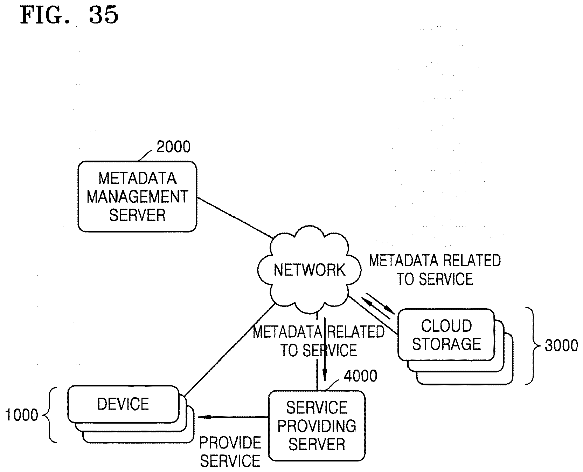

FIG. 35 is a diagram for describing an example of the device 1000 receiving a service provided by the service providing server 4000, according to an exemplary embodiment.

Referring to FIG. 35, the service providing server 4000 according to an exemplary embodiment may provide a service of the service providing server 4000 to the device 1000 by using metadata related to the service from among metadata stored in the cloud storage 3000.

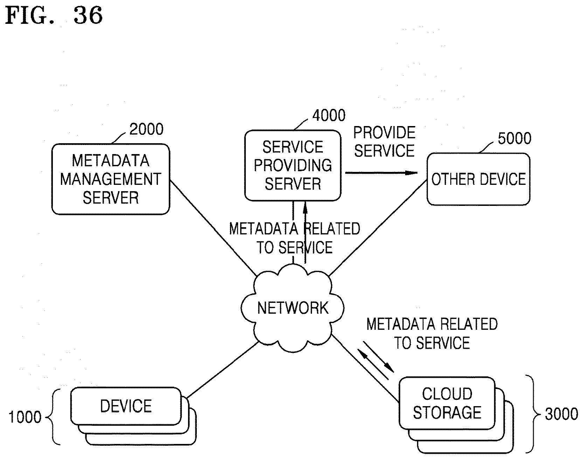

FIG. 36 is a diagram for describing an example of the other device 5000 receiving a service provided by the service providing server 4000, according to an exemplary embodiment.

Referring to FIG. 36, the service providing server 4000 according to an exemplary embodiment may provide a service of the service providing server 4000 to the other device 5000 by using metadata related to the service from among metadata stored in the cloud storage 3000.

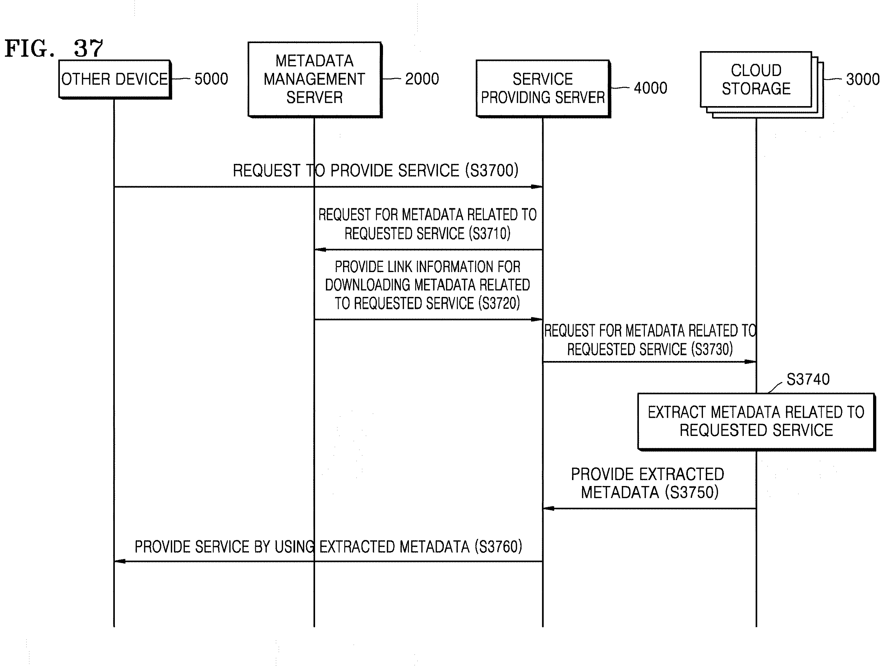

FIG. 37 is a flowchart of a method of providing, by the service providing server 4000, a service to the other device 5000, according to an exemplary embodiment. In FIG. 37, the service providing server 4000 may obtain metadata related to a service of the service providing server 4000 from the cloud storage 3000.

In operation S3700, the other device 5000 requests the service providing server 4000 for a service. The other device 5000 may select at least one of services provided by the service providing server 4000, and request the service providing server 4000 for the selected at least one service.

In this case, the other device 5000 may receive an API for using a service from the metadata management server 2000, and request the service providing server 4000 for the service by using the API. The service may be provided by using metadata stored in the cloud storage 3000. Examples of the service may include a broadcasting service, a content sharing service, a content providing service, a content search service, a device control service, a power managing service, a game providing service, a chatting service, a document preparing service, a search service, a phone call service, a photographing service, a transportation recommending service, and a video reproducing service. Also, the API provided to the other device 5000 by the metadata management server 2000 may include, for example, at least one of an API for searching for metadata, an API for searching for a location of content corresponding to metadata, an API for controlling the device 1000, and an API for searching for backup data of content corresponding to metadata, but is not limited thereto.

In operation S3710, the service providing server 4000 may request the metadata management server 2000 for metadata related to the requested service. In this case, the service providing server 4000 may transmit an ID value of the service providing server 4000, an ID value of the service of the service providing server 4000, an ID value of the other device 5000, and an ID value of the second user of the other device 5000 to the metadata management server 2000.

In operation S3720, the metadata management server 2000 provides link information for downloading the metadata related to the requested service to the service providing server 4000. The metadata management server 2000 may determine the metadata to be provided to the service providing server 4000 based on the ID value of the service providing server 4000, the ID value of the service of the service providing server 4000, the ID value of the other device 5000, and the ID value of the second user of the other device 5000. However, an exemplary embodiment is not limited thereto, and the metadata management server 2000 may receive a type or an ID value of metadata from the service providing server 4000, and determine metadata corresponding to the received type or ID value.

Also, the metadata management server 2000 may transmit the link information for downloading the determined metadata to the service providing server 4000. The link information for downloading the determined metadata may be, for example, an address value of the cloud storage 3000 storing the determined metadata.

In operation S3730, the service providing server 4000 requests the cloud storage 3000 for the metadata related to the requested service. The service providing server 4000 may request the cloud storage 3000 for the metadata related to the requested service by using the link information received from the metadata management server 2000.

In operation S3740, the cloud storage 3000 may extract the metadata related to the requested service, and in operation S3750, the cloud storage 3000 provides the extracted metadata to the service providing server 4000. Then, in operation S3760, the service providing server 4000 provides the service of the service providing server 4000 to the other device 5000 by using the received metadata.

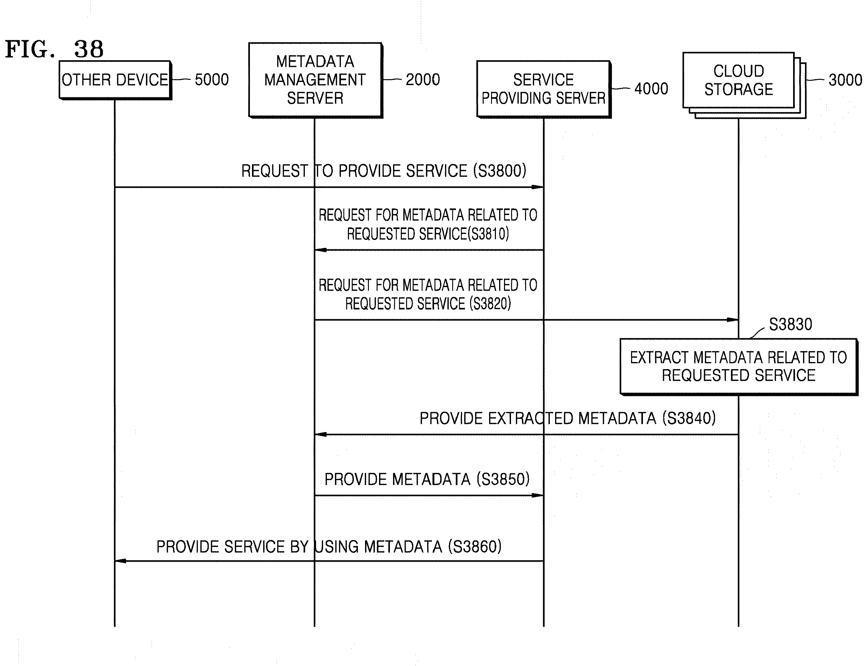

FIG. 38 is a flowchart of a method of providing, by the service providing server 4000, a service to the other device 5000, according to another exemplary embodiment. In FIG. 38, the service providing server 4000 may obtain metadata related to a service of the service providing server 4000 from the metadata management server 2000.

Since operations S3800 and S3810 of FIG. 38 respectively correspond to operations S3700 and S3710 of FIG. 37, details thereof are not provided again.

In operation S3820, the metadata management server 2000 requests the cloud storage 3000 for the metadata related to the requested service. The metadata management server 2000 may determine the metadata to be provided to the service providing server 4000 based on an ID value of the service providing server 4000, an ID value of the service of the service providing server 4000, an ID value of the other device 5000, and an ID value of the second user of the other device 5000. However, an exemplary embodiment is not limited thereto, and the metadata management server 2000 may receive a type or ID value of metadata from the service providing server 4000, and determine metadata corresponding to the received type or ID value. Then, the metadata management server 2000 may request the cloud storage 3000 for the determined metadata.

In operation S3830, the cloud storage 3000 extracts the metadata related to the requested service, and in operation S3840, the cloud storage 3000 provides the extracted metadata to the metadata management server 2000.

In operation S3850, the metadata management server 2000 provides the metadata to the service providing server 4000, and in operation S3860, the service providing server 4000 provides the service of the service providing server 4000 to the other device 5000 by using the received metadata.

In FIGS. 37 and 38, the other device 5000 requests the service providing server 4000 for a service and receives the service from the service providing server 4000, but an exemplary embodiment is not limited thereto. The device 1000 may request the service providing server 4000 for a service, and receive the service from the service providing server 4000.

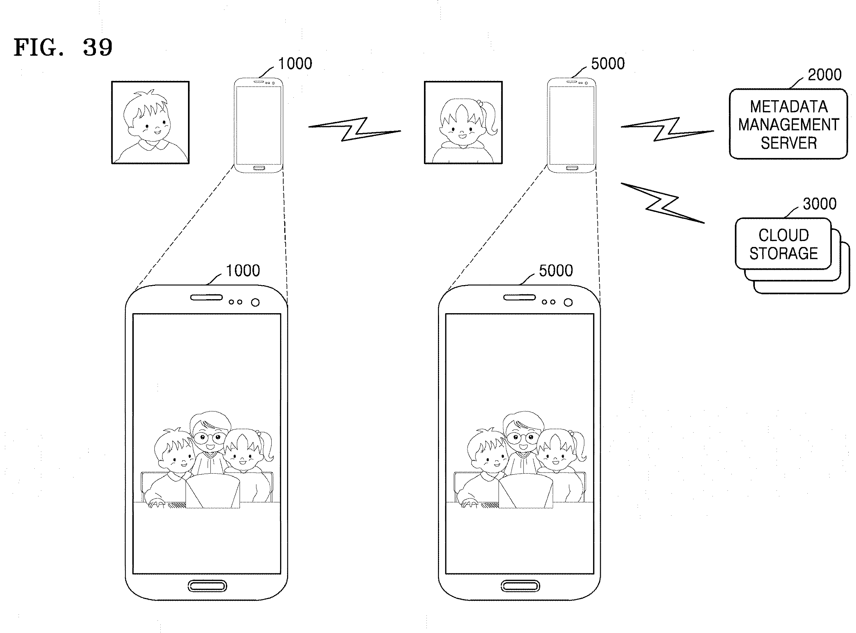

FIG. 39 is a diagram for describing an example of the other device 5000 using content of the device 1000 by using metadata in the cloud storage 3000, according to an exemplary embodiment.

Referring to FIG. 39, the other device 5000 may receive link information for using content stored in the device 1000 from the metadata management server 2000, and receive and execute the content from the device 1000. In this case, the metadata management server 2000 may provide the link information for using the content stored in the device 1000 to the other device 5000 based on the metadata stored in the cloud storage 3000.

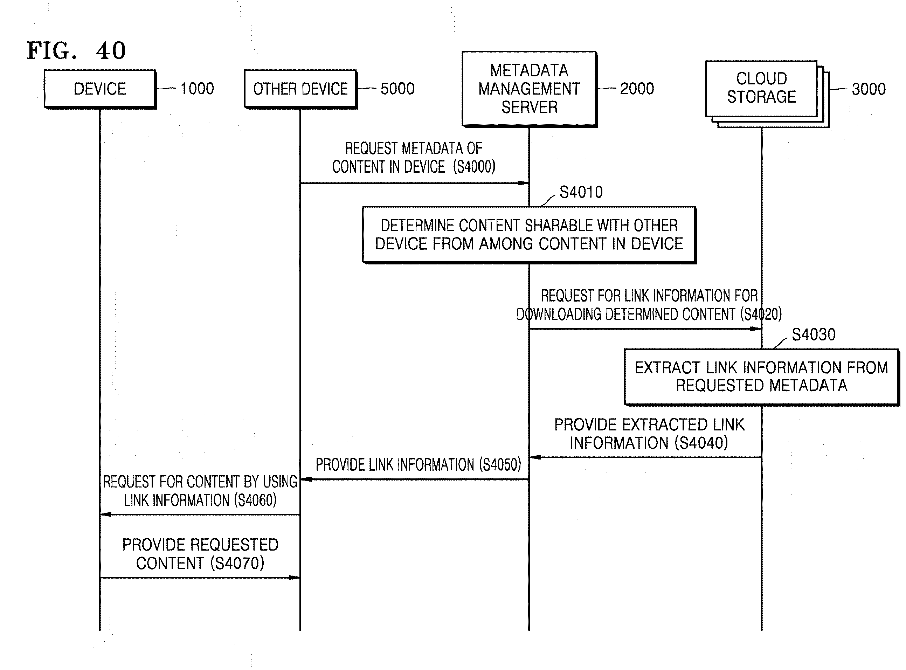

FIG. 40 is a flowchart of a method of using, by the other device 5000, content stored in the device 1000, according to an exemplary embodiment.

In operation S4000, the other device 5000 requests the metadata management server 2000 for metadata of content in the device 1000. For example, the other device 5000 may request the metadata management server 2000 for list of content in the device 1000 and link information for downloading the content.

In operation S4010, the metadata management server 2000 determines content sharable with the other device 5000 from among the content in the device 1000. The metadata management server 2000 may determine the content sharable with the other device 5000 from among the content in the device 1000, based on a service ID of the second user of the other device 5000 and a service ID of the user of the device 1000. Here, the second user capable of using the content in the device 1000 may be pre-set.

In operation S4020, the metadata management server 2000 requests the cloud storage 3000 for link information for downloading the determined content, and in operation S4030, the cloud storage 3000 extracts the link information from the requested metadata of the content.

In operation S4040, the cloud storage 3000 provides the extracted link information to the metadata management server 2000. The extracted link information may be information for accessing the determined content in the device 1000.

In operation S4050, the metadata management server 2000 provides a list of the determined content and the link information for downloading the determined content to the other device 5000.

In operation S4060, the other device 5000 requests the device 1000 for the content by using the received link information. The other device 5000 may select certain content from the list of the determined content, and request the device 1000 for the certain content.

In operation S4070, the device 1000 provides the requested content to the other device 5000.

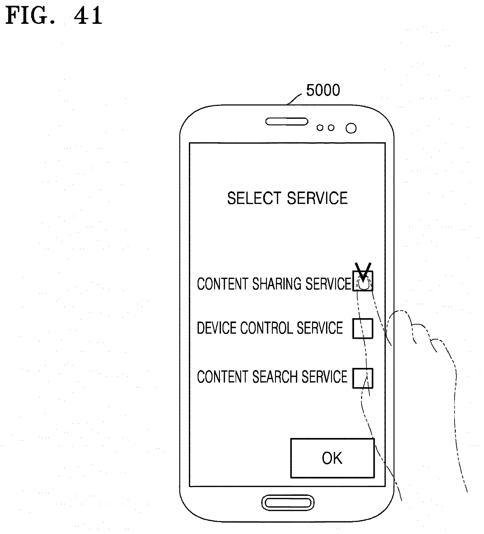

FIGS. 41 through 45 are diagrams for describing examples of the other device 5000 using content in the device 1000, according to exemplary embodiments.

FIG. 41 is a diagram for describing an example of the other device 5000 selecting a service provided by the metadata management server 2000, according to an exemplary embodiment.

Referring to FIG. 41, the other device 5000 according to an exemplary embodiment may display a selection list of services, and select a certain service based on a user input. For example, the other device 5000 may display "content sharing service", "device control service", and "content search service", and "content sharing service" may be selected based on a user input.

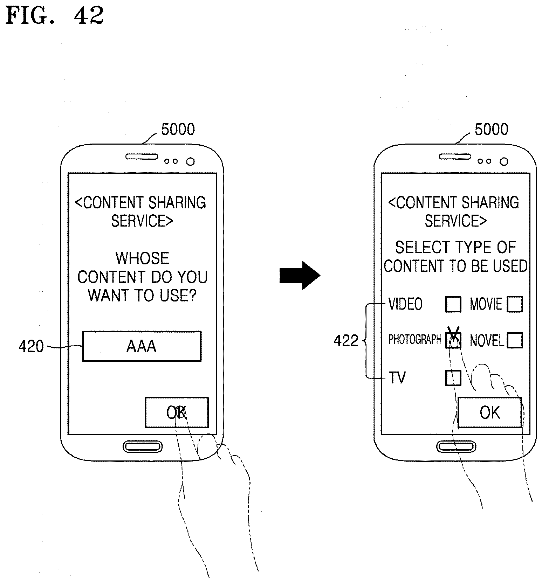

FIG. 42 is a diagram for describing an example of the other device 5000 displaying an input window 420 for inputting a user ID, and displaying a selection list 422 for selecting a type of content, according to an exemplary embodiment.

Referring to FIG. 42, when "content sharing service" is selected in FIG. 41, the other device 5000 may display, on a screen of the other device 5000, the input window 420 for inputting a user ID of a user who owns content. Then, the second user of the other device 5000 may input, for example, a user ID "AAA" to the input window 420.

When the user ID "AAA" is input, the other device 5000 may display the selection list 422 for selecting a type of content of a user having the user ID "AAA". Then, for example, the other device 5000 may select "photograph" based on a user input.

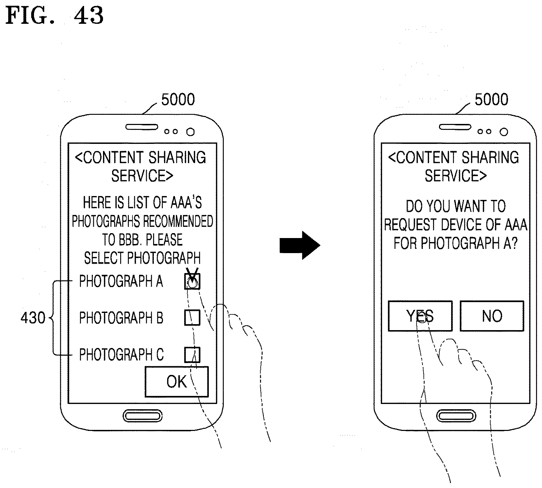

FIG. 43 is a diagram for describing an example of the other device 5000 displaying a selection list 430 for selecting a photograph of the user having the user ID "AAA", and requesting a device of the user having the user ID "AAA", for example, the device 1000, for a photograph, according to an exemplary embodiment.

Referring to FIG. 43, when "photograph" is selected in FIG. 42, the other device 5000 may display the selection list 430 for selecting a photograph of the user having the user ID "AAA". Then, the other device 5000 may select "photograph A" based on a user input.

When "photograph A" is selected, the other device 5000 may display, on the screen, a confirmation message "Do you want to request device of AAA for photograph A?", and request the device 1000 for "photograph A" based on a user input. In this case, the other device 5000 may pre-receive and store information for requesting the device 1000 for "photograph A" from the metadata management server 2000.

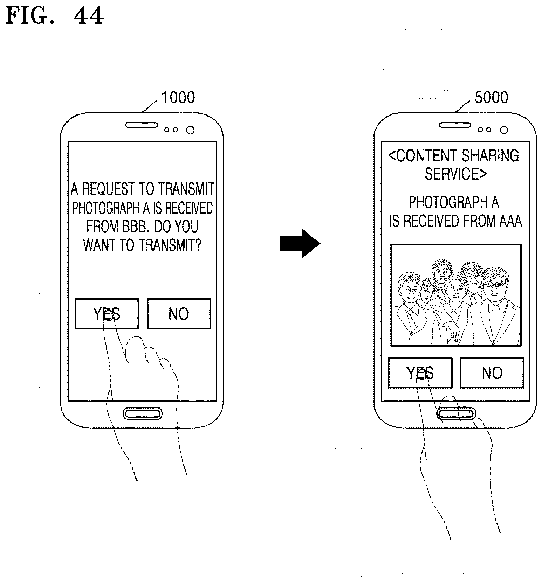

FIG. 44 is a diagram for describing an example of the device 1000 displaying a message for transmitting a photograph to the other device 5000, and the other device 5000 displaying the photograph received from the device 1000, according to an exemplary embodiment.

Referring to FIG. 44, the device 1000 may receive a request for "photograph A" from the other device 5000, and display a message "A request to transmit photograph A is received from BBB. Do you want to transmit?". Then, the device 1000 may transmit "photograph A' to the other device 5000 based on a user input.

The other device 5000 may receive "photograph A" from the device 1000, and display, on the screen, "photograph A".

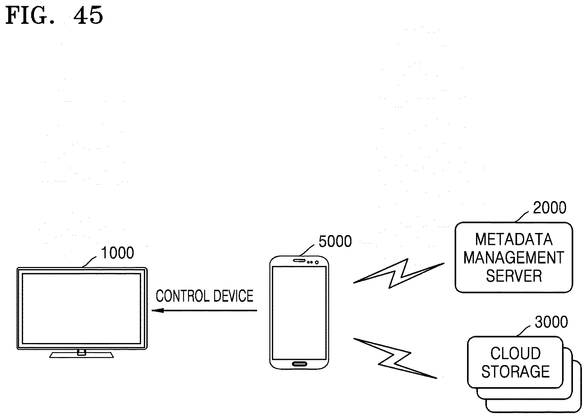

FIG. 45 is a diagram for describing an example of the other device 5000 controlling the device 1000 by using metadata in the cloud storage 3000, according to an exemplary embodiment.

Referring to FIG. 45, the other device 5000 may receive a control command for controlling the device 1000 from the metadata management server 2000, and remotely control the device 1000. At this time, the metadata management server 2000 may provide the control command for controlling the device 1000 to the other device 5000 based on the metadata stored in the cloud storage 3000.

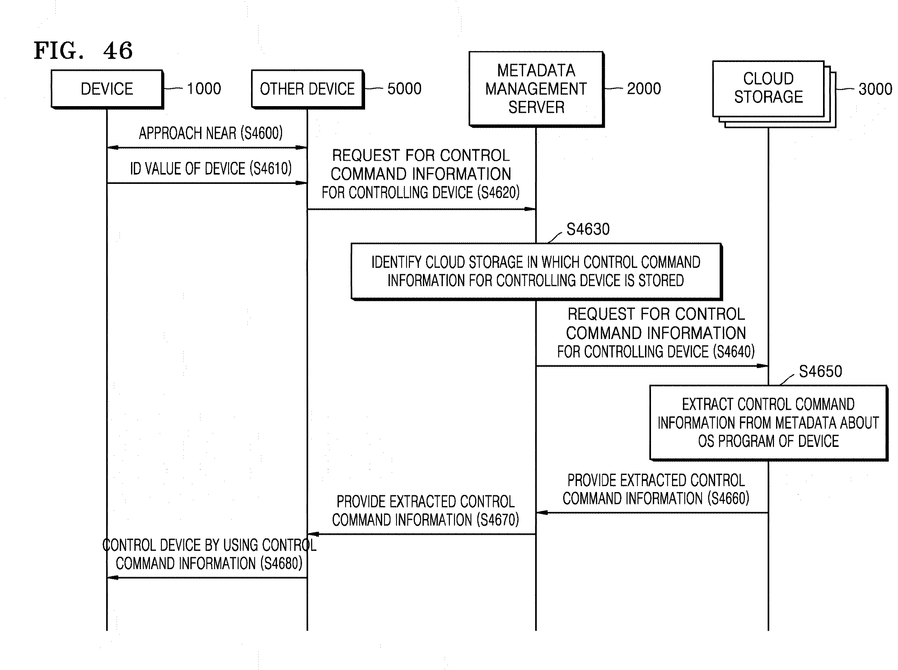

FIG. 46 is a flowchart of a method of controlling, by the other device 5000, the device 1000 by using metadata in the cloud storage 3000, according to an exemplary embodiment. In FIG. 46, a target to be controlled by the other device 5000 may be determined as the other device 5000 receives an ID value of the device 1000 from the device 1000.

In operation S4600, the other device 5000 approaches the device 1000. As the other device 5000 is located within a short-range communication range, the other device 5000 may establish short-range communication with the device 1000.

In operation S4610, the other device 5000 receives an ID value of the device 1000 from the device 1000, and in operation S4620, the other device 5000 requests the metadata management server 2000 for control command information for controlling the device 1000. While requesting for the control command information, the other device 5000 may transmit the ID value of the device 1000 to the metadata management server 2000.

In operation S4630, the metadata management server 2000 identifies the cloud storage 3000 in which the control command information for controlling the device 1000 is stored. The metadata management server 2000 may identify the cloud storage 3000 in which the control command information is stored based on the ID value of the device 1000.

In operation S4640, the metadata management server 2000 requests the identified cloud storage 3000 for the control command information, and in operation S4650, the cloud storage 3000 extracts the control command information from metadata about an OS program of the device 1000.

In operation S4660, the cloud storage 3000 provides the extracted control command information and information for accessing the device 1000 to the metadata management server 2000, and in operation S4670, the metadata management server 2000 provides the control command information and the information for accessing the device 1000 to the other device 5000. The information for accessing the device 1000 may include, for example, an internet protocol (IP) address and a phone number of the device 1000.

In operation S4680, the other device 5000 controls the device 1000 by using the control command information. In this case, the other device 5000 may transmit a control command to the device 1000 by using the information for accessing the device 1000.

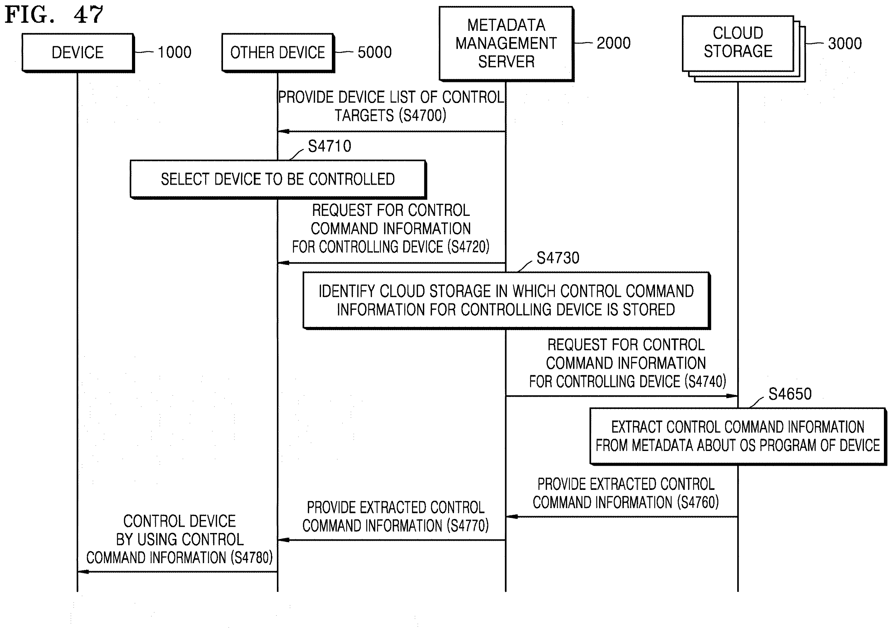

FIG. 47 is a flowchart of a method of controlling, by the other device 5000, the device 1000 by using metadata in the cloud storage 3000, according to another exemplary embodiment. In FIG. 47, a target to be controlled by the other device 5000 may be determined as the other device 5000 receives an ID value of the device 1000 from the metadata management server 2000.

In operation S4700, the other device 5000 receives a device list of control targets from the metadata management server 2000. The metadata management server 2000 may provide the device list of control targets to the other device 5000 in response to a request from the other device 5000.

In operation S4710, the other device 5000 selects the device 1000 from the device list received from the metadata management server 2000. Also, the other device 5000 may identify an ID value of the device 1000.

Since operations S4720 through S4780 are similar to operations S4620 through S4680 of FIG. 46, details thereof are not provided again.

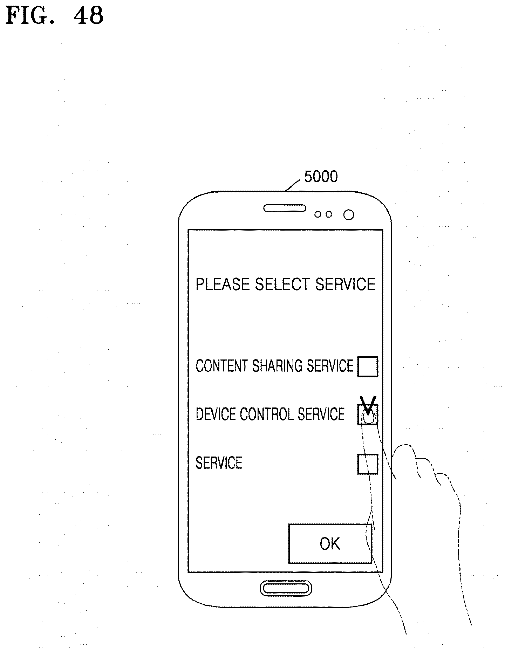

FIGS. 48 through 51 are diagrams for describing examples of the other device 5000 controlling the device 1000 based on a user input, according to an exemplary embodiment.

FIG. 48 is a diagram for describing an example of the other device 5000 selecting a service provided by the metadata management server 2000, according to an exemplary embodiment.

Referring to FIG. 48, the other device 5000 according to an exemplary embodiment may display a selection list of services, and select a certain service based on a user input. For example, the other device 5000 may display "content sharing service", "device control service", and "content search service", and "device control service" may be selected based on a user input.

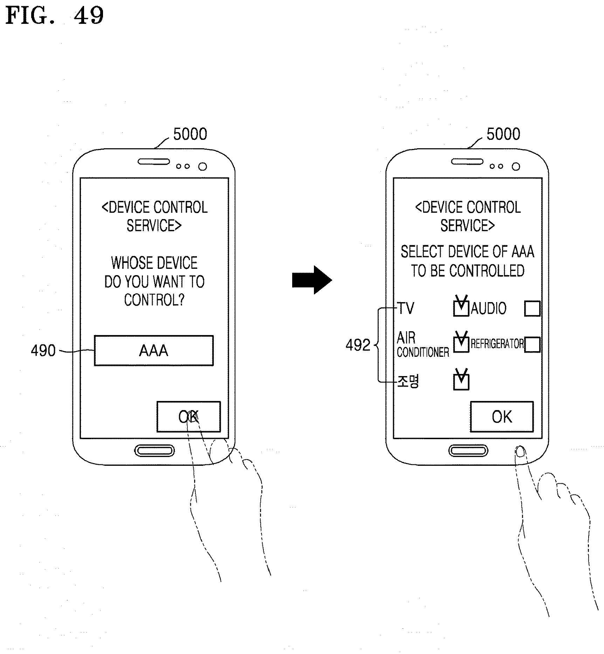

FIG. 49 is a diagram for describing an example of the other device 5000 displaying an input window 490 for inputting a user ID, and displaying a selection list 492 for selecting the device 1000.

Referring to FIG. 49, when "device control service" is selected in FIG. 48, the other device 5000 may display, on the screen, the input window 490 for inputting a user ID of the user of the device 1000. Then, the second user of the other device 5000 may input, for example, a user ID "AAA", to the input window 490.

When the user ID "AAA" is input, the other device 5000 may display the selection list 492 for selecting a device of a user having the user ID "AAA", for example, the device 1000. Then, for example, the other device 5000 may select "TV", "air conditioner", and "lighting" based on a user input.

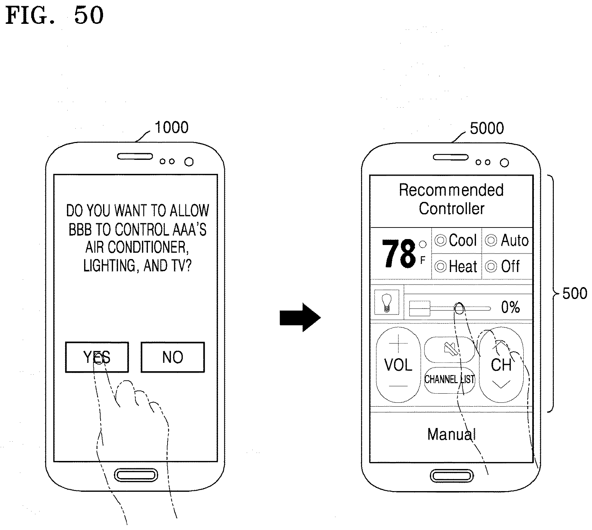

FIG. 50 is a diagram for describing an example of the device 1000 displaying a message for allowing the other device 5000 to control "TV", "air conditioner", and "lighting" of the user of the device 1000, and the other device 5000 displaying a UI for controlling "TV", "air conditioner", and "lighting", according to an exemplary embodiment.

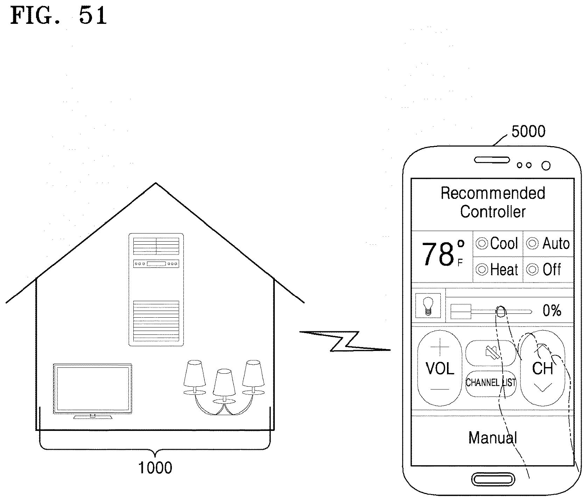

Referring to FIG. 50, the device 1000 receives a control grant request from the other device 5000, and display a message "allow BBB to control air conditioner, lighting, and TV of AAA?". Then, the device 1000 may allow the other device 5000 to control "TV", "air conditioner", and "lighting" based on a user input, as shown in FIG. 51.

Also, the other device 5000 may receive a signal allowing control from the device 1000, and display, on the screen, a UI 500 for controlling "TV", "air conditioner", and "lighting".

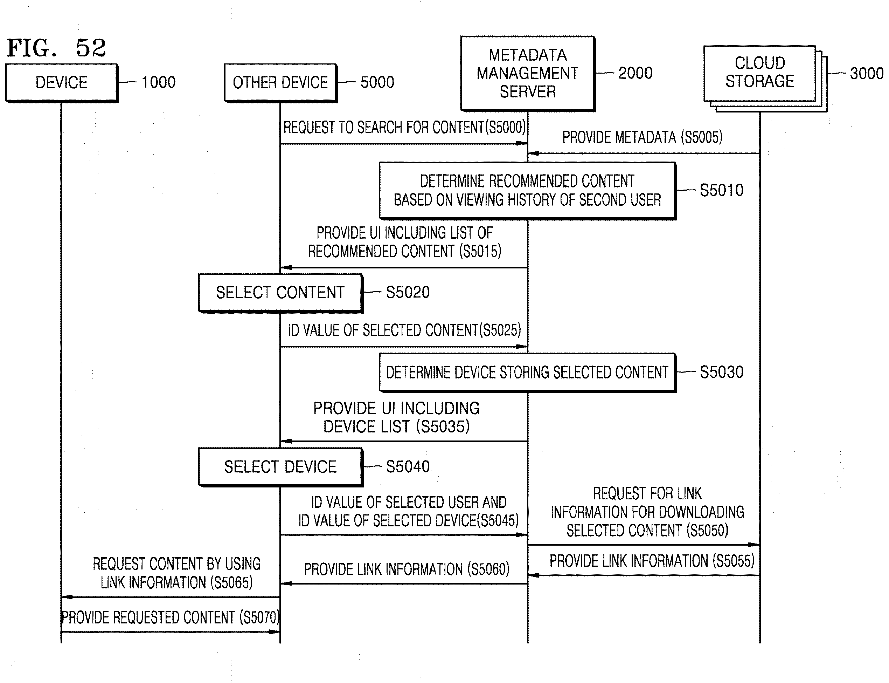

FIG. 52 is a flowchart of a method of searching for, by the other device 5000, content through the metadata management server 2000, according to an exemplary embodiment.

In operation S5000, the other device 5000 requests the metadata management server 2000 to search for content. The other device 5000 may request the metadata management server 2000 to search for content while providing, for example, a type of content and an ID value of the second user of the other device 5000.

In operation S5005, the cloud storage 3000 provides metadata to the metadata management server 2000. The cloud storage 3000 may transmit metadata of the second user, which is stored in the cloud storage 3000, to the metadata management server 2000.

In operation S5010, the metadata management server 2000 determines recommended content based on a viewing history of the second user. The metadata management server 2000 may extract viewing history information of the second user from the metadata received from the cloud storage 3000, and determine the recommended content by using the extracted viewing history information.

In operation S5015, the metadata management server 2000 may provide a UI including a list of recommended content to the other device 5000, in operation S5020, the other device 5000 selects at least one content from the list, and in operation S5025, the other device 5000 transmits an ID value of the selected content to the metadata management server 2000.

In operation S5030, the metadata management server 2000 determines the device 1000 storing the selected content. The metadata management server 2000 may identify and select the device 1000 storing the selected content by using the metadata received in operation S5005.

In operation S5035, the metadata management server 2000 provides a UI including a device list to the other device 5000, in operation S5040, the other device 5000 selects at least one device from the device list, for example, the device 1000, and in operation S5045, the other device 5000 transmits an ID value of the device 1000 to the metadata management server 2000.

In operation S5050, the metadata management server 2000 requests the cloud storage 3000 for link information for downloading the selected content, and in operation S5055, the cloud storage 3000 extracts the link information from the metadata and provides the extracted link information to the metadata management server 2000. The extracted link information may be information for accessing the determined content in the device 1000.

In operation S5060, the metadata management server 2000 provides the received link information to the other device 5000, and in operation 5065, the other device 5000 requests the device 1000 for the content by using the received link information. In operation S5070, the device 1000 provides the requested content to the other device 5000.

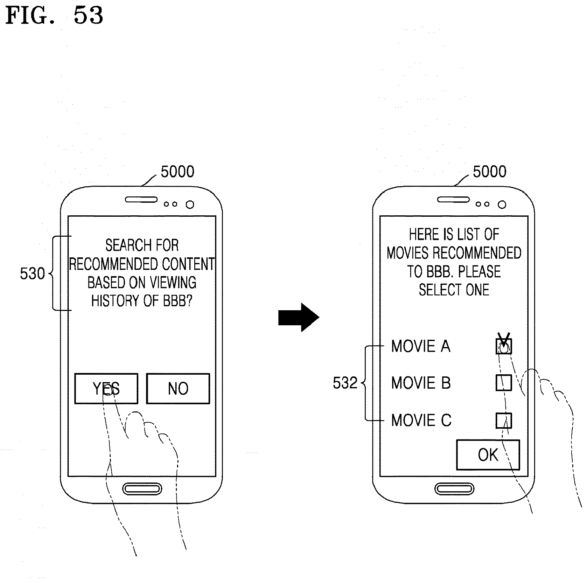

FIGS. 53 through 55 are diagrams for describing an example of the other device 5000 searching for content through the metadata management server 2000 and receiving found content from the device 1000, according to an exemplary embodiment.

FIG. 53 is a diagram for describing an example of the other device 5000 starting to search for content, and displaying a list 532 of recommended content, according to an exemplary embodiment.

Referring to FIG. 53, the other device 5000 may display, on the screen, a message 530 initiating a search for content, and request the metadata management server 2000 to search for content based on a user input.

Then, the other device 5000 may receive the list 532 of recommended content from the metadata management server 2000, and display the received list 532. Also, the other device 5000 may select "movie A" based on a user input.

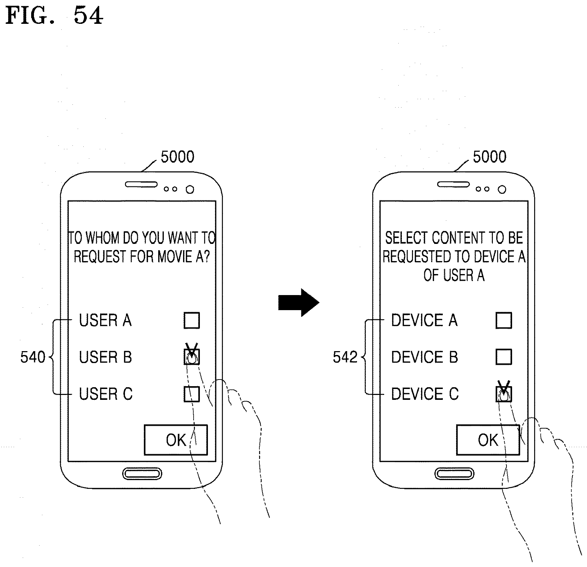

FIG. 54 is a diagram for describing an example of the other device 5000 displaying a user list 540 of users who own "movie A", and a list 542 of the devices 1000 storing "movie A", according to an exemplary embodiment.

Referring to FIG. 54, when "movie A" is selected in FIG. 53, the metadata management server 2000 may generate the user list 540 of users who own "movie A" by using metadata stored in the cloud storage 3000, and transmit the user list 540 to the other device 5000. The other device 5000 may display, on the screen, the user list 540 received from the metadata management server 2000. Also, the other device 5000 may select "user B" based on a user input.

When "user B" is selected, the metadata management server 2000 may transmit the list 542 of the devices 1000 of the user B, which store "movie A", to the other device 5000, and the other device 500 may display, on the screen, the received list 542. Also, the other device 5000 may select "device C" based on a user input.

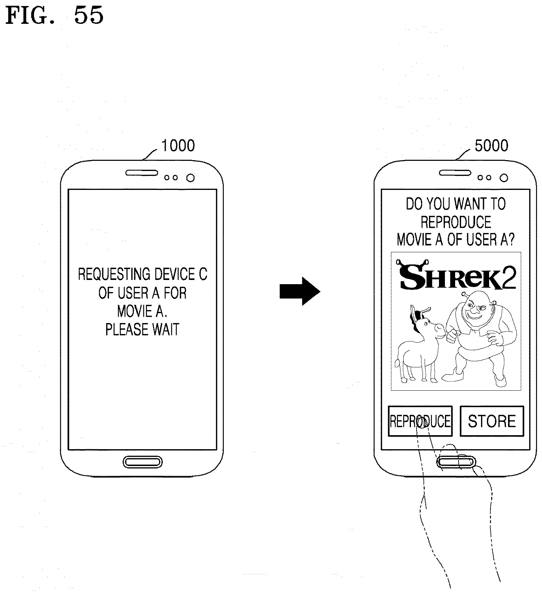

FIG. 55 is a diagram for describing an example of the other device 5000 requesting "device C" for "movie A" and receiving "movie A", according to an exemplary embodiment.

Referring to FIG. 55, when "device C" is selected in FIG. 54, the other device 5000 may request "device C" for "movie A". Also, the other device 5000 may reproduce "movie A" received from "device C".

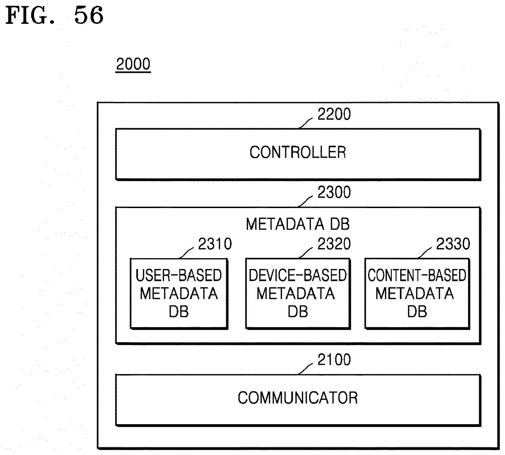

FIG. 56 is a block diagram of the metadata management server 2000 according to an exemplary embodiment.

Referring to FIG. 56, the metadata management server 2000 according to an exemplary embodiment includes a communicator 2100, a controller 2200, and a metadata DB 2300.

The communicator 2100 may include at least one component enabling at least one of the device 1000, the other device 5000, and the service providing server 4000 to communicate with the metadata management server 2000. The communicator 2100 may transmit and receive information required for the metadata management server 2000 to separately manage metadata of content of the device 1000 to and from at least one of the device 1000, the other device 5000, and the service providing server 4000.

In order for the metadata management server 2000 to perform operations described above with reference to FIGS. 1 through 55, the controller 2200 may control the operations of the metadata management server 2000. The controller 2200 may control the metadata DB 2300 that is described later and the communicator 2100 such that the metadata management server 2000 separately stores and manages only metadata related to content of the device 1000 in the cloud storage 3000.

The controller 2200 may control the communicator 2100 such that metadata of content in the at least one device 1000 of the user is received from each device 1000. The controller 2200 may receive only the metadata of the content in the device 1000 from each device 1000.

The controller 2200 may classify the metadata received from the device 1000. For example, the controller 2200 may process and classify the metadata received from the device 1000 into user-based metadata, device-based metadata, and content-based metadata.

The controller 2200 may determine the at least one cloud storage 3000 to which the user is subscribed. The controller 2200 may identify the at least one cloud storage 3000 to which the user is subscribed based on user information of the user, and determine the cloud storage 3000 for storing the metadata from among the identified at least one cloud storage 3000. Also, the controller 2200 may determine the cloud storage 3000 for storing the metadata based on, for example, a type of content, a type of metadata, a type of a device, or a size of an available space of the cloud storage 3000.

The controller 2200 may control the communicator 2100 to transmit the metadata to the determined cloud storage 3000. The controller 2200 may transmit the metadata to the cloud storage 3000, and match and manage an ID value of the metadata and an ID value of the cloud storage 3000.

The controller 2200 may provide a UI for searching for metadata stored in the cloud storage 3000 to the device 1000 or the other device 5000.

Meanwhile, the controller 2200 may add supplementary data to the metadata. The controller 2200 may add the supplementary data to the metadata by using various types of information collected by the metadata management server 2000 such that the metadata is abundant. For example, the controller 2200 may add a list of acquaintances who like content stored in the device 1000, from among acquaintances of the user of the device 1000, to the metadata. In other exemplary embodiments, for example, the controller 2200 may add a recommendation list of other content liked by another user who likes the content stored in the device 1000. In other exemplary embodiments, for example, the controller 2200 may obtain used ranking information of the content stored in the device 1000, and add the obtained used ranking information to the metadata.

The controller 2200 may monitor a network situation of the device 1000 that provided the metadata, and add information about the network situation of the device 1000 to the metadata, as the supplementary data. The network situation may include, for example, information about whether a network function of the device 1000 is activated, whether the device 1000 is connectable to another device through a network, and about a type of a network used by the device 1000.

In other exemplary embodiments, the supplementary data may be related to a service provided by the metadata management server 2000. The controller 2200 may request the service providing server 4000 to add the supplementary data to the metadata. In this case, the service providing server 4000 may extract data related to the service of the service providing server 4000 from the metadata, and add supplementary data about the service of the service providing server 4000 to the extracted data. Also, the service providing server 4000 may provide the metadata to which the supplementary data is added to the metadata management server 2000.

Meanwhile, the controller 2200 may determine the cloud storage 3000 in which the content is to be backed up. The controller 2200 may identify the type and capacity of the content. Also, the controller 2200 may identify a size of an available space of the cloud storage 3000 to which the user is subscribed, the available space assigned to the user. The controller 2200 may determine the cloud storage 3000 in which the content is to be backed up based on the type of the content, the capacity of the content, and the available space of the cloud storage 3000.

The controller 2200 may request the determined cloud storage 3000 to back up the content. The controller 2200 may transmit the content received from the device 1000 to the cloud storage 3000 while requesting the determined cloud storage 3000 to back up the content.

The controller 2200 may notify the device 1000 that the content is backed up. As the content is backed up in the cloud storage 3000, the controller 2200 may receive a signal indicating that the content is backed up from the cloud storage 3000. Also, the controller 2200 may notify the device 1000 that the content is backed up. Then, the device 1000 may delete the content in the device 1000. Also, the controller 2200 may add data indicating that the content is backed up and a location value of the backed up content to metadata corresponding to the backed up content.

Meanwhile, the controller 2200 may provide a service using the metadata separately stored in the cloud storage 3000 to the device 1000 or the other device 5000.

The controller 2200 may provide an API for using a service of the metadata management server 2000 to the device 1000 or the other device 5000. The service may be provided by using the metadata stored in the cloud storage 3000. Examples of the service include a broadcasting service, a content sharing service, a content providing service, a content search service, a device control service, a power managing service, a game providing service, a chatting service, a document preparing service, a search service, a phone call service, a photographing service, a transportation recommending service, and a video reproducing service. Also, the API may include at least one of an API for searching for metadata, an API for searching for a location of content corresponding to metadata, an API for controlling the device 1000, and an API for searching for backup data of content corresponding to metadata, but is not limited thereto.

The controller 2200 may receive a request for a service from the device 1000 or the other device 5000, and obtain metadata related to the requested service from the cloud storage 3000. For example, the controller 2200 may request the cloud storage 3000 for the metadata related to the requested service based on an ID value of the device 1000, an ID value of the user of the device 1000, a type of a service received from the device 1000, an ID value of the other device 5000, an ID value of the second user of the other device 5000, and a type of a service requested by the other device 5000.

The controller 2200 may provide a service of the metadata management server 2000 to the device 1000 or the other device 5000 by using the metadata received from the cloud storage 3000.

In other exemplary embodiments, the controller 2200 may receive a request for a service from the service providing server 4000, and provide link information for downloading metadata related to the requested service to the service providing server 4000. In this case, the service providing server 4000 may obtain metadata from the cloud storage 3000, and provide a service of the service providing server 4000 to the device 1000 or the other device 5000 by using the obtained metadata.

The metadata DB 2300 may store information related to metadata. The metadata DB 2300 may link and store an ID value of metadata received from the device 1000 and an ID value of the cloud storage 3000 storing the metadata. Also, the metadata DB 2300 may store information about a type of supplementary data added to the metadata. The supplementary data added to the metadata may include, for example, information about a network situation of the device 1000 that provided the metadata, information about whether backup data of content corresponding to the metadata is stored, and information about a location where the backup data is stored, but is not limited thereto.

Information related to metadata may be stored in a user-based metadata DB 2310, a device-based metadata DB 2320, or a content-based metadata DB 2330 based on a type of the metadata, but is not limited thereto.

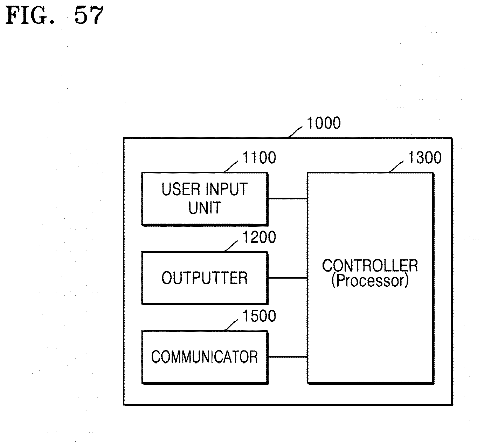

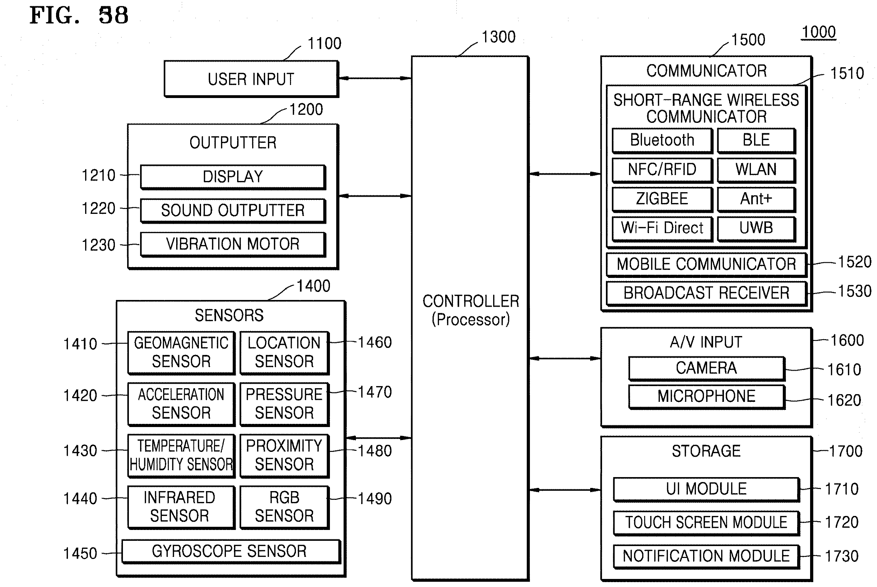

FIGS. 57 and 58 are block diagrams of the device 100 according to exemplary embodiments.

As shown in FIG. 57, the device 1000 according to an exemplary embodiment may include a user input 1100, an outputter 1200, a controller 1300, and a communicator 1500. However, not all illustrated components of FIG. 17 are essential components of the device 1000. The device 1000 may include more or less components than those shown in FIG. 57.

For example, as shown in FIG. 58, the device 1000 according to an exemplary embodiment may further include sensors 1400, an audio/video (AV) input 1600, and a memory 1700 as well as the user input 1100, the outputter 1200, the controller 1300, and the communicator 1500.

The user input 1100 is used by a user to input data for controlling the device 1000. Examples of the user input 1100 include a keypad, a dome switch, a touch pad (a touch capacitance type, a pressure resistance film type, an infrared light detecting type, a surface ultrasound conducting type, an integral tension measuring type, or a piezo-effect type), a jog wheel, and a jog switch, but are not limited thereto.

The outputter 1200 may output an audio signal, a video signal, or a vibration signal, and may include a display 1210, a sound outputter 1220, and a vibration motor 1230.

The display 1210 displays information processed by the device 1000. For example, the display 1210 may display a UI for selecting a virtual image, a UI for setting an operation of the virtual image, and a UI for purchasing an icon of the virtual image.

Meanwhile, when the display 1210 is configured as a touch screen by forming a layer structure with a touch pad, the display 1210 may also be used as an input device as well as an output device. The display 1210 may include at least one of a liquid crystal display (LCD), a thin-film transistor-liquid crystal display (TFT-LCD), an organic light-emitting diode (OLED), a flexible display, a 3D display, and an electrophoretic display. According to an exemplary embodiment of the device 1000, the device 1000 may include at least two displays 1210. Here, the at least two displays 1210 may be disposed to face each other by using a hinge.

The sound outputter 1220 outputs audio data received from the communicator 1500 or stored in the memory 1700. Also, the sound outputter 1220 outputs a sound signal related to a function performed by the device 1000, such as a call signal reception sound, a message reception sound, or an alarm sound. The sound outputter 1220 may include a speaker or a buzzer.

The vibration motor 1230 may output a vibration signal. For example, the vibration motor 1230 may output a vibration signal corresponding to an output of audio data or video data, for example, a call signal reception sound or a message reception sound. Also, the vibration motor 1230 may output a vibration signal when a touch screen is touched.

In order for the device 1000 to perform operations described above with reference to FIGS. 1 through 55, the controller 1300 generally controls overall operations of the device 1000. For example, the controller 1300 may generally control the user input 1100, the outputter 1200, the sensors 1400, the communicator 1500, and the A/V input 1600 by executing programs stored in the memory 1700.

In detail, the controller 1300 may obtain content. The controller 1300 may receive the content from an external apparatus, or generate the content. Examples of the content include a video, a still image, a document, and a photograph. Also, the controller 1300 may, for example, film a video, photograph a photograph, or record voice. Also, for example, the controller 1300 may generate various types of sensing information to content by using a sensor included in the device 1000, such as a position sensor, an illuminance sensor, a motion sensor, a proximity sensor, a humidity sensor, or a communication sensor.

The controller 1300 may execute content, and share the content with another device or a server.

The controller 1300 may obtain metadata of content. When content is generated, received, executed, or transmitted, the controller 1300 may generate metadata related to the generating, receiving, executing, or transmitting of the content. The controller 1300 may receive the metadata that is pre-added to the content from an external source.

Metadata of content may be data added to the content according to a pre-set rule, and may include, for example, a generated location of the content, a reproduction history of the content, a creator of the content, a condition of using the content, a stored location of the content, a history of using the content, and summary information of the content, but is not limited thereto.

The controller 1300 may transmit device information, user information, and metadata to the metadata management server 2000. For example, the controller 1300 may transmit a device name, SSID, a mode name and/or a phone number of the device 1000 to the metadata management server 2000. Also, for example, the controller 1300 may transmit a user name of the user of the device 1000, a service ID of the metadata management server 2000, a service name of the cloud storage 3000 to which the user is subscribed, a service ID of the cloud storage 3000, and a nickname of the cloud storage 3000 to the metadata management server 2000.

The controller 1300 may transmit only metadata of content, from among the content and the metadata of the content, to the metadata management server 2000.

The controller 1300 may receive a user input of deleting content in the device 1000 through the user input 1100, and request the metadata management server 2000 to back up the content. Also, the controller 1300 may provide the content to the metadata management server 2000.

Meanwhile, the controller 1300 may request the metadata management server 2000 for a service. The controller 1300 may select at least one of services provided by the metadata management server 2000, and request the metadata management server 2000 for the selected service. In this case, the controller 1300 may receive an API for using the service from the metadata management server 2000, and request the metadata management server 2000 for the service by using the received API. The service may be provided by using the metadata stored in the cloud storage 3000. The API may include at least one of an API for searching for metadata, an API for searching for a location of content corresponding to the metadata, an API for controlling the other device 5000, and an API for searching for backup data of the content corresponding to the metadata, but is not limited thereto. Then, the controller 1300 may receive a service from the metadata management server 2000.

Meanwhile, the controller 1300 may request the service providing server 4000 for a service, and receive the service from the service providing server 4000. The controller 1300 may select at least one of services provided by the service providing server 4000, and request the service providing server 4000 for the selected service. In this case, the controller 1300 may receive an API for using a service from the metadata management server 2000 or the service providing server 4000, and request and receive the service by using the received API.

The sensors 1400 may detect a state of the device 1000 or a state around the device 1000, and transmit the detected state to the controller 1300.

The sensors 1400 may include at least one of a magnetic sensor 1410, an acceleration sensor 1420, a temperature/humidity sensor 1430, an infrared sensor 1440, a gyroscope sensor 1450, a position sensor 1406 such as a global positioning system (GPS), an atmospheric sensor 1470, a proximity sensor 1408, and an red, green, blue (RGB) sensor 1490 such as an illuminance sensor, but a component included in the sensors 1400 is not limited thereto. Because functions of each sensor may be intuitively inferred by one of ordinary skill in the art based on its name, details thereof are not described herein.

The communicator 1500 may include at least one component enabling the device 1000 to communicate with at least one of the metadata management server 2000, the cloud storage 3000, the service providing server 4000, and the other device 5000. For example, the communicator 1500 may include a short-range wireless communicator 1510, a mobile communicator 1520, and a broadcast receiver 1530.

The short-range wireless communicator 1510 may include a Bluetooth communicator, a BLE communicator, an NFC communicator, a wireless local area network (WLAN) (Wi-Fi) communicator, a Zigbee communicator, an infrared data association (IrDA) communicator, a Wi-Fi direct (WFD) communicator, an UWB communicator, and an Ant+ communicator, but components included in the short-range wireless communicator 1510 are not limited thereto.

The mobile communicator 1520 transmits and receives a wireless signal to and from at least one of a base station, an external terminal, and a server, on a mobile communication network. Here, a wireless signal may include data having various formats according to transmission and reception of a voice call signal, a video telephone call signal, or a text/multimedia message.

The broadcast receiver 1530 receives a broadcast signal and/or broadcast related information from an external source, through a broadcast channel. The broadcast channel may include a satellite channel or a terrestrial broadcasting channel. In some embodiments, the device 1000 may not include the broadcast receiver 1530.

Also, the communicator 1500 may transmit and receive information required to use a service provided by at least one of the metadata management server 2000 and the service providing server 4000 to and from the metadata management server 2000, the service providing server 4000, and the cloud storage 3000.

The A/V input 1600 is used to receive an audio signal or a video signal, and may include a camera 1610 and a microphone 1620. The camera 1610 may obtain an image frame of a still image or a moving image via an image sensor in a video telephone mode or a photographing mode. An image captured via the image sensor may be processed by the controller 1300 or a separate image processor.

An image frame processed by the camera 1610 may be stored in the memory 1700 or transmitted to an external device through the communicator 1500. According to an exemplary embodiment of the device 1000, the device 1000 may include at least two cameras 1610.

The microphone 1620 receives an external sound signal and processes the external sound signal to electric voice data. For example, the microphone 1620 may receive a sound signal from an external device or a narrator. The microphone 1620 may use any one of various noise removing algorithms to remove noise generated while receiving the external sound signal.

The memory 1700 may store a program for processes and control of the controller 1300, and may store data input to or output from the device 1000.

The memory 1700 may include at least storage medium from among a flash memory, a hard disk, a multimedia card micro type memory, a card type memory (for example, a secure digital (SD) card or an extreme digital (XD) card), a random access memory (RAM), a static random access memory (SRAM), a read-only memory (ROM), an electrically erasable programmable read-only memory (EEPROM), a programmable read-only memory (PROM), a magnetic memory, a magnetic disk, and an optical disk.

Programs stored in the memory 1700 may be classified into a plurality of modules based on functions, and may be classified into a UI module 1710, a touch screen module 1720, and a notification module 1730.

The UI module 1710 may provide a specialized UI or GUI linked to the device 1000 according to applications. The touch screen module 1720 may detect a touch gesture of a user on a touch screen, and transmit information about the touch gesture to the controller 1300. The touch screen module 1720 according to an exemplary embodiment may recognize and analyze a touch code. The touch screen module 1720 may be configured as separate hardware including a controller.

Various sensors may be disposed inside or around the touch screen to detect a touch or a proximity touch on the touch screen. An example of a sensor for detecting a touch on the touch screen includes a tactile sensor. The tactile sensor detects a contact that can be felt by a person on a certain object. The tactile sensor may detect various types of information, such as a roughness of a contact surface, a rigidness of a contact object, and a temperature of a touch point.

Another example of a sensor for detecting a touch on the touch screen includes a proximity sensor.

The proximity sensor detects an existence of an object approaching or near a predetermined detection surface by using electromagnetic field force or infrared ray, without having to detect a mechanical contact. Examples of the proximity sensor include a transmission photoelectric sensor, a direct reflective type photoelectric sensor, a mirror reflective type photoelectric sensor, a high frequency oscillation proximity sensor, a capacitance type proximity sensor, a magnetic type proximity sensor, and an infrared proximity sensor. Examples of a touch gesture of a user include tap, touch and hold, double-tap, drag, panning, flick, drag-and-drop, and swipe.

The notification module 1730 may generate a signal for notifying an event occurrence in the device 1000. Examples of an event that occurs in the device 1000 include call signal reception, a message reception, key signal input, and schedule notification. The notification module 1730 may output a notification signal in a video signal format through the display 1210, in an audio signal format through the sound outputter 1220, or in a vibration signal format through the vibration motor 1230.

It will be appreciated that embodiments of the present disclosure may be realized in the form of hardware, software or a combination of hardware and software. It will also be appreciated that storage devices and storage media are embodiments of machine-readable storage that are suitable for storing a program or programs comprising instructions that, when executed, implement embodiments of the present disclosure. Accordingly, certain embodiments provide a program comprising code for implementing an apparatus, system, device, server, terminal and/or method according to any aspect, claim, embodiment or example disclosed herein, and a machine-readable storage storing such a program.

For example, certain exemplary embodiments may also be realized in a form of a computer-readable recording medium, such as a program module executed by a computer. A computer-readable recording medium may be an arbitrary available medium accessible by a computer, and examples thereof include all volatile and non-volatile media and separable and non-separable media. Further, examples of the computer-readable recording medium may include a computer storage medium and a communication medium. Examples of the computer storage medium include all volatile and non-volatile media and separable and non-separable media, which have been implemented by an arbitrary method or technology, for storing information such as computer-readable commands, data structures, program modules, and other data. The communication medium typically includes a computer-readable command, a data structure, a program module, other data of a modulated data signal, or another transmission mechanism, and an example thereof includes an arbitrary information transmission medium.

Also, herein, "unit" may be a hardware component such as a processor or a circuit and/or a software component executed by a hardware component such as a processor.

While one or more exemplary embodiments have been particularly shown and described, it will be understood by those of ordinary skill in the art that various changes in form and details may be made therein without departing from the scope of the present invention, as defined by the following claims. Hence, it will be understood that the exemplary embodiments described above do not limit the scope of the claims below. For example, each component described in a single type may be executed in a distributed manner, and components described distributed may also be executed in an integrated form.

## Claims

1. A server (2000) for searching for metadata corresponding to content, the server (2000) comprising:
a communication interface (2100) configured to receive metadata corresponding to content stored in at least one device of a user, from the at least one device, without receiving the content corresponding to the received metadata; and
a processor (2200) configured to store the received metadata in a remote storage (3000) that is separate from the server (2000) such that the content corresponding to the received metadata is not stored on the server (2000) or the remote storage (3000), the received metadata being searchable, and upon receiving a search request containing a search term for searching for metadata, to search the received metadata stored in the remote storage (3000) for metadata related to the search term,
wherein the processor (2200) is further configured to receive, from the at least one device, a signal indicating that a first content in the at least one device is deleted, obtain a first metadata corresponding to the deleted first content from the remote storage (3000), and add a supplementary data indicating that the first content is deleted to the obtained first metadata.

2. The server (2000) of claim 1,
wherein the remote storage (3000) is a storage operated separately from the server by one business operator of the server (2000) or another business operator, and
wherein the processor (2200) is configured to manage account information of the user, the account information being related to the remote storage (3000).

3. The server of (2000) claim 2, wherein the processor (2200) is configured to provide to the at least one device or another device an application received program interface (API) for using a service utilizing the received metadata stored in the remote storage (3000), and in response to a request received from at least one of the at least one device or the other device through the API to provide the service, provide the service to the at least one device or the other device that made the request.

4. The server (2000) of claim 2 or 3,
wherein the remote storage (3000) comprises one remote storage of a plurality of remote storages, and
wherein the processor (2200) is configured to identify the remote storage to which the user is subscribed based on user information of the user received from the at least one device, and determine the remote storage for storing the received metadata from a plurality of remote storages.

5. The server (2000) of claim 2, 3 or 4,
wherein the remote storage (3000) comprises one remote storage of a plurality of remote storages, and
wherein the processor (2200) is configured to determine the one remote storage from the plurality of remote storages to control to store the received metadata based on at least one of a type of the content, and a type of the at least one device that provided the received metadata.

6. The server (2000) of any preceding claim,
wherein the remote storage (3000) is provided by a networking server associated with a networking service, and
wherein the processor (2200) is configured to control to store the received metadata in the remote storage (3000) by using a service identification (ID) of the user related to the networking service.

7. The server (2000) of any preceding claim, wherein the processor (2200) is configured to match keywords related to the received metadata, to the received metadata, and control to store the keywords.

8. The server (2000) of claim 7, wherein the keywords are extracted from the content by interpreting the content.

9. The server (2000) of claim 7 or 8, wherein the keywords are used to search for the received metadata related to the search term, by being compared with the search term.

10. The server (2000) of any preceding claim, wherein the processor (2200) is configured to add supplementary data to the received metadata, and control to store the received metadata to which the supplementary data is added.

11. The server (2000) of any preceding claim,
wherein the communication interface (2100) is configured to receive, from another device different from the at least one device, a request related to the content,
wherein the processor (2200) is configured to obtain device information of a device storing the content requested by the other device by using the received metadata stored in the remote storage (3000), and provide the device information to the other device, and
wherein the device information is used by the other device to receive the requested content from the device storing the requested content.

12. The server (2000) of any preceding claim,
wherein the communication interface (2100) is configured to receive the content from the at least one device when a user input deleting the content is input to the at least one device, and the remote storage (3000) comprises one remote storage of a plurality of remote storages,
wherein the processor (2200) is configured to determine the remote storage to store the content from among the plurality of storages, and provide the content to the determined remote storage, and
wherein the content is stored in the determined remote storage.

13. The server (2000) of claim 12,
wherein the processor(2200) is configured to add a supplementary data indicating that the deleted content is backed up to the metadata corresponding to the deleted content.

14. A method of searching, by a server (2000), for metadata of content, the method comprising:
receiving metadata corresponding to content stored in at least one device of a first user from the at least one device, without receiving the content corresponding to the received metadata;
storing the received metadata in a remote storage (3000) that is separate from the server such that the content corresponding to the received metadata is not stored on the server (2000) or the remote storage (3000), the received metadata being searchable;
receiving from the at least one device a search request containing a search term for searching metadata;
searching the received metadata stored in the at least one remote storage (3000) for metadata related to the search term;
receive, from the at least one device, a signal indicating that a first content in the at least one device is deleted;
obtain a first metadata corresponding to the deleted first content from the remote storage (3000); and
add a supplementary data indicating that the first content is deleted to the obtained first metadata.

15. A computer-readable recording medium having recorded thereon a program for causing a computer included in a device to execute the method of claim 14.

## Patentansprüche

1. Server (2000) zum Suchen nach Metadaten, die Inhalt entsprechen, wobei der Server (2000) Folgendes umfasst:
eine Kommunikationsschnittstelle (2100), die konfiguriert ist, um Metadaten, die Inhalt entsprechen, der in zumindest einer Vorrichtung eines Benutzers gespeichert ist, von der zumindest einen Vorrichtung zu empfangen, ohne den Inhalt zu empfangen, der den empfangenen Metadaten entspricht; und
einen Prozessor (2200), der konfiguriert ist, um die empfangenen Metadaten in einem entfernten Speicher (3000) zu speichern, der getrennt von dem Server (2000) ist, sodass der Inhalt, der den empfangenen Metadaten entspricht, nicht auf dem Server (2000) oder dem entfernten Speicher (3000) gespeichert wird, wobei die empfangenen Metadaten durchsuchbar sind, und um beim Empfangen einer Suchanfrage, die einen Suchbegriff zum Suchen nach Metadaten enthält, die empfangenen Metadaten, die in dem entfernten Speicher (3000) gespeichert sind, nach Metadaten zu durchsuchen, die sich auf den Suchbegriff beziehen,
wobei der Prozessor (2200) ferner konfiguriert ist, um von der zumindest einen Vorrichtung ein Signal zu empfangen, das angibt, dass ein erster Inhalt in der zumindest einen Vorrichtung gelöscht ist, erste Metadaten zu erhalten, die dem gelöschten ersten Inhalt aus dem entfernten Speicher (3000) entsprechen, und ergänzende Daten zu den erhaltenen ersten Metadaten hinzuzufügen, die angeben, dass der erste Inhalt gelöscht ist.

2. Server (2000) nach Anspruch 1,
wobei der entfernte Speicher (3000) ein Speicher ist, der getrennt von dem Server durch einen Geschäftsbetreiber des Servers (2000) oder einen anderen Geschäftsbetreiber betrieben wird, und
wobei der Prozessor (2200) konfiguriert ist, um Kontoinformationen des Benutzers zu verwalten, wobei sich die Kontoinformationen auf den entfernten Speicher (3000) beziehen.

3. Server nach (2000) Anspruch 2, wobei der Prozessor (2200) konfiguriert ist, um der zumindest einen Vorrichtung oder einer anderen Vorrichtung eine anwendungsempfangene Programmschnittstelle (API) zum Verwenden eines Dienstes bereitzustellen, der die empfangenen Metadaten verwendet, die in dem entfernten Speicher (3000) gespeichert sind, und um als Reaktion auf eine Anfrage, die von zumindest einem von der zumindest einen Vorrichtung oder der anderen Vorrichtung durch die API empfangen wird, um den Dienst bereitzustellen, den Dienst an die zumindest eine Vorrichtung oder die andere Vorrichtung bereitzustellen, welche die Anfrage gestellt hat.

4. Server (2000) nach Anspruch 2 oder 3,
wobei der entfernte Speicher (3000) einen entfernten Speicher aus einer Vielzahl von entfernten Speichern umfasst, und
wobei der Prozessor (2200) konfiguriert ist, um den entfernten Speicher zu identifizieren, bei dem der Benutzer abonniert ist, basierend auf Benutzerinformationen des Benutzers, die von der zumindest einen Vorrichtung empfangen werden, und den entfernten Speicher zum Speichern der empfangenen Metadaten aus einer Vielzahl von entfernten Speichern zu bestimmen.

5. Server (2000) nach Anspruch 2, 3 oder 4,
wobei der entfernte Speicher (3000) einen entfernten Speicher aus einer Vielzahl von entfernten Speichern umfasst, und
wobei der Prozessor (2200) konfiguriert ist, um den einen entfernten Speicher aus der Vielzahl von entfernten Speichern zu bestimmen, um zu steuern, dass die empfangenen Metadaten basierend auf zumindest einem von einem Typ des Inhalts und einem Typ der zumindest einen Vorrichtung, welche die empfangenen Metadaten bereitgestellt hat, gespeichert werden.

6. Server (2000) nach einem vorhergehenden Anspruch,
wobei der entfernte Speicher (3000) durch einen Netzwerkserver bereitgestellt wird, der einem Netzwerkdienst zugeordnet ist, und
wobei der Prozessor (2200) konfiguriert ist, um zu steuern, die empfangenen Metadaten in dem entfernten Speicher (3000) zu speichern, indem eine Dienstidentifikation (ID) des Benutzers verwendet wird, die sich auf den Netzwerkdienst bezieht.

7. Server (2000) nach einem vorhergehenden Anspruch, wobei der Prozessor (2200) konfiguriert ist, um Schlüsselwörter, die sich auf die empfangenen Metadaten beziehen, mit den empfangenen Metadaten abzugleichen und zu steuern, um die Schlüsselwörter zu speichern.

8. Server (2000) nach Anspruch 7, wobei die Schlüsselwörter aus dem Inhalt durch Interpretieren des Inhalts extrahiert werden.

9. Server (2000) nach Anspruch 7 oder 8, wobei die Schlüsselwörter verwendet werden, um nach den empfangenen Metadaten zu suchen, die sich auf den Suchbegriff beziehen, indem sie mit dem Suchbegriff verglichen werden.

10. Server (2000) nach einem vorhergehenden Anspruch, wobei der Prozessor (2200) konfiguriert ist, um zusätzliche Daten zu den empfangenen Metadaten hinzuzufügen und zu steuern, um die empfangenen Metadaten zu speichern, zu denen die ergänzenden Daten hinzugefügt werden.

11. Server (2000) nach einem vorhergehenden Anspruch,
wobei die Kommunikationsschnittstelle (2100) konfiguriert ist, um von einer anderen Vorrichtung, die sich von der zumindest einen Vorrichtung unterscheidet, eine Anfrage zu empfangen, die sich auf den Inhalt bezieht,
wobei der Prozessor (2200) konfiguriert ist, um Vorrichtungsinformationen einer Vorrichtung zu erhalten, die den Inhalt speichert, der durch die andere Vorrichtung angefragt wird, indem die empfangenen Metadaten verwendet werden, die in dem entfernten Speicher (3000) gespeichert sind, und die Vorrichtungsinformationen der anderen Vorrichtung bereitzustellen, und
wobei die Vorrichtungsinformationen von der anderen Vorrichtung verwendet werden, um den angefragten Inhalt von der Vorrichtung zu empfangen, die den angefragten Inhalt speichert.

12. Server (2000) nach einem vorhergehenden Anspruch,
wobei die Kommunikationsschnittstelle (2100) konfiguriert ist, um den Inhalt von der zumindest einen Vorrichtung zu empfangen, wenn eine Benutzereingabe, die den Inhalt löscht, in die zumindest eine Vorrichtung eingegeben wird, und der entfernte Speicher (3000) einen entfernten Speicher aus einer Vielzahl von entfernten Speichern umfasst,
wobei der Prozessor (2200) konfiguriert ist, um den entfernten Speicher zu bestimmen, um den Inhalt aus der Vielzahl von Speichern zu speichern, und den Inhalt dem bestimmten entfernten Speicher bereitzustellen, und
wobei der Inhalt in dem bestimmten entfernten Speicher gespeichert wird.

13. Server (2000) nach Anspruch 12,
wobei der Prozessor (2200) konfiguriert ist, um zusätzliche Daten hinzuzufügen, die angeben, dass der gelöschte Inhalt in den Metadaten entsprechend dem gelöschten Inhalt gesichert ist.

14. Verfahren zum Suchen, durch einen Server (2000), nach Metadaten von Inhalt, wobei das Verfahren Folgendes umfasst:
Empfangen von Metadaten, die Inhalt entsprechen, der in zumindest einer Vorrichtung eines ersten Benutzers gespeichert ist, von der zumindest einen Vorrichtung, ohne den Inhalt zu empfangen, der den empfangenen Metadaten entspricht;
Speichern der empfangenen Metadaten in einem entfernten Speicher (3000), der von dem Server getrennt ist, sodass der Inhalt, der den empfangenen Metadaten entspricht, nicht auf dem Server (2000) oder dem entfernten Speicher (3000) gespeichert wird, wobei die empfangenen Metadaten durchsuchbar sind;
Empfangen, von der zumindest einen Vorrichtung, einer Suchanfrage, die einen Suchbegriff zum Durchsuchen von Metadaten enthält;
Durchsuchen der empfangenen Metadaten, die in dem zumindest einen entfernten Speicher (3000) gespeichert sind, nach Metadaten, die sich auf den Suchbegriff beziehen;
Empfangen, von der zumindest einen Vorrichtung, eines Signals, das angibt, dass ein erster Inhalt in der zumindest einen Vorrichtung gelöscht ist;
Erhalten von ersten Metadaten, die dem gelöschten ersten Inhalt entsprechen, von dem entfernten Speicher (3000); und
Hinzufügen von ergänzenden Daten, die angeben, dass der erste Inhalt gelöscht ist, zu den erhaltenen ersten Metadaten.

15. Computerlesbares Aufzeichnungsmedium, auf dem ein Programm gespeichert ist, um einen Computer, der in einer Vorrichtung enthalten ist, zu veranlassen, das Verfahren nach Anspruch 14 auszuführen.

## Revendications

1. Serveur (2000) de recherche de métadonnées correspondant à un contenu, le serveur (2000) comprenant :
une interface de communication (2100) configurée pour recevoir des métadonnées correspondant au contenu stocké dans au moins un dispositif d'un utilisateur, en provenance de l'au moins un dispositif, sans recevoir le contenu correspondant aux métadonnées reçues ; et
un processeur (2200) configuré pour stocker les métadonnées reçues dans un stockage distant (3000) qui est séparé du serveur (2000) de telle sorte que le contenu correspondant aux métadonnées reçues ne soit pas stocké sur le serveur (2000) ou le stockage distant (3000), les métadonnées reçues pouvant être recherchées, et lors de la réception d'une demande de recherche contenant un terme de recherche pour rechercher des métadonnées, pour rechercher dans les métadonnées reçues stockées dans le stockage distant (3000) des métadonnées liées au terme de recherche,
dans lequel le processeur (2200) est en outre configuré pour recevoir, en provenance de l'au moins un dispositif, un signal indiquant qu'un premier contenu dans l'au moins un dispositif est supprimé, obtenir une première métadonnée correspondant au premier contenu supprimé du stockage distant (3000), et ajouter une donnée supplémentaire indiquant que le premier contenu est supprimé aux premières métadonnées obtenues.

2. Serveur (2000) selon la revendication 1,
dans lequel le stockage distant (3000) est un stockage exploité séparément du serveur par un opérateur commercial du serveur (2000) ou un autre opérateur commercial, et
dans lequel le processeur (2200) est configuré pour gérer les informations de compte de l'utilisateur, les informations de compte étant liées au stockage distant (3000).

3. Serveur (2000) selon la revendication 2, dans lequel le processeur (2200) est configuré pour fournir à l'au moins un dispositif ou un autre dispositif une interface de programme d'application (API) reçue pour utiliser un service utilisant les métadonnées reçues stockées dans le stockage distant (3000), et en réponse à une demande reçue d'au moins l'un de l'au moins un dispositif ou de l'autre dispositif via l'API pour fournir le service, fournir le service à l'au moins un dispositif ou à l'autre dispositif qui a fait la demande.

4. Serveur (2000) selon la revendication 2 ou 3,
dans lequel le stockage distant (3000) comprend un stockage distant d'une pluralité de stockages distants, et
dans lequel le processeur (2200) est configuré pour identifier le stockage distant auquel l'utilisateur est abonné sur la base des informations utilisateur de l'utilisateur reçues de l'au moins un dispositif, et déterminer le stockage distant pour stocker les métadonnées reçues parmi une pluralité de stockages distants.

5. Serveur (2000) selon la revendication 2, 3 ou 4,
dans lequel le stockage distant (3000) comprend un stockage distant d'une pluralité de stockages distants, et
dans lequel le processeur (2200) est configuré pour déterminer ce stockage distant parmi la pluralité de stockages distants pour commander de stocker les métadonnées reçues sur la base d'au moins l'un d'un type de contenu, et d'un type de l'au moins un dispositif qui a fourni les métadonnées reçues.

6. Serveur (2000) selon l'une quelconque des revendications précédentes,
dans lequel le stockage distant (3000) est fourni par un serveur de réseau associé à un service de réseau, et
dans lequel le processeur (2200) est configuré pour commander de stocker les métadonnées reçues dans le stockage distant (3000) en utilisant une identification de service (ID) de l'utilisateur liée au service de réseau.

7. Serveur (2000) selon l'une quelconque des revendications précédentes, dans lequel le processeur (2200) est configuré pour faire correspondre des mots-clés liés aux métadonnées reçues, aux métadonnées reçues, et commander de stocker les mots-clés.

8. Serveur (2000) selon la revendication 7, dans lequel les mots-clés sont extraits du contenu par interprétation du contenu.

9. Serveur (2000) selon la revendication 7 ou 8, dans lequel les mots-clés sont utilisés pour rechercher les métadonnées reçues liées au terme de recherche, par comparaison avec le terme de recherche.

10. Serveur (2000) selon l'une quelconque des revendications précédentes, dans lequel le processeur (2200) est configuré pour ajouter des données supplémentaires aux métadonnées reçues, et commander de stocker les métadonnées reçues auxquelles les données supplémentaires sont ajoutées.

11. Serveur (2000) selon l'une quelconque des revendications précédentes,
dans lequel l'interface de communication (2100) est configurée pour recevoir, en provenance d'un autre dispositif différent de l'au moins un dispositif, une demande liée au contenu,
dans lequel le processeur (2200) est configuré pour obtenir des informations de dispositif d'un dispositif stockant le contenu demandé par l'autre dispositif en utilisant les métadonnées reçues stockées dans le stockage distant (3000), et fournir les informations de dispositif à l'autre dispositif, et
dans lequel les informations de dispositif sont utilisées par l'autre dispositif pour recevoir le contenu demandé en provenance du dispositif stockant le contenu demandé.

12. Serveur (2000) selon l'une quelconque des revendications précédentes,
dans lequel l'interface de communication (2100) est configurée pour recevoir le contenu en provenance de l'au moins un dispositif lorsqu'une entrée utilisateur supprimant le contenu est entrée dans l'au moins un dispositif, et le stockage distant (3000) comprend un stockage distant d'une pluralité de stockages distants,
dans lequel le processeur (2200) est configuré pour déterminer le stockage distant pour stocker le contenu parmi la pluralité de stockages, et fournir le contenu au stockage distant déterminé, et
dans lequel le contenu est stocké dans le stockage distant déterminé.

13. Serveur (2000) selon la revendication 12,
dans lequel le processeur (2200) est configuré pour ajouter une donnée supplémentaire indiquant que le contenu supprimé est sauvegardé dans les métadonnées correspondant au contenu supprimé.

14. Procédé de recherche, par un serveur (2000), de métadonnées de contenu, le procédé comprenant :
la réception de métadonnées correspondant au contenu stocké dans au moins un dispositif d'un premier utilisateur en provenance de l'au moins un dispositif, sans recevoir le contenu correspondant aux métadonnées reçues ;
le stockage des métadonnées reçues dans un stockage distant (3000) qui est séparé du serveur de telle sorte que le contenu correspondant aux métadonnées reçues ne soit pas stocké sur le serveur (2000) ou le stockage distant (3000), les métadonnées reçues pouvant être recherchées ;
la réception en provenance de l'au moins un dispositif une demande de recherche contenant un terme de recherche pour rechercher des métadonnées ;
la recherche dans les métadonnées reçues stockées dans l'au moins un stockage distant (3000) des métadonnées liées au terme de recherche ;
la réception, en provenance de l'au moins un dispositif, d'un signal indiquant qu'un premier contenu dans l'au moins un dispositif est supprimé ;
l'obtention d'une première métadonnée correspondant au premier contenu supprimé du stockage distant (3000) ; et
l'ajout d'une donnée supplémentaire indiquant que le premier contenu est supprimé aux premières métadonnées obtenues.

15. Support d'enregistrement lisible par ordinateur sur lequel est enregistré un programme pour amener un ordinateur inclus dans un dispositif à exécuter le procédé de la revendication 14.
